(19) Europäisches Patentamt
European Patent Office
Office européen des brevets

(11) EP 4 670 839 A2

(12) EUROPEAN PATENT APPLICATION

(43) Date of publication:
**31.12.2025 Bulletin 2026/01**

(21) Application number: **25175662.3**

(22) Date of filing: **12.05.2025**

(51) International Patent Classification (IPC):
***B01J 20/22*** *(2006.01)* ***B01D 53/02*** *(2006.01)*
***B01J 20/28*** *(2006.01)* ***B01J 20/32*** *(2006.01)*

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.06.2024 US 202463656916 P**
**18.10.2024 US 202418919785**

(71) Applicant: **GE Vernova Technology GmbH**
**5400 Baden (CH)**

(72) Inventors:
- **CAPITANO, Dana Alexis**
**Niskayuna, 12309 (US)**
- **CHAABAN, Maya**
**Niskayuna, 12309 (US)**
- **SHI, Xiaolei**
**Niskayuna, 12309 (US)**
- **O'BRIEN, Michael Joseph**
**Niskayuna, 12309 (US)**
- **ANTONIO, Alexandra**
**Niskayuna, 12309 (US)**
- **GOSWAMI, Subhadip**
**Niskayuna, 12309 (US)**
- **LIU, Jie Jerry**
**Niskayuna, 12309 (US)**
- **MOORE, David Roger**
**Niskayuna, 12309 (US)**

(74) Representative: **Openshaw & Co.**
**8 Castle Street**
**Farnham, Surrey GU9 7HR (GB)**

# (54) SORBENT SYSTEMS

(57) Described herein are solid sorbents including amines that are covalently bonded to a porous support. The solid sorbents exhibit high adsorption capacities for carbon dioxide. The solid sorbents exhibit desirable hydrothermal and cycling stability.

EP 4 670 839 A2

## Description

RELATED APPLICATIONS

This application claims priority to U.S. Provisional Application Serial No. 63/656,909, filed on June 6, 2024, and also claims priority to U.S. Provisional Application Serial No. 63/656,912, filed on June 6, 2024, and also claims priority to U.S. Provisional Application Serial No. 63/656,913, filed on June 6, 2024, and also claims priority to U.S. Provisional Application Serial No. 63/656,914, filed on June 6, 2024, and also claims priority to U.S. Provisional Application Serial No. 63/656,916, filed on June 6, 2024, the contents of which are hereby incorporated by reference in their entirety.

FIELD OF DISCLOSURE

Described herein are solid sorbents including amines that are covalently bonded to a porous support. The solid sorbents exhibit high adsorption capacities for carbon dioxide. The solid sorbents exhibit desirable hydrothermal and cycling stability.

BACKGROUND

Using solid sorbent materials for carbon capture offers a viable and superior techno-economic alternative to traditional liquid-amine based carbon dioxide ($CO_2$) capture processes. Solid adsorbents tend to have better adsorption capacity, lower regeneration energy requirements, reduced system complexity and environmental and safety risks with respect to active liquid amines.

There are two types of sorbent materials based on their underlying adsorption mechanisms. One type is physisorbent and the other type is chemisorbent. Physisorbents, such as activated carbon and zeolites, rely on van der Waals interactions to adsorb gaseous species such as $CO_2$ and water ($H_2O$). Chemisorbents, in particular, amine functionalized silica particles and metal-organic frameworks (MOF) etc., adsorb $CO_2$ through reversible chemical reactions and formation of ammonium carbamate, carbamic acid, ammonium carbonate and/or ammonium bicarbonate. Although physisorbent materials are relatively mature as compared to chemisorbent materials, one of the key drawbacks of physisorbent materials is their significantly reduced $CO_2$ adsorption capacity due to interference by other polar molecules such as $H_2O$, which are inevitably present in the atmosphere and flue gases. By contrast, as a result of chemical bonding, chemisorbent materials generally have superior selectivity of $CO_2$ adsorption over other interfering species such as nitrogen ($N_2$), oxygen ($O_2$), methane and carbon monoxide (CO), etc with respect to their physisorbent counterparts.

An ideal chemisorbent material should have good adsorption capacity for $CO_2$, fast adsorption kinetics, easy and fast desorption properties under practical desorption conditions and good thermal and hydrothermal stability.

In this disclosure, solid sorbents including amines that are covalently bonded to a porous support, with high adsorption capacities for carbon dioxide, are developed and demonstrated. The solid sorbents exhibit desirable hydrothermal and cycling stability.

BRIEF DESCRIPTION

In one aspect, a functionalized sorbent is provided. The functionalized sorbent includes a sorbent and at least one functionalization ligand covalently bonded to the sorbent, wherein the functionalization ligand includes a first amine-containing unit, and wherein the first amine-containing unit is formed by a process including amine alkylation between an alkyl halide and a second amine-containing unit.

In another aspect, a method of making a functionalized sorbent is provided. The functionalized sorbent includes a sorbent and at least one functionalization ligand covalently bonded to the sorbent, wherein the functionalization ligand includes a first amine-containing unit. The method includes forming a first mixture including the sorbent and a grafter including an alkoxysilane-containing unit and an alkyl halide-containing unit, reacting the first mixture in a silanization reaction to form a grafted sorbent including the grafter attached to the sorbent, forming a second mixture including the grafted sorbent and a second amine-containing unit, and reacting the second mixture in an amine alkylation reaction to form the functionalized sorbent.

In another aspect, a method of making a functionalized sorbent is provided. The functionalized sorbent includes a sorbent and at least one functionalization ligand covalently bonded to the sorbent, wherein the functionalization ligand includes a first amine-containing unit. The method includes forming a first mixture including a grafter including an alkoxysilane-containing unit and an alkyl halide-containing unit and a second amine-containing unit, reacting the first mixture in an amine alkylation reaction to form a functionalized grafter, forming a second mixture including the functionalized grafter and the sorbent, and reacting the second mixture in a silanization reaction to form the functionalized

sorbent.

In another aspect, a method of making a functionalized sorbent is provided. The functionalized sorbent includes a sorbent and at least one functionalization ligand covalently bonded to the sorbent, wherein the functionalization ligand includes a first amine-containing unit. The method includes forming a first mixture including the sorbent and a grafter including an alkoxysilane-containing unit and a third amine-containing unit, reacting the first mixture in a silanization reaction to form a grafted sorbent including the grafter attached to the sorbent, forming a second mixture including the grafted sorbent and a coupler including at least two alkyl halide-containing units, reacting the second mixture in an amine alkylation reaction to form a multiplier including at least one alkyl halide-containing unit, forming a third mixture including the multiplier and a second amine-containing unit, and reacting the third mixture in an amine alkylation reaction to form the functionalized sorbent.

In yet another aspect, a functionalized sorbent is provided. The functionalized sorbent includes a sorbent, at least one functionalization ligand covalently bonded to the sorbent, and at least one functionalization ligand not covalently bonded to the sorbent, wherein the functionalization ligand covalently bonded to the sorbent includes a first amine-containing unit, and wherein the functionalization ligand not covalently bonded to the sorbent includes a second amine-containing unit.

In yet another aspect, a system is provided. The system includes a substrate, at least one particle, at least one binder material, and at least one amine-containing unit, wherein the amine-containing unit is not covalently bonded to the at least one particle.

In still another aspect, a system is provided. The system includes a substrate, at least one binder material, and at least one sorbent, wherein the at least one sorbent includes a support and at least one amine-containing unit, wherein the at least one amine-containing unit is covalently bonded to the support.

In still another aspect, a system is provided. The system includes a substrate, at least one binder material, at least one sorbent, wherein the at least one sorbent includes a support, a first amine-containing unit covalently bonded to the support, and a second amine-containing unit not covalently bonded to the support, and optionally a cross-linking moiety, wherein the cross-linking moiety can react with the first amine-containing unit or the second amine-containing unit.

In yet another aspect, a method of making a sorbent composite is provided. The method includes forming a slurry including at least one particle, a solvent, at least one binder material that is soluble in the solvent, at least one amine-containing unit that is soluble in the solvent, applying the slurry onto a substrate, and removing the solvent to form the sorbent composite.

In yet another aspect, a system is provided. The system includes a substrate, at least one particle, at least one sorbent material, at least one binder material, and at least one amine-containing unit not covalently bonded to the at least one particle.

In still another aspect, a system is provided. The system includes a substrate, at least one binder material, a first sorbent material including a support and at least one amine-containing unit covalently bonded to the support, and a second sorbent material.

In yet another aspect, a contactor is provided. The contactor includes a contactor body having a first end with a fluid stream inlet to receive a fluid stream, a second end with a fluid stream outlet to release the fluid stream, and a fluid flow path extending between the first end and the second end that directs the fluid stream received by the fluid stream inlet to the fluid stream outlet for release therefrom, and a plurality of fluidically-isolated, thermally-connected, parallel fluid domains disposed in the contactor body between the first end and the second end orthogonal to the fluid flow path, wherein the plurality of fluidically-isolated, thermally-connected, parallel fluid domains include a plurality of sorbent-integrated fluid channels, each sorbent-integrated fluid channel defining a flow path for the fluid stream passing from the first end to the second end of the contactor body, and a plurality of heat transfer fluid channels thermally connected to the plurality of sorbent-integrated fluid channels in an alternating arrangement, each heat transfer fluid channel defining a flow path for a heat transfer fluid stream that flows orthogonally to the fluid flow path between the first end and the second end of the contactor body.

In still another aspect, a contactor is provided. The contactor includes a contactor body having a first end with a fluid stream inlet to receive a fluid stream, a second end with a fluid stream outlet to release the fluid stream, and a fluid flow path extending between the first end and the second end that directs the fluid stream received by the fluid stream inlet to the fluid stream outlet for release therefrom, and a plurality of fluidically-isolated, thermally-connected, parallel fluid domains disposed in the contactor body between the first end and the second end orthogonal to the fluid flow path, wherein the plurality of fluidically-isolated, thermally-connected, parallel fluid domains include a plurality of sorbent-integrated fluid channels, each sorbent-integrated fluid channel defining a flow path for the fluid stream passing from the first end to the second end of the contactor body, wherein each of the plurality of sorbent-integrated fluid channels includes a first walled surface that is configured to receive the fluid stream and a second walled surface opposing the first walled surface that is configured to release a $CO_2$ depleted fluid stream during an adsorption mode of operation, and wherein the second walled surface of each of the plurality of sorbent-integrated fluid channels is configured to release a $CO_2$ rich fluid stream during a desorption mode of operation, and a plurality of heat transfer fluid channels thermally connected to the plurality of sorbent-integrated fluid channels in an alternating arrangement, each heat transfer fluid channel defining a flow path for a heat transfer fluid stream that flows orthogonally to the fluid flow path between the first end and the second end of the contactor body.

In yet another aspect, a system is provided. The system includes a first contactor including a first contactor body having a first end with a fluid stream inlet to receive a fluid stream, a second end with a fluid stream outlet to release the fluid stream, and a fluid flow path extending between the first end and the second end that directs the fluid stream received by the fluid stream inlet to the fluid stream outlet for release therefrom, and a plurality of fluidically-isolated, thermally-connected, parallel fluid domains disposed in the first contactor body between the first end and the second end orthogonal to the fluid flow path, wherein the plurality of fluidically-isolated, thermally-connected, parallel fluid domains include a plurality of sorbent-integrated fluid channels, each sorbent-integrated fluid channel defining a flow path for the fluid stream passing from the first end to the second end of the first contactor body, and a plurality of heat transfer fluid channels thermally connected to the plurality of sorbent-integrated fluid channels in an alternating arrangement, each heat transfer fluid channel defining a flow path for a heat transfer fluid stream that flows orthogonally to the fluid flow path between the first end and the second end of the first contactor body, and a second contactor to operate in conjunction with the first contactor, the second contactor including a second contactor body having a first end with a fluid stream inlet to receive the fluid stream, a second end with a fluid stream outlet to release the fluid stream, and a fluid flow path extending between the first end and the second end that directs the fluid stream received by the fluid stream inlet to the fluid stream outlet for release therefrom, and a plurality of fluidically-isolated, thermally-connected, parallel fluid domains disposed in the second contactor body between the first end and the second end orthogonal to the fluid flow path, wherein the plurality of fluidically-isolated, thermally-connected, parallel fluid domains include a plurality of sorbent-integrated fluid channels, each sorbent-integrated fluid channel defining a flow path for the fluid stream passing from the first end to the second end of the second contactor body, and a plurality of heat transfer fluid channels thermally connected to the plurality of sorbent-integrated fluid channels in an alternating arrangement, each heat transfer fluid channel defining a flow path for the heat transfer fluid stream that flows orthogonally to the fluid flow path between the first end and the second end of the second contactor body.

## BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:

Figure 1 depicts an exemplary percentage of $CO_2$ desorbed at different desorption temperatures for GE320-184A in accordance with the present disclosure;

Figure 2 depicts an exemplary percentage of $CO_2$ desorbed at different desorption temperatures for GE321-184B in accordance with the present disclosure;

Figure 3 depicts an exemplary synthetic scheme of grafting $\gamma$-$Al_2O_3$ with (p-chloromethyl)phenyltrimethoxysilane (PCPT) and forming a sorbent comprising a covalently bonded amine through amine alkylation using an amine and an alkyl halide (-Cl) in accordance with the present disclosure;

Figure 4 depicts exemplary TGA traces of $\gamma$-$Al_2O_3$, PCPT grafted $\gamma$-$Al_2O_3$ and GE351-SG2-39 in accordance with the present disclosure;

Figure 5 depicts an exemplary percentage of $CO_2$ desorbed at different desorption temperatures for GE351-SG2-39 in accordance with the present disclosure;

Figure 6 depicts exemplary TGA traces of MCM-41 mesoporous silica, PCPT grafted MCM-41 and GE386-SG2-41A in accordance with the present disclosure;

Figure 7 depicts exemplary TGA traces of $\gamma$-$Al_2O_3$, PCPT grafted $\gamma$-$Al_2O_3$ and GE382-SG2-40A in accordance with the present disclosure;

Figure 8 depicts an exemplary percentage of $CO_2$ desorbed at different desorption temperatures for GE382-SG2-40A in accordance with the present disclosure;

Figure 9 depicts exemplary TGA traces of $\gamma$-$Al_2O_3$, PCPT grafted $\gamma$-$Al_2O_3$ and GE383-SG2-40B in accordance with the present disclosure;

Figure 10 depicts an exemplary percentage of $CO_2$ desorbed at different desorption temperatures for GE383-SG2-40B in accordance with the present disclosure;

Figure 11 depicts exemplary TGA traces of $\gamma$-$Al_2O_3$, PCPT grafted $\gamma$-$Al_2O_3$ and GE396-SG2-42 in accordance with the present disclosure;

Figure 12 depicts an exemplary percentage of $CO_2$ desorbed at different desorption temperatures for GE396-SG2-42 in accordance with the present disclosure;

Figure 13 depicts exemplary TGA traces of $\gamma$-$Al_2O_3$, PCPT grafted $\gamma$-$Al_2O_3$, PCPT grafted $\gamma$-$Al_2O_3$ having covalently bonded spermine (GE351-SG2-39) and GE409 comprising GE351-SG2-39 with additional impregnated PEHA in accordance with the present disclosure;

Figure 14 depicts an exemplary percentage of $CO_2$ desorbed at different desorption temperatures for GE409-A3169D in accordance with the present disclosure;

Figure 15 depicts exemplary TGA traces of $\gamma$-$Al_2O_3$, PCPT grafted $\gamma$-$Al_2O_3$, PCPT grafted $\gamma$-$Al_2O_3$ having covalently bonded spermine (GE351-A3183) and GE426-A47B comprising GE351-A3183 with additional impregnated PAA in accordance with the present disclosure;

Figure 16 depicts an exemplary percentage of $CO_2$ desorbed at different desorption temperatures for GE426-A47B in accordance with the present disclosure;

Figure 17 depicts exemplary TGA traces of $\gamma$-$Al_2O_3$, PCPT grafted $\gamma$-$Al_2O_3$, PCPT grafted $\gamma$-$Al_2O_3$ having covalently bonded spermine (GE351-SG2-39) and GE411-A3170B comprising GE351-SG2-39 with additional impregnated PEHA and crosslinking agent (1,5-hexadiene diepoxide) in accordance with the present disclosure;

Figure 18 depicts an exemplary percentage of $CO_2$ desorbed at different desorption temperatures for GE411-A3170B in accordance with the present disclosure;

Figure 19 depicts exemplary TGA traces of $\gamma$-$Al_2O_3$, PCPT grafted $\gamma$-$Al_2O_3$, PCPT grafted $\gamma$-$Al_2O_3$ having covalently bonded spermine (GE351-SG2-39) and GE417-A3176B comprising GE351-SG2-39 with additional impregnated PEHA and crosslinking agent (1,5-hexadiene diepoxide) in accordance with the present disclosure;

Figure 20 depicts an exemplary percentage of $CO_2$ desorbed at different desorption temperatures for GE417-A3176B in accordance with the present disclosure;

Figure 21 depicts an exemplary 1H NMR analysis that was performed at small scale in toluene-d8 to confirm the reaction in accordance with the present disclosure. Spectra shown at T=0 upon addition of spermine to PCPT and also after 21hours reacting at 85°C;

Figure 22 depicts exemplary TGA traces of $\gamma$-$Al_2O_3$, PCPT grafted $\gamma$-$Al_2O_3$ having covalently bonded spermine (GE351-SG2-39) and PCPT grafted $\gamma$-$Al_2O_3$ having covalently bonded spermine prepared by reverse reaction (GE432) in accordance with the present disclosure;

Figure 23 depicts an exemplary percentage of $CO_2$ desorbed at different desorption temperatures for GE432 in accordance with the present disclosure;

Figure 24 depicts an exemplary synthetic scheme of GE424-SG2-56 in accordance with the present disclosure;

Figure 25 depicts exemplary TGA traces for SG2-52, SG2-54 and GE424-SG2-56 in accordance with the present disclosure;

Figure 26 depicts an exemplary synthetic scheme of GE454-SG2-68 in accordance with the present disclosure;

Figure 27 depicts exemplary TGA traces for SG2-52, SG2-63B and GE454-SG2-68 in accordance with the present disclosure;

Figure 28 depicts an exemplary synthesis scheme for multi-armed amine grafted support using an asymmetric coupler, e.g., dichlorourethane, in accordance with the present disclosure;

Figure 29 depicts an exemplary TGA analysis of dichlorourethane grafted KIT-6 mesoporous silica in accordance with the present disclosure;

Figure 30 depicts an exemplary TGA analysis of PEHA grafting onto dichlorourethane grafted KIT-6 mesoporous silica in accordance with the present disclosure;

Figure 31 depicts an exemplary percentage of $CO_2$ desorbed at different desorption temperatures for GE435-MD6348 in accordance with the present disclosure;

Figure 32 depicts an exemplary TGA analysis of dichlorourethane grafted MCM-41 mesoporous silica in accordance with the present disclosure;

Figure 33 depicts an exemplary TGA analysis of PEHA grafting onto dichlorourethane grafted MCM-41 mesoporous silica in accordance with the present disclosure;

Figure 34 depicts an exemplary percentage of $CO_2$ desorbed at different desorption temperatures for GE389-A3161B in accordance with the present disclosure;

Figure 35 depicts an exemplary percentage of $CO_2$ desorbed at different desorption temperatures for GE400-A3165C in accordance with the present disclosure;

Figure 36 depicts an exemplary percentage of $CO_2$ desorbed at different desorption temperatures for GE405-A3168C in accordance with the present disclosure;

Figure 37 depicts an exemplary percentage of $CO_2$ desorbed at different desorption temperatures for sorbent composite GE321-composite in accordance with the present disclosure;

Figure 38 depicts an exemplary percentage of $CO_2$ desorbed at different desorption temperatures for sorbent composite GE409-composite in accordance with the present disclosure;

Figure 39 depicts an exemplary percentage of $CO_2$ desorbed at different desorption temperatures for sorbent composite GE417-composite in accordance with the present disclosure;

Figure 40 depicts an exemplary percentage of $CO_2$ desorbed at different desorption temperatures for sorbent composite GE423-composite in accordance with the present disclosure;

Figure 41 depicts an exemplary percentage of $CO_2$ desorbed at different desorption temperatures for sorbent composite GE437-composite in accordance with the present disclosure;

Figure 42 is a schematic view of a first cycle in an exemplary $CO_2$ capture system for recovering $CO_2$ from an inlet fluid, in accordance with one embodiment of the present disclosure;

Figure 43 is a schematic view of a second cycle in the exemplary $CO_2$ capture system of Figure 42, in accordance with one embodiment of the present disclosure;

Figure 44 is a schematic view of a first cycle in another embodiment of a $CO_2$ capture system for recovering $CO_2$ from an inlet fluid, in accordance with one embodiment of the present disclosure;

Figure 45 is a schematic view of a second cycle in the $CO_2$ capture system of Figure 44, in accordance with one embodiment of the present disclosure; and

Figure 46 is an exemplary method flow chart in accordance with the present disclosure.

Repeat use of reference characters in the present specification and drawings is intended to represent the same or analogous features or elements of the embodiment shown.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

DETAILED DESCRIPTION

Sorbents.

Described herein are solid sorbents including amines that are covalently bonded to a porous support. The solid sorbents exhibit high adsorption capacities for carbon dioxide. The solid sorbents exhibit desirable hydrothermal and cycling stability.

Generally, solid sorbents in accordance with the present disclosure may be used with any suitable compositions, systems, and methods known in the art that facilitate the solid sorbents. The solid sorbents are not limited to any particular embodiment disclosed herein. Exemplary compositions, systems, and methods are found in PCT/US2023/082729, the contents of which are incorporated by reference herein.

Generally, the solid sorbents may include any functionalization ligand known in the art that facilitate the solid sorbents.

In some embodiments, the functionalization ligand includes at least one amine selected from the group consisting of primary amines, secondary amines, tertiary amines, and combinations thereof. In some embodiments, the functionalization ligand includes at least one primary amine or at least one secondary amine.

In some embodiments, the functionalization ligand includes a polyamine. In some embodiments, the functionalization ligand includes at least one amine selected from the group consisting of monoamines, diamines, triamines, tetra-amines, penta-amines, hexa-amines, polyamines, and combinations thereof.

Generally, the polyamine may include any number of amine groups known in the art suitable to facilitate the solid sorbent. In some embodiments, the polyamine includes a total number of amine groups in a range of from about 2 to about 10. In some embodiments, the polyamine includes a total number of amine groups in a range of from about 2 to about 6. In some embodiments, the polyamine includes a total number of amine groups in a range of from about 2 to about 4. In some embodiments, the polyamine includes 2, 3, 4, 5, 6, 7, 8, 9, or 10 amine groups.

In some embodiments, the functionalization ligand is selected from the group consisting of polyamine ligands including at least one cyclic unit, aminosilicone ligands, amine ligands, monoamine ligands, diamine ligands, triamine ligands, tetra-amine ligands, penta-amine ligands, hexa-amine ligands, polyamine ligands, alkylamine ligands, and amino-alcohol ligands. Exemplary ligands include, but are not limited to, ethylenediamine, N-methylethylenediamine, N-ethylethylenediamine, N,N-dimethylethylenediamine, N,N-diethylethylenediamine, di(N-methyl)ethylene diamine, N-isopropylethylenediamine, N,N-dimethyl-N-methylethylene diamine, di(N,N-dimethyl)ethylene diamine, N,N-diisopropylethylene diamine, 2,2-dimethyl-1,3-diaminopropane, 1,3-diaminopentane, diethylenetriamine, N-(2-aminoethyl)-1,3-propanediamine, bis(3-aminopropyl)amine, N-(3-aminopropyl)-1,4-diaminobutane (spermidine), triethylenetetramine, N,N'-bis(2-aminoethyl)-1,3-propanediamine, 1,2-bis(3-aminopropylamino)ethane, N,N'-bis(3-aminopropyl)-1,3-propanediamine, N,N'-bis(3-aminopropyl)-1,4-diaminobutane (spermine), tetraethylenepentamine, and/or combinations thereof.

In some embodiments, the functionalization ligand is selected from the group consisting of spermine, pentaethylenehexamine (PEHA), polyethyleneimine (PEI) of any molecular weight, epoxybutane modified spermine, epoxybutane-modified PEHA, epoxybutane-modified PEI, and combinations thereof.

In some embodiments, the functionalized sorbent has a class-II, or class-III or class-IV isotherm for pure water. In some embodiments, the functionalized sorbent has a class-II isotherm for pure water. In some embodiments, the functionalized sorbent has a class-III isotherm for pure water. In some embodiments, the functionalized sorbent has a class-IV isotherm for pure water.

In some embodiments, the functionalized sorbent has a water uptake at high relative humidity of average < 1 $H_2O$ molecule per amine. In some embodiments, the high relative humidity refers to relative humidity of 50% and above at ambient temperatures such as, but not limited to, -20°C to 40°C. In some embodiments, the high relative humidity refers to relative humidity of 60% and above at ambient temperatures such as, but not limited to, -20°C to 40°C. In some embodiments, the high relative humidity refers to relative humidity of 70% and above at ambient temperatures such as, but not limited to -20°C to 40°C. In some embodiments, the high relative humidity refers to relative humidity of 60% and above at temperature ranging from 40°C to 60°C. In some embodiments, the high relative humidity refers to relative humidity of 70% and above at temperature ranging from 40°C to 60°C. In some embodiments, the high relative humidity refers to relative humidity of 70% and above at temperature of 60°C and higher.

Generally, the functionalized sorbent may have any suitable desorption temperature known in the art that facilitates the functionalized sorbent. The desorption temperature refers to a temperature required for regenerating

sorbent materials or sorbent composites to at least partially desorb $CO_2$ and $H_2O$. Each desorption module or sub-module including the functionalized sorbent may have a uniform temperature profile, a gradient temperature profile, or a discrete temperature profile.

In some embodiments, the functionalized sorbent has a desorption temperature in a range of from about 40 °C to about 250 °C. In some embodiments, the functionalized sorbent has a desorption temperature in a range of from about 120 °C to about 250 °C. In some embodiments, the functionalized sorbent has a desorption temperature in a range of from about 40 °C to about 120 °C. In some embodiments, the functionalized sorbent has a desorption temperature in a range of from about 40 °C to about 100 °C. In some embodiments, the functionalized sorbent has a desorption temperature in a range of from about 40 °C to about 90 °C.

In some embodiments, the functionalized sorbent has a desorption temperature of at least about 40 °C, at least about 50 °C, at least about 60 °C, at least about 70 °C, at least about 80 °C, at least about 90 °C, at least about 100 °C, at least about 110 °C, at least about 120 °C, at least about 130 °C, at least about 140 °C, at least about 150 °C, at least about 160 °C, at least about 170 °C, at least about 180 °C, at least about 190 °C, at least about 200 °C, at least about 210 °C, at least about 220 °C, at least about 230 °C, or at least about 240 °C. In some embodiments, the functionalized sorbent has a desorption temperature of at most about 50 °C, at most about 60 °C, at most about 70 °C, at most about 80 °C, at most about 90 °C, at most about 100 °C, at most about 110 °C, at most about 120 °C, at most about 130 °C, at most about 140 °C, at most about 150 °C, at most about 160 °C, at most about 170 °C, at most about 180 °C, at most about 190 °C, at most about 200 °C, at most about 210 °C, at most about 220 °C, at most about 230 °C, at most about 240 °C, or at most about 250 °C.

Generally, the functionalized sorbent may have any suitable adsorption temperature known in the art that facilitates the functionalized sorbent. The adsorption temperature refers to a temperature required for sorbent materials or sorbent composites to at least partially adsorb $CO_2$ and $H_2O$. The adsorption temperature refers to the temperature of sorbent materials, temperature of gas streams, temperature of adsorption modules or sub-modules, or combinations thereof. Each adsorption module or sub-module including the functionalized sorbent may have a uniform temperature profile, a gradient temperature profile, or a discrete temperature profile.

In some embodiments, the functionalized sorbent has an adsorption temperature in a range of from about -40 °C to about 150 °C. In some embodiments, the functionalized sorbent has an adsorption temperature in a range of from about 0 °C to about 80 °C. In some embodiments, the functionalized sorbent has an adsorption temperature in a range of from about 0 °C to about 70 °C. In some embodiments, the functionalized sorbent has an adsorption temperature in a range of from about 0 °C to about 40 °C.

In some embodiments, the functionalized sorbent has a desorption temperature in a range of from about 40 °C to about 120 °C. In some embodiments, the functionalized sorbent has a desorption temperature in a range of from about 40 °C to about 100 °C. In some embodiments, the functionalized sorbent has a desorption temperature in a range of from about 40 °C to about 90 °C.

In some embodiments, the functionalized sorbent has an adsorption temperature of at least about -40 °C, at least about -30 °C, at least about -20 °C, at least about -10 °C, at least about 0 °C, at least about 10 °C, at least about 20 °C, at least about 30 °C, at least about 40 °C, at least about 50 °C, at least about 60 °C, at least about 70 °C, at least about 80 °C, at least about 90 °C, at least about 100 °C, at least about 110 °C, at least about 120 °C, at least about 130 °C, or at least about 140 °C.

In some embodiments, the functionalized sorbent has an adsorption temperature of at most about -30 °C, at most about -20 °C, at most about - 10 °C, at most about 0 °C, at most about 10 °C, at most about 20 °C, at most about 30 °C, at most about 40 °C, at most about 50 °C, at most about 60 °C, at most about 70 °C, at most about 80 °C, at most about 90 °C, at most about 100 °C, at most about 110 °C, at most about 120 °C, at most about 130 °C, at most about 140 °C, or at most about 150 °C.

Generally, the sorbent may be any suitable sorbent known in the art that facilitates the functionalized sorbent described herein. In some embodiments, the sorbent is selected from the group consisting of coordination framework compounds, metal-organic framework (MOF) compounds, porous coordination polymers (PCPs), covalent organic framework (COF) compounds, zeolitic imidazolate framework (ZIF) compounds, crystalline porous materials, crystalline open frameworks, reticular chemistry, silica particles, zeolites, silico-alumino-phosphates (SAPOs), alumino-phosphates (AlPOs), polyaromatic frameworks (PAFs), hydrogen bonded framework (HOF) compounds, porous organic salts, activated carbons, molecular organic solids, and combinations thereof.

As used herein, MOF compounds are a class of compounds including metal ions or clusters coordinated to organic ligands to form one-, two-, or three-dimensional structures. The metal ions or clusters act as joints and are bound by multidirectional organic ligands, which act as linkers in a network structure. MOF compounds have a modular nature that allows for synthetic tunability, which affords fine chemical and structural control. Properties such as porosity, stability, particle morphology, and conductivity can be tailored for specific applications.

In many embodiments, the sorbent is a MOF compound including a MOF metal or metal-containing cluster and a MOF linker.

In some embodiments, the MOF metal may be any suitable MOF metal known in the art that facilitates the solid

sorbent described herein. In other embodiments, the MOF metal is a metal selected from the group consisting of alkali metals, alkaline earth metals, transition metals, Ca, Mn, Cr, Fe, Co, Ni, Cu, Zn, ions thereof, hydrates thereof, salts thereof, halides thereof, fluorides thereof, chlorides thereof, bromides thereof, iodides thereof, nitrates thereof, acetates thereof, sulfates thereof, phosphates thereof, carbonates thereof, oxides thereof, formates thereof, carboxylates thereof, and combinations thereof. In some embodiments, the MOF metal includes Mg.

In some embodiments, the MOF metal-containing cluster may be any suitable MOF metal-containing cluster known in the art that facilitates the solid sorbent described herein. In some embodiments, the MOF metal-containing cluster includes an MOF metal node and a linker strut, with the MOF metal and the linker each defined as described herein. In other embodiments, the MOF metal-containing cluster includes an MOF metal-oxy cluster.

In some embodiments, the MOF linker may be any suitable MOF linker known in the art that facilitates the solid sorbent described herein. Generally, the geometry and connectivity of a linker contribute to the structure of the resulting MOF compound. Adjustments of linker geometry, length, ratio, and functional-group can tune the size, shape, and internal surface property of a MOF compound for a targeted application.

In some embodiments, the MOF linker is a linker selected from the group consisting of polytopic linkers, ditopic linkers, tritopic linkers, tetratopic linkers, pentatopic linkers, hexatopic linkers, heptatopic linkers, octatopic linkers, mixed linkers, desymmetrized linker, metallo linkers, N-heterocyclic linkers, and combinations thereof.

In some embodiments, the MOF linker is a linker selected from the group consisting of polytopic linkers, 4,4'-dihydroxy-[1,1'-biphenyl]-3,3'-dicarboxylic acid ($H_4$dobpdc), 4,4'-dioxidobiphenyl-3,3'-dicarboxylate (dobpdc$^{4-}$), 4,4"-dioxido-[1,1':4',1"-terphenyl]-3,3"-dicarboxylate (dotpdc$^{4-}$), 2,5-dioxidobenzene-1,4-dicarboxylate (dobdc$^{4-}$), 4,6-Dihydroxyisophthalic acid (m-dobdc$^{4-}$), 3,3'-dioxido-biphenyl-4,4'-dicarboxylate (para-carboxylate-dobpdc$^{4-}$), 4,4'-[oxalylbis(imino)]bis(2-hydroxybenzoic acid) ($H_4$ODA), 4,4'-[1,4-phenylenebis-(carbonylimino)]bis(2-hydroxybenzoic acid) ($H_4$TDA), 4,4'-Dihydroxyazobenzene-3,3'-dicarboxylic acid ($H_4$OSA), protonated, partially and fully deprotonated forms thereof, and combinations thereof. As another example, in some embodiments, the MOF linker is a linker selected from the group consisting of dicarboxylates (e.g., terephthalic acid), tricarboxylates (e.g., 1,3,5-benzentricarboxylic acid), azolates, tetrazolates, and combinations thereof.

As another example, in some embodiments, the MOF linker is a dicarboxylic acid linker selected from the group consisting of 1,4-butanedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxylic acid, heptadecanedicarboxylic acid, acetylenedicarboxylic acid, 1,2-benzenedicarboxylic acid, 2,3-pyridinedicarboxylic acid, pyridine-2,3-dicarboxylic acid, 1,3-butadiene-1,4-dicarboxylic acid, 1,4-benzenedicarboxylic acid, p-benzenedicarboxylic acid, imidazole-2,4-dicarboxylic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminophenylmethane-3,3'-dicarboxylic acid, quinoline-3,4-dicarboxylic acid, 7-chloro-4-hydroxyquinoline-2,8-dicarboxylic acid, diimidedicarboxylic acid, pyridine-2,6-dicarboxylic acid, 2-methylimidazole-4,5-dicarboxylic acid, thiophene-3,4-dicarboxylic acid, 2-isopropylimidazole-4,5-dicarboxylic acid, tetrahydropyran-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octanedicarboxylic acid, pentane-3,3-carboxylic acid, 4,4'-diamino-1,1'-diphenyl-3,3'-dicarboxylic acid, 4,4'-diaminodiphenyl-3,3'-dicarboxylic acid, benzidine-3,3'-dicarboxylic acid, 1,4-bis-(phenylamino)benzene-2,5-dicarboxylic acid, 1,1'-dinaphthyl-8,8'-dicarboxylic acid, 7-chloro-8-methylquinoline-2,3-dicarboxylic acid, 1-anilinoanthoursaquinone-2,4'-dicarboxylic acid, polytetrahydrofuran-250-dicarboxylic acid, 1,4-bis(carboxymethyl)piperazine-2,3-dicarboxylic acid, 7-chloroquinoline-3,8-dicarboxylic acid, 1-(4-carboxy)phenyl-3-(4-chloro) phenylpyrazoline-4,5-dicarboxylic acid, 1,4,5,6,7,7,-hexachloro-5-norbornene-2,3-dicarboxylic acid, phenylindanedicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2-benzoylbenzene-1,3-dicarboxylic acid, 1,3-dibenzyl-2-oxoimidazolidine-4,5-cisdicarboxylic acid, 2,2'-biquinoline-4,4'-dicarboxylic acid, pyridine-3,4-dicarboxylic acid, 3,6,9-trioxaundecanedicarboxylic acid, o-hydroxybenzophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, 4,4'-diaminodiphenyletherdiimidedicarboxylic acid, 4,4'-diaminodiphenylmethanediimidedicarboxylic acid, 4,4'-diaminodiphenylsulfonediimidedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenedicarboxylic acid, 8-sulfo-2,3-naphthalenedicarboxylic acid, anthoursacene-2,3-dicarboxylic acid, 2'-3'-diphenyl-p-terphenyl-4,4"-dicarboxylic acid, diphenylether-4,4'-dicarboxylic acid, imidazole-4,5-dicarboxylic acid, 4(1H)-oxothiochoursomene-2,8-dicarboxylic acid, 5-t-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarboxylic acid, tetradecanedicarboxylic acid, 1,7-heptanedicarboxylic acid, 5-hydroxy-1,3-benzenedicarboxylic acid, pyrazine-2,3-dicarboxylic acid, furan-2,5-dicarboxylic acid, 1-nonene-6,9-dicarboxylic acid, eicosenedicarboxylic acid, 4,4'-dihydroxydiphenylmethane-3,3'-dicarboxylic acid, 1-amino-4-methyl-9,10-dioxo-9,10-dihydroanthoursacene-2,3-dicarboxylic acid, 2,5-pyridinedicarboxylic acid, cyclohexene-2,3-dicarboxylic acid, 2,9-dichlorofluorubin-4,11-dicarboxylic acid, 7-chloro-3-methylquinoline-6,8-dicarboxylic acid, 2,4-dichlorobenzophenone-2',5'-dicarboxylic acid, 1,3-benzenedicarboxylic acid, 2,6-pyridinedicarboxylic acid, 1-methylpyrrole-3,4-dicarboxylic acid, 1-benzyl-1H-pyrrole-3,4-dicarboxylic acid, anthoursaquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid, 1,14-tetradecanedicarboxylic acid, 5,6-dehydronorbornane-2,3-dicarboxylic acid, 5-ethyl-2,3-pyridinedicarboxylic acid, and combinations thereof.

As another example, in some embodiments, the MOF linker is a tricarboxylic acid linker selected from the group consisting of 2-hydroxy-1,2,3-propanetricarboxylic acid, 7-chloro-2,3,8-quinolinetricarboxylic acid, 1,2,4-benzenetricarboxylic acid, 1,2,4-butanetricarboxylic acid, 2-phosphono-1,2,4-butanetricarboxylic acid, 1,3,5-benzenetricarboxylic acid, 1-hydroxy-1,2,3-propanetricarboxylic acid, 4,5-dihydro-4,5-dioxo-1H-pyrrolo[2,3-F]quinoline-2,7,9-tricarboxylic acid, 5-acetyl-3-amino-6-methylbenzene-1,2,4-tricarboxylic acid, 3-amino-5-benzoyl-6-methylbenzene-1,2,4-tricarboxylic acid, 1,2,3-propanetricarboxylic acid, aurinetricarboxylic acid, and combinations thereof.

As another example, in some embodiments, the MOF linker is a tetracarboxylic acid linker selected from the group consisting of 1,1-dioxide-perylo[1,12-BCD]thiophene-3,4,9,10-tetracarboxylic acid, perylenetetracarboxylic acids, perylene-3,4,9,10-tetracarboxylic acid, perylene-1,12-sulfone-3,4,9,10-tetracarboxylic acid, butanetetracarboxylic acids, 1,2,3,4-butanetetracarboxylic acid, meso-1,2,3,4-butanetetracarboxylic acid, decane-2,4,6,8-tetracarboxylic acid, 1,4,7,10,13,16-hexaoxacyclooctadecane-2,3,11,12-tetracarboxylic acid, 1,2,4,5-benzenetetracarboxylic acid, 1,2,11,12-dodecanetetracarboxylic acid, 1,2,5,6-hexanetetracarboxylic acid, 1,2,7,8-octanetetracarboxylic acid, 1,4,5,8-naphthalenetetracarboxylic acid, 1,2,9,10-decanetetracarboxylic acid, benzophenonetetracarboxylic acid, 3,3',4,4'-benzophenonetetracarboxylic acid, tetrahydrofurantetracarboxylic acid, cyclopentanetetracarboxylic acids, cyclopentane-1,2,3,4-tetracarboxylic acid, and combinations thereof.

In the exemplary embodiment, the MOF linker is 4,4'-dihydroxy-[1,1'-biphenyl]-3,3'-dicarboxylic acid ($H_4$dobpdc) and/or 4,4'-dioxidobiphenyl-3,3'-dicarboxylate (dobpdc$^{4-}$). In some embodiments, dobpdc includes 4,4'-dihydroxy-[1,1'-biphenyl]-3,3'-dicarboxylic acid, its mono-carboxylate form, its di-carboxylate form, its mono-phenoxide form, its di-phenoxide form, and combinations thereof.

In some embodiments, the MOF linker is one or more of the following linkers:

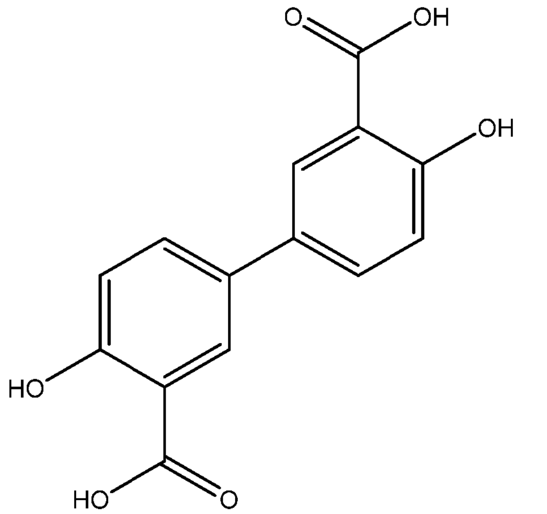

4,4'-dihydroxy-[1,1'-biphenyl]-3,3'-dicarboxylic acid;

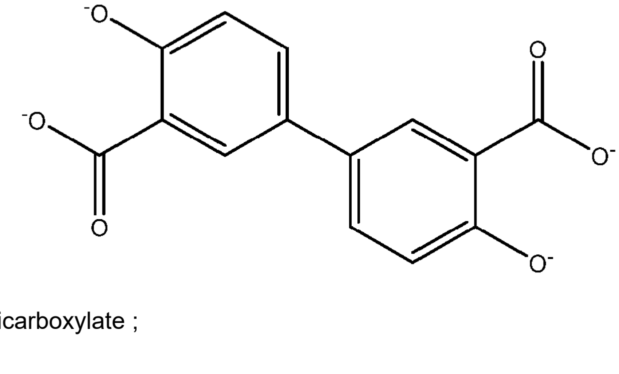

4,4'-dioxidobiphenyl-3,3'-dicarboxylate ;

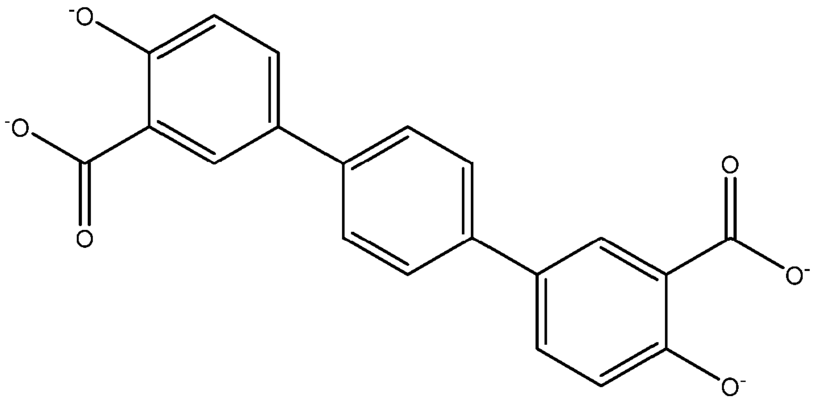

4,4"-dioxido-[1,1':4',1"-terphenyl]-3,3"-dicarboxylate ;

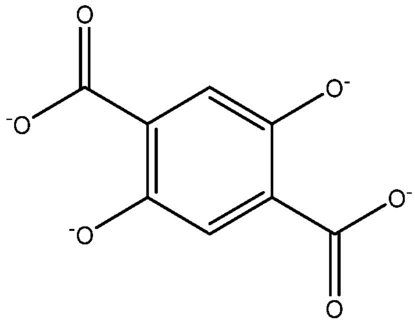

2,5-dioxidobenzene-1,4-dicarboxylate ;

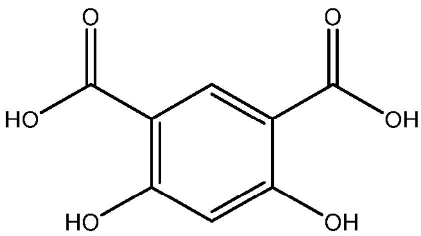

4,6-Dihydroxyisophthalic acid ;

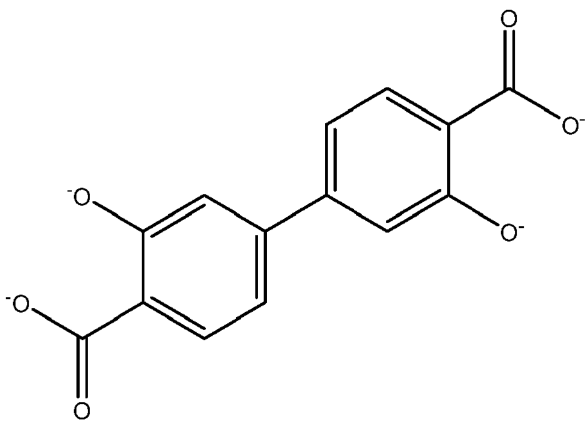

3,3'-dioxido-biphenyl-4,4'-dicarboxylate ;

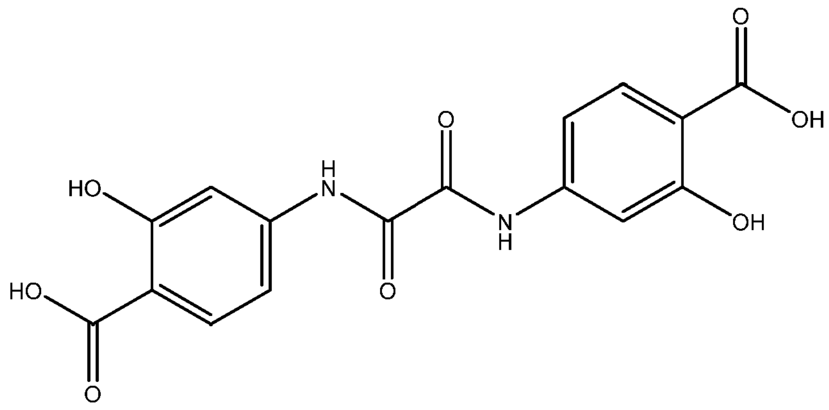

4,4'-[oxalylbis(imino)]bis(2-hydroxybenzoic acid) ;

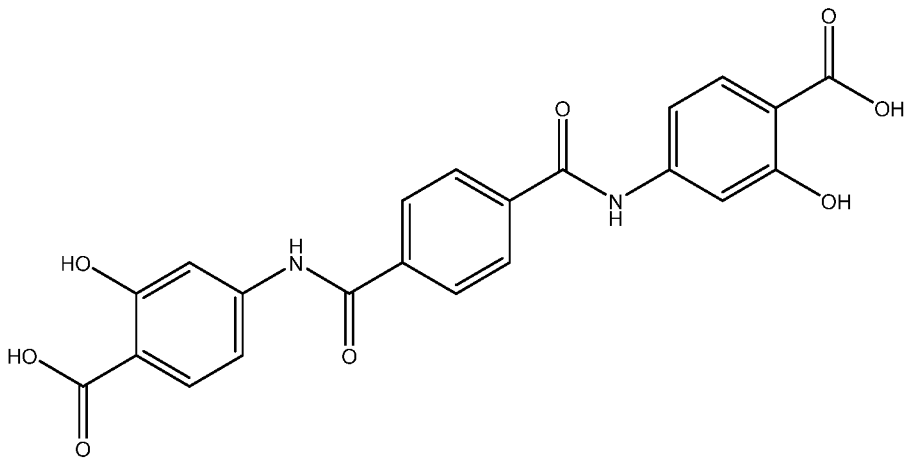

4,4'-[1,4-phenylenebis-(carbonylimino)]bis(2-hydroxybenzoic acid) ;
and/or

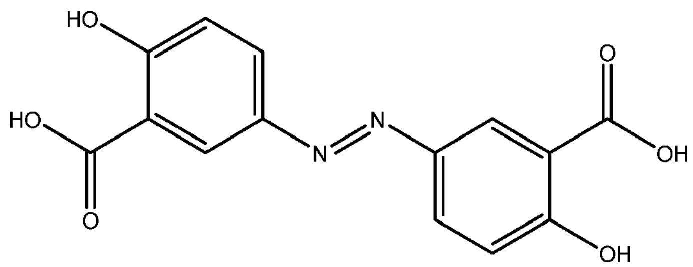

4,4'-Dihydroxyazobenzene-3,3'-dicarboxylic acid

In some embodiments, the MOF compound is a MOF compound of the MOF-74 family. In some embodiments, the MOF compound is a MOF compound of the MOF-274 family. In some embodiments, the MOF compound is a MOF compound of the MOF-303 family. In some embodiments, the MOF compound is $Mg_2$(dobpdc).

In some embodiments, the solid sorbent does not include a MOF.

In some embodiments, the solid sorbent includes a non-MOF sorbent. In some embodiments, the solid sorbent includes a mesoporous oxide support. In some embodiments, the solid sorbent includes a mesoporous oxide support selected from the group consisting of silica, alumina, zirconia, and combinations thereof. In some embodiments, the solid sorbent includes a porous polymer.

In some embodiments, the solid sorbent does not include a non-MOF.

Generally, amine-functionalized MOFs tend to have better $CO_2$ capacity, expressed as amount of $CO_2$ captured per weight of sorbent, such as $gCO_2$/gSorbent or $mmolCO_2$/gSorbent, under low $CO_2$ concentrations, such as DAC relevant conditions, compared to other sorbents. Non-MOFs like mesoporous silicas and aluminas have potentially lower

costs and may have improved kinetics compared to other sorbents.

Amines can be physically impregnated, which imparts low stability, or chemically grafted, which provides more stability but lower $CO_2$ capacity based on which amine is chosen and the grafting method.

One or more of reduced particle sizes of sorbents, increased aspect ratios of sorbents, and aqueous sorbent synthesis leads to sorbents having significantly improved $CO_2$ uptake kinetics.

Generally, the sorbent may include any suitable particle size known in the art that facilitates the functionalized sorbent described herein. In some embodiments, the sorbent has an average primary particle length ≤ 50 μm. In some embodiments, the sorbent has an average primary particle length ≤ 30 μm. In some embodiments, the sorbent has an average primary particle length ≤ 10 μm. In some embodiments, the sorbent has an average primary particle length ≤ 5 μm. In some embodiments, the sorbent has an average particle length ≤ 3 μm, ≤ 2.9 μm, ≤ 2.8 μm, ≤ 2.7 μm, ≤ 2.6 μm, ≤ 2.5 μm, ≤ 2.4 μm, ≤ 2.3 μm, ≤ 2.2 μm, ≤ 2.1 μm, ≤ 2 μm, ≤ 1.9 μm, ≤ 1.8 μm, ≤ 1.7 μm, ≤ 1.6 μm, ≤ 1.5 μm, ≤ 1.4 μm, ≤ 1.3 μm, ≤ 1.2 μm, ≤ 1.1 μm, ≤ 1 μm, ≤ 0.9 μm, ≤ 0.8 μm, < 0.7 μm, < 0.6 μm, ≤ 0.5 μm, ≤ 0.4 μm, ≤ 0.3 μm, ≤ 0.2 μm, or ≤ 0.1 μm. In some embodiments, the sorbent has an average primary particle length ≥ 5 μm. In some embodiments, the sorbent has an average primary particle length ≥ 3 μm, ≥ 2.9 μm, ≥ 2.8 μm, ≥ 2.7 μm, ≥ 2.6 μm, ≥ 2.5 μm, ≥ 2.4 μm, ≥ 2.3 μm, ≥ 2.2 μm, ≥ 2.1 μm, ≥ 2 μm, ≥ 1.9 μm, ≥ 1.8 μm, ≥ 1.7 μm, ≥ 1.6 μm, ≥ 1.5 μm, ≥ 1.4 μm, ≥ 1.3 μm, ≥ 1.2 μm, ≥ 1.1 μm, ≥ 1 μm, ≥ 0.9 μm, ≥ 0.8 μm, ≥ 0.7 μm, ≥ 0.6 μm, ≥ 0.5 μm, ≥ 0.4 μm, ≥ 0.3 μm, ≥ 0.2 μm, or ≥ 0.1 μm.

Generally, the sorbent may include any suitable aspect ratio known in the art that facilitates the functionalized sorbent described herein. As used herein, the aspect ratio is the ratio between the average width of the sorbent and the average length of the sorbent. In some embodiments, the sorbent has an aspect ratio in a range of from about 0 to about 1. In some embodiments, the sorbent has an aspect ratio ≤ 1, ≤ 0.9, ≤ 0.8, ≤ 0.7, ≤ 0.6, ≤ 0.5, ≤ 0.4, ≤ 0.3, ≤ 0.2, or ≤ 0.1. In some embodiments, the sorbent has an aspect ratio ≥ 0.9, ≥ 0.8, ≥ 0.7, ≥ 0.6, ≥ 0.5, ≥ 0.4, ≥ 0.3, ≥ 0.2, ≥ 0.1, or ≥ 0.

In some embodiments, the particle sizes are individual particle sizes. Individual particle size measurements may be made according to any suitable means known in the art, such as by measuring particle sizes in an SEM image.

In some embodiments, the particle size measurements are average particle size measurements. Average particle size measurements may be made according to any suitable means known in the art, such as by analyzing particle size distribution information.

Generally, the particle size of the sorbent may be controlled, altered, or reduced according to any suitable technique known in the art that facilitates the functionalized sorbent described herein. In some embodiments, suitable techniques for controlling, altering, or reducing particle size include mechanical grinding (e.g., mortar and pestling), using a microfluidizer, dry milling, wet milling, chemical size reduction (e.g., incorporation of a crystal growth inhibitor), acoustic cavitation, hydrodynamic cavitation, and combinations thereof.

Generally, the sorbent may be in any suitable form known in the art that facilitates the functionalized sorbent described herein. In some embodiments, the sorbent is in a form selected from the group consisting of powders, pellets, composites, composites mixed with binders, films, coatings, aqueous coatings, packed beds, columns, monoliths, and combinations thereof. Additional substrates may be present. For example, sorbent composites may be coated on a flat substrate, structured substrate, or monolith substrate or support. Substrates may also have additional functionalities, such as a heating plate, heat exchange, or heat conductor, etc.

Sorbent system.

The exemplary embodiments described herein include a sorbent system. Generally, the sorbent system may be any suitable sorbent system known in the art that facilitates the functionalized sorbent described herein. In some embodiments, the sorbent system includes the functionalized sorbent and optionally a binder. In some embodiments, the sorbent system is disposed on a polymer film.

In some embodiments, the sorbent system is in a form of a coating formulation. The coating formulation may be in a form of a solution, an emulsion, a slurry (i.e. soluble binder, insoluble sorbent), or a combination thereof. When in the form of a solution, the binder is water-soluble. When in the form of an emulsion, the binder is not water-soluble. The coating formulation may include a binder and optionally at least one additive. In some embodiments, at least one additive is selected from the group consisting of silica particles, clay particles, alumina particles, and combinations thereof. In some embodiments, the binder includes at least one water-based binder selected from the group consisting of water-based epoxies, water-based acrylic resins, water soluble polymers, and combinations thereof.

In some embodiments, the sorbent system includes at least one concentrator. The concentrator may be any suitable concentrator known in the art that facilitates the functionalized sorbent described herein. The concentrator may be a passive concentrator or an active concentrator.

In some embodiments, the sorbent system includes at least one component configured to drive fluid flow. The component configured to drive fluid flow may be any suitable component configured to drive fluid flow known in the art that facilitates the functionalized sorbent described herein. In some embodiments, the component configured to drive fluid flow is selected from the group consisting of pumps, fans, and combinations thereof.

In some embodiments, the sorbent system includes at least one component configured to alter temperature. The component configured to alter temperature may be any suitable component configured to alter temperature known in the art that facilitates the functionalized sorbent described herein. In some embodiments, the component configured to alter temperature is selected from the group consisting of heaters, coolers, and combinations thereof.

In some embodiments, the sorbent system includes at least one component configured to convey fluid. The component configured to convey fluid may be any suitable component configured to convey fluid known in the art that facilitates the functionalized sorbent described herein. In some embodiments, the component configured to convey fluid is selected from the group consisting of pipes, perforated pipes, plastic perforated pipes, polymeric perforated pipes, metal perforated pipes, composite perforated pipes, and combinations thereof.

In some embodiments, the sorbent system includes at least one contactor. In some embodiments, the sorbent system includes more than one contactor. In some embodiments, the sorbent system includes a contactor configured for an adsorption cycle and a contactor configured for a desorption cycle. The contactor may be any suitable contactor known in the art that facilitates the functionalized sorbent described herein. In some embodiments, the sorbent is integrated into at least one channel of the contactor. In some embodiments, the contactor is fabricated from the sorbent itself. In some embodiments, the contactor is coated with the sorbent system. In some embodiments, the contactor includes more than one sorbent coating, with at least one sorbent coating being the sorbent system.

In some embodiments, the sorbent system includes a frame. The frame may be any suitable frame known in the art that facilitates the functionalized sorbent described herein. The frame may be included in the contactor or between two contactors. The frame may be composed of one piece or composed of more than one piece. In some embodiments, the frame is an air frame. In some embodiments, the frame is in a configuration selected from the group consisting of polygonal configurations, rectangular configurations, square configurations, circular configurations, asymmetrical configurations, and combinations thereof. In some embodiments, the sorbent system is mounted on the frame.

$CO_2$ capture system.

As will be described in detail hereinafter, various embodiments of a preferable $CO_2$ capture system for use with the sorbent are presented. The preferable $CO_2$ capture system includes at least one contactor for the extraction of $CO_2$ from a surrounding fluid, such as ambient air, using sorbents and thermally-enhanced recovery efforts. The disclosed system solves the problem of high $CO_2$ extraction costs by integrating a sorbent with a contactor and by utilizing an air concentrator. The high surface area sorbent-integrated contactor, low pressure drop across the contactor, and air concentrator are key contributors to the system performance. The sorbent may be any sorbent in accordance with the present disclosure. The contactor features a design that contains at least two fluidically-isolated, independent, massively parallel fluid domains: a) sorbent-integrated fluid domain that provides for flow of ambient air and $CO_2$ adsorption from the ambient air flow; b) a second fluid domain to promote desorption via transfer of sensible heat to the sorbent-integrated fluid domain; and c) an optional third fluid domain that can be sorbent integrated or used to promote desorption.

Referring now to Figures 42 and 43, illustrated is an exemplary embodiment of a $CO_2$ capture system 100 that functions to capture $CO_2$. The $CO_2$ capture system 100 is configured to remove $CO_2$ from a surrounding environment, such as ambient air or other suitable source of air, or other fluid, that comprises $CO_2$, utilizing a hot gas stream (e.g., steam) to assist with desorption. The $CO_2$ capture system 100 of Figures 42 and 43 incorporates two contactors (described presently) to provide for continuous operation. Figure 42 illustrates the $CO_2$ capture system 100 during operation in a first cycle 102 (Cycle A - described presently). Figure 43 illustrates the $CO_2$ capture system 100, during operation in a second cycle 104 (Cycle B - described presently).

With the growing global energy demand that requires the combustion of fossil fuels, it is becoming increasingly important to cheaply and effectively remove $CO_2$ from ambient air. The $CO_2$ capture system 100 is configured to remove $CO_2$ from an inlet gas stream 106, such as ambient air. The $CO_2$ capture system 100 disclosed herein solves the problem of high $CO_2$ extraction costs by integrating a sorbent with at least one, and preferably two, contactors (described presently) and utilizing an air concentrator to increase air flow through contactors. A high surface area, sorbent-integrated contactor and low pressure drop across the contactor are key contributors to the performance of the $CO_2$ capture system 100. The $CO_2$ capture system 100 provides effective thermal integration by utilizing a hot gas stream 108 during desorption, such as low pressure steam, to assist in desorption via transfer of heat to a fluidically-isolated, sorbent-integrated, fluid domain (described presently) defined within the $CO_2$ capture system 100.

As illustrated in Figures 42 and 43, the $CO_2$ capture system 100 comprises a first fluid stream, and more particularly, the inlet gas stream 106 that enters the $CO_2$ capture system 100 at an inlet 110 of a respective contactor during the adsorption phase of operation. In some embodiments, the inlet gas 106 includes ambient air including $CO_2$. For example, in some embodiments, the inlet gas 106 includes direct air capture, such as an inlet gas having approximately 412 ppmv $CO_2$. In an exemplary embodiment, the inlet gas 106 includes post-combustion gas capture, such as a post combustion gas having approximately 0.001%-15% $CO_2$. In another exemplary embodiment, the inlet gas 106 includes post-combustion gas capture, such as a post combustion gas having approximately 6-15% $CO_2$. In some embodiments,

the inlet gas stream 106 may be cooled first in order to help reduce the volume of the gas, and therefore, to reduce the size and weight of the $CO_2$ capture system 100. During operation in the first cycle 102 (Figure 42), the inlet gas stream 106 is fed into a first contactor 112, operating in an adsorption mode. During operation in a second cycle 104 (Figure 43), the inlet gas stream 106 is fed into a second contactor 114, operating in an adsorption mode. In some embodiments, the $CO_2$ capture system 100 may comprise any number (n) of contactors capable of operation in alternating adsorption and desorption modes. The number of included contactors will depend on the concentration of $CO_2$ in the inlet gas stream 106, the volume of the inlet gas stream 106, the desire for continuous operation, and the like. Accordingly, embodiments including a first contactor and at least one additional contactor are anticipated. Embodiments illustrating the inclusion of a first and second contactor 112, 114 are illustrated herein for ease in description.

In the illustrated embodiment of Figures 42 and 43, a concentrator 116 enables passive and/or active capture of ambient $CO_2$ from the wind. As the inlet gas stream 106 is fed into the contactor 112 or 114 operating in an adsorption mode, it passes through the concentrator 116 prior to reaching the respective contactor 112, 114. The concentrator 116 increases static wind pressure above pressure drop across the contactor 112, 114, thus relying on wind pressure to move air through the contactor 112, 114. Each of the first and second contactors 112, 114, includes a gate 118 that allows the inlet gas stream 106 to pass through the respective contactor 112, 114 during the $CO_2$ adsorption cycle and blocks air flow through the respective contactor 112, 114 when operating in a $CO_2$ desorption cycle. Figure 42 illustrates gate 118 disposed proximate to the contactor 112 in an open position to allow for the passage therethrough of the inlet gas 106, and gate 118 disposed proximate to the contactor 114 in a closed position to block the inflow of the inlet gas 106. Figure 43 illustrates gate 118 disposed proximate to the contactor 112 in a closed position to block the inflow of the inlet gas 106, and gate 118 disposed proximate to the contactor 114 in an open position to allow for the passage therethrough of the inlet gas 106.

Referring briefly to Figures 44 and 45, illustrated is a second preferred embodiment, of a $CO_2$ capture system 200. Unless otherwise indicated, the second preferred embodiment of the $CO_2$ capture system 200 includes the same components identified during the description of the first preferred embodiment shown in Figures 42 and 43. In contrast to the first preferred embodiment, the second preferred embodiment does not include a concentrator for the input of the inlet gas 106. Instead, the second preferred embodiment the inlet gas stream 106 passes directly into the respective contactor 112, 114, such as by the use of a fan 172 to drive air through the contactor 112, 114. It is noted in the second preferred embodiment, a similar type gate structure 118 is associated therewith the inlet 110 of the respective contactor 112, 114, and operable to permit or block the input of the inlet gas 106.

Returning again to Figures 42 and 43, the concentrator 116 may be a passive airflow concentrator, meaning no added energy is required for the concentration of the inlet gas stream 106, or an active airflow concentrator, meaning energy is provided to aid with air movement. In the illustrated embodiment of Figures 42 and 43, the airflow concentrator 116 is a passive cone-shaped concentrator 120 that does not require the use of additional energy to concentrate the airflow toward the respective contactor 112, 114. The cone-shaped concentrator 120 may be generally shaped to include a diverging-converging geometry and disposed upstream and proximate to the inlet 110 of the respective contactor 112, 114. The cone-shaped concentrator 120 increases wind speed and corresponding wind static pressure at the concentrator outlet. More specifically, air flow such as inlet gas stream 106, is accelerated from a larger opening at an inlet 122 of the concentrator 116 to a smaller opening at an outlet 124 of the concentrator 116. As the inlet gas stream 106 enters the diverging portion, and as the area decreases in the diverging portion as it moves toward the converging portion proximate to the contactor 112, 114, the inlet gas stream 106 velocity increases. Since wind pressure $\Delta P$ is a strong function of wind speed, $\Delta P = 0.5 \times \square \times V^2$ (□ is air density and V is air velocity), flow acceleration increases wind pressure. The dimensions of the concentrator 116 are designed to create wind pressure at the inlet 110 of the contactor 112, 114 that exceeds pressure drop across the contactor 112, 114. The pressure difference between the wind pressure and contactor pressure drop forces air flow through the respective contactor 112, 114 operating in an adsorption mode. A portion of air collected at the inlet 110 of the contactor 112, 114 flows through the contactor. As previously eluded to, in some embodiments, a passive airflow concentrator, such as a fan powered by the movement of the air may be utilized, upstream or downstream of the contactor.

The hot gas stream 108 originates from a source of heated fluid, such as, but not limited to, a boiler, a gas turbine or internal combustion engine that can provide exhaust gases after natural gas, or some other combustive fuel, is ignited in the engine. Heat from the hot gas stream 108 assists in desorption via transfer of heat to a fluidically-isolated, sorbent-integrated, fluid domain (described presently) defined within the $CO_2$ capture system 100. In some embodiments, the hot gas stream 108, is created by producing steam in a boiler 144. In the illustrated embodiment, energy input to the boiler 144, as illustrated by arrowed line 126, is provided at by one or more of a renewable source of energy, stored energy or turbine energy, such as by a combined cycle gas turbine. Steam may be produced at atmospheric or slightly higher pressure. The hot gas stream 108 is input into the respective contactor 112, 114 at a second fluid stream inlet 127. As steam condenses in a second fluid domain (described presently) of the respective contactor 112, 114, heat released during the condensation is transferred to a first fluid domain containing a sorbent (described presently) of the respective contactor 112, 114. Increasing steam pressure allows for an increase in a steam condensation temperature and thus temperature at which

sorbent is regenerated. Alternatively, the hot gas stream 108 may be hot air produced by combustion of a fuel (e.g., natural gas) by utilizing an electric heater, or the like. Again, the $CO_2$ capture system 100 is configured to remove the $CO_2$ from the inlet gas stream 106, assisted during the desorption mode by the heat from the hot gas stream 108.

As previously stated, the $CO_2$ capture system 100 includes two contactors, and more particularly the first contactor 112 and the second contactor 114 to provide alternating adsorption and desorption cycles (Figure 42 - Cycle A and Figure 43 - Cycle B) for continuous $CO_2$ removal from the inlet gas stream 106. More particularly, in the described embodiment, during Cycle A, as best illustrated in Figure 42, the first contactor 112 serves as an adsorption unit and the second contactor 114 serves as a desorption unit with the inlet gas stream 106 directed through the first contactor 112 and the hot gas stream 108 directed through the second contactor 114. In some embodiments, the contactor acting in the desorption mode of operation experiences a medium-temperature (110°C) desorption cycle to release $CO_2$ and regenerate a sorbent (described presently) within the contactor. As stated, for continuous $CO_2$ removal, in some embodiments, when the first contactor 112, and more particularly, when the adsorption materials are spent within the first contactor 112, and thus approaches its full sorbent capacity, the air flow, and more particularly, the inlet gas stream 106, through the first contactor 112 is shut down via the gate 118 and directed to the second contactor 114. The first contactor 112 then acts as a desorption unit, as best illustrated in Figure 43, and the second contactor 114 acts as an absorption unit. The cyclical operation of the first contactor 112 and second contactor 114 in adsorption and desorption states of operation or modes is continuous.

During operation, the inlet gas stream 106 passes through the gate 118 in the concentrator 116 that allows air to pass through the respective contactor 112, 114 operating in the $CO_2$ adsorption mode and blocks air flow during a $CO_2$ desorption cycle. The inlet gas stream 106 exits the adsorption contactor 112, 114 as a $CO_2$ depleted stream 128, and can be vented via an outlet (not shown) to atmosphere or further treated or recycled for energy recovery.

During Cycle A operation, as shown in Figure 42, when the first contactor 112 is acting as an adsorption unit and the second contactor 114 is acting as a desorption unit, the $CO_2$ depleted stream 128 is vented from the first contactor 112 and a $CO_2$ stream 132 is removed from the second contactor 114 using a vacuum pump 134, and continues on for further treatment, such as compression, sequestration, and the like. The $CO_2$ stream 132 may contain moisture adsorbed by the sorbent along with $CO_2$ during the adsorption cycle. This moisture will be released from the sorbent during the desorption cycle. In some embodiments, the $CO_2$ stream 132 is cooled via an air cooler 136 that may result in condensation of excess moisture 138 that is vented away from the outlet of the $CO_2$ stream 132. At least a portion of the excess moisture 138 may be used as system makeup water and is recirculated via a pump 140 for production of steam in the boiler 144.

During Cycle B operation, as shown in Figure 43, when the first contactor 112 is acting as a desorption unit and the second contactor 114 is acting as an adsorption unit, the $CO_2$ depleted stream 128 is vented from the second contactor 114 and a $CO_2$ stream 132 is removed from the first contactor 112 using the vacuum pump 134, and continues on for further treatment, such as compression, sequestration, and the like. Similar to the previous, the $CO_2$ stream 132 may include moisture and is cooled via the air cooler 136, and excess moisture 138 vented away from the outlet of the $CO_2$ stream 132.

Referring again briefly to Figures 44 and 45, as previously described with regard to Figures 42 and 43, the $CO_2$ stream 132 upon exiting the respective contactor 112, 114, may include further treatment, such as compression, sequestration, and the like. Accordingly, as illustrated in Figures 44 and 45, the second preferred embodiment includes a compressor 202, thus providing for heat integration via compression from the $CO_2$ stream 132 back to the boiler 144, as shown at 204, to aid with steam production. It should be understood that the inclusion of a compressor, such as compressor 202, in the embodiment of Figures 42 and 43 is anticipated by this disclosure.

During operation the hot gas stream 108, and more particularly low-pressure steam, passes through the second contactor 114 (Cycle A) or the first contactor 112 (Cycle B) to assist in desorption via the transfer of heat to a first fluidically-isolated, sorbent- integrated, fluid domain in the respective contactor (described presently), thus providing the heat required for $CO_2$ desorption and sorbent regeneration. The hot gas stream 108 is recirculated through the $CO_2$ capture system 100 via a pump 140. In some embodiments, the excess moisture removed from the $CO_2$ stream 132 by the air cooler 136, may be routed to the hot gas stream 108.

As previously stated, each of the contactors 112, 114 features two fluidically- isolated fluid domains. Alternatively, a unique, multi-furcating design can be employed to increase contactor surface area. The multi-furcating design includes two fluidically- isolated, independent, massively parallel fluid domains. The contactors 112, 114 with multi-furcating design may be formed using the unique capabilities of additive manufacturing to enable the fabrication of, and sorbent integration into, structures with larger surface/weight ratios and much lower pressure drops than conventional contactors. The parallel fluid domains of each of the contactors 112, 114 include: (i) a first fluidically-isolated, sorbent-integrated, fluid domain 150; and (ii) a second fluidically-isolated fluid domain 152, each defining a fluid flow path, or channel, for the flow of a fluid. The term "fluidically-isolated" as used herein is intended to note isolation of the fluid through each domain from fluid in another domain, so as to prevent mixing of the fluids or direct contact therebetween. During an adsorption stage of operation, the first fluidically-isolated, sorbent-integrated, fluid domain 150 provides for flow of a first fluid stream 154, and more particularly the inlet gas stream 106, and $CO_2$ adsorption. The second fluidically-isolated fluid domain 152 provides for flow of a second fluid stream 156, and more particularly the hot gas stream 108, to assist in desorption, during a desorption

stage of operation, via transfer of heat to the first fluidically-isolated, sorbent-integrated, fluid domain 150.

The first fluid domain 150 defines therein a sorbent-integrated channel, or flow path, 158 for flow of the first fluid stream 154, and more particularly the inlet gas stream 106, and $CO_2$ adsorption. The second fluid domain 152 defines a second fluid stream channel, or flow path, and more particularly, a warming channel 160 to promote desorption via transfer of sensible heat to the sorbent-integrated channel 158, and more particularly, the first fluid domain 150. Also stated, the second fluidically-isolated fluid domain 152 is in thermal communication with the first fluidically-isolated, sorbent-integrated, fluid domain 150.

During operation, the first fluid stream 154 is first directed through the sorbent-integrated channel 158, and more particularly, the first fluid domain 150. Here, $CO_2$ is adsorbed into a sorbent material 162 until the sorbent material 162 reaches a target $CO_2$ adsorption capacity (e.g., a full $CO_2$ adsorption capacity) or for a pre-determined adsorption time (e.g., 30 mins). Suitable sorbent materials 162 are described in detail above. In some embodiments, the sorbent-integrated channel 158 may be coated with the sorbent material 162, loaded/filled with the sorbent material 162 or formed/made of the sorbent material 162. In some embodiments, the design may include fabrication of the contactor, and more particularly, the first fluid domain 150, from a sorbent itself (e.g., using Binder Jet) and coating some of the contactor channels with a hydrophobic coating, such as, a silica nano-coating, fluorinated silanes and fluoropolymer coatings, to prevent direct contact of sorbent and steam during the regeneration/desorption cycle. As illustrated a $CO_2$ depleted stream 128 is output from the first fluid domain 150 subsequent to adsorption of the $CO_2$ from the first fluid stream 154.

Desorption takes place within the contactor 112 in a Cycle B, as illustrated in Figure 43. During this step, the first fluid stream 154 of inlet gas flowing through the sorbent-integrated channel 158 (Figure 42) is shut down via the gate 118 and a flow of hot gas, and more particularly the second fluid stream 156, is opened through the warming channel 160 defined by the second fluid domain 152 to provide desorption in the first fluid domain 150. In some embodiments, the second fluid stream 156 has a temperature that is greater than the first fluid stream 154. In a preferred embodiment, the second fluid stream 156 has a temperature greater than 85 °C. This drives an appropriate temperature gradient, to provide for the transfer of heat from the second fluid stream 156 to the sorbent material 162 in the first fluid domain 150, initiating desorption. As the sorbent-integrated channel 158 temperature reaches 85 °C, the sorbent material 162 releases $CO_2$, which is pulled from the first fluid domain 150 via a vacuum pump 134. In one embodiment, the desorption time is the same as the adsorption time. In another embodiment, the desorption time is shorter than the adsorption time. In another embodiment, the desorption time is longer than the adsorption time. During the desorption step, vacuum is optionally applied to facilitate the process. In one embodiment, the pressure inside the sorbent-integrated channel 158 is 0.8 Bar to 1.2 Bar. In another embodiment, the pressure inside the sorbent-integrated channel 158 is 0.4 Bar to 0.8 Bar. In another embodiment, the pressure inside the sorbent-integrated channel 158 is 0.1 Bar to 0.4 Bar. In another embodiment, the pressure inside the sorbent-integrated channel 158 is less than 0.1 Bar.

The $CO_2$ capture systems 100, 200 of the present disclosure can comprise the at least one contactor, such as the contactor 112, 114, with the sorbent material 162. This system can utilize the sorbent material 162 and the contactor 112, 114 at the appropriate partial pressure to absorb the $CO_2$ from the inlet gas or first fluid stream 154.

The use of alternative cycling of two contactors, and namely the first contactor 112 and the second contactor 114 of Figures 42 and 43 and similarly Figures 44 and 45, for continuous $CO_2$ removal where each contactor has massively parallel fluid domains results in low pressure drop, and the separation of the fluids avoids contamination of the $CO_2$ stream and offers indirect heat exchange. The contactor can be manufactured using additive technology, such as, for instance, binder-jet techniques, or some other means of manufacturing. The described system provides commercial advantages by providing the ability to operate in a wide range of low energy requirements. The technology can be deployed at locations with higher wind speeds, such as rooftops of commercial buildings, where state of the art technologies cannot be deployed. Additional market opportunities may include consumer $CO_2$, industrial $CO_2$ capture and desalination.

The $CO_2$ capture system 100 is shown in Figures 42-45 in cutaway to reveal the individual contactors 112, 114 and flow of the fluid streams therethrough. As previously asserted, the $CO_2$ capture systems 100, 200 can contain a single contactor or any number of contactors, and the number of contactors selected for use in a given system will depend at least in part on the concentration of $CO_2$ in the inlet gas stream 106, the volume of the inlet gas stream 106, the desire for continuous operation, and the like. Accordingly, embodiments including a first contactor, and at least one additional contactor are anticipated. Embodiments illustrating the inclusion of a first and second contactor are illustrated herein for ease in description.

The various embodiments of the $CO_2$ capture system as described hereinabove dramatically improves the ability to extract $CO_2$ from an inlet gas, such as ambient air, utilizing less energy and thus at a lower costs. The use of a concentrator combined with a low pressure drop across the contactor allows the $CO_2$ capture system to operate in a passive mode thus reducing energy requirements. The integration of a sorbent with a contactor and the transfer of sensible heat to the sorbent channel to assist with desorption, produces a $CO_2$ stream not contaminated with the fluid used to supply sensible heat. By way of example, the use of a contactor multi-furcating design enabling thermally enhanced recovery of $CO_2$ in the inlet gas, reduces the cost of operation of the overall system. The use of alternative cycling of at least two contactors for continuous $CO_2$ removal where each contactor includes the multi-furcating design, and more particularly

includes massively parallel channels, results in low pressure drop and offers indirect heat exchange described hereinabove which aids with effective energy transfer in the $CO_2$ capture system. The various embodiments of the $CO_2$ capture system, and contactor design, described hereinabove therefore present a fuel-efficient, two-cycle system architecture that generates a $CO_2$ stream from the inlet gas stream.

Methods.

Generally, the solid sorbent may be used according to any suitable purpose known in the art that facilitates the use of the solid sorbent described herein. In some embodiments, the solid sorbent is used in a sorbent system. In some embodiments, the solid sorbent is used in a carbon capture sorbent system. In some embodiments, the solid sorbent is used in a moisture sorbent system. In some embodiments, the solid sorbent is used in a carbon capture sorbent system in the presence of water. In some embodiments, the solid sorbent is used for capturing a gas. In some embodiments, the solid sorbent is used for post-combustion capturing of $CO_2$ and/or direct air capturing of $CO_2$.

The exemplary embodiments described herein include a method of making a sorbent system. Generally, the solid sorbent may be made according to any suitable synthesis method known in the art that facilitates the solid sorbent described herein.

Disclosed herein is a first method of making a functionalized sorbent including a sorbent and at least one functionalization ligand covalently bonded to the sorbent, wherein the functionalization ligand includes a first amine-containing unit. The method includes forming a first mixture including the sorbent and a grafter including an alkoxysilane-containing unit and an alkyl halide-containing unit, reacting the first mixture in a silanization reaction to form a grafted sorbent including the grafter attached to the sorbent, forming a second mixture including the grafted sorbent and a second amine-containing unit, and reacting the second mixture in an amine alkylation reaction to form the functionalized sorbent.

Disclosed herein is a second method of making a functionalized sorbent including a sorbent and at least one functionalization ligand covalently bonded to the sorbent, wherein the functionalization ligand includes a first amine-containing unit. The method includes forming a first mixture including a grafter including an alkoxysilane-containing unit and an alkyl halide-containing unit and a second amine-containing unit, reacting the first mixture in an amine alkylation reaction to form a functionalized grafter, forming a second mixture including the functionalized grafter; and the sorbent, and reacting the second mixture in a silanization reaction to form the functionalized sorbent.

Disclosed herein is a third method of making a functionalized sorbent including a sorbent and at least one functionalization ligand covalently bonded to the sorbent, wherein the functionalization ligand includes a first amine-containing unit. The method includes forming a first mixture including the sorbent and a grafter including an alkoxysilane-containing unit and a third amine-containing unit, reacting the first mixture in a silanization reaction to form a grafted sorbent including the grafter attached to the sorbent, forming a second mixture including the grafted sorbent and a coupler including at least two alkyl halide-containing units, reacting the second mixture in an amine alkylation reaction to form a multiplier including at least one alkyl halide-containing unit, forming a third mixture including the multiplier and a second amine-containing unit, and reacting the third mixture in an amine alkylation reaction to form the functionalized sorbent.

Each of these first, second, or third methods may be further defined by the following embodiments.

In some embodiments, the second amine-containing unit includes a polymer, an oligomer, a small molecule, or a combination thereof.

In some embodiments, the grafter includes one alkyl halide-containing unit. In some embodiments, the grafter includes at least two alkyl halide-containing units. In some embodiments, the grafter includes at least three alkyl halide-containing units.

In some embodiments, the alkyl halide-containing unit includes at least one halide selected from the group consisting of chloride, bromide, and iodide.

In some embodiments, the alkyl group of the alkyl halide-containing unit consists of aliphatic groups. In some embodiments, the alkyl group of the alkyl halide-containing unit includes at least one aromatic group.

In some embodiments, the first amine-containing unit includes at least one primary amine and at least one secondary amine. In some embodiments, the first amine-containing unit does not include tertiary amines. In some embodiments, the first amine-containing unit includes at least one primary amine, at least one secondary amine, and at least one tertiary amine.

In some embodiments, the sorbent includes an inorganic sorbent or a carbon-based sorbent. In some embodiments, the sorbent includes alumina, silica, zirconia, a silicate, carbon powder, graphene, or a combination thereof.

Disclosed herein is a method of making a sorbent composite. The method includes forming a slurry including at least one particle, a solvent, at least one binder material that is soluble in the solvent, at least one amine-containing unit that is soluble in the solvent, applying the slurry onto a substrate, and removing the solvent to form the sorbent composite.

In some embodiments, the at least one amine-containing unit includes two or more amine groups.

In some embodiments, the at least one amine-containing unit includes a polymer, an oligomer, a small molecule, or a combination thereof.

In some embodiments, the at least one amine-containing unit does not include tertiary amines. In some embodiments, the at least one amine-containing unit includes only primary amines. In some embodiments, the at least one amine-containing unit includes at least one primary amine, at least one secondary amine, and at least one tertiary amine.

In some embodiments, the at least one particle includes at least one inorganic particle, at least one organic particle, at least one carbon-based particle, or a combination thereof. In some embodiments, the at least one particle includes alumina, silica, zirconia, a silicate, carbon powder, graphene, or a combination thereof.

In some embodiments, the at least one amine-containing unit includes at least one oxygen-containing unit. In some embodiments, the at least one amine-containing unit includes at least one -OH-containing group.

In some embodiments, the at least one amine-containing unit includes at least two different amine-containing units.

In some embodiments, the at least one amine-containing unit is at least partially infused into the at least one particle.

In some embodiments, the at least one amine-containing unit is at least partially present in the at least one binder material.

In some embodiments, the at least one particle includes a solid particle, a mesoporous particle, a microporous particle, a macroporous particle, or a combination thereof. In some embodiments, the at least one particle includes an amorphous particle, a semi-crystalline particle, a crystalline particle, or a combination thereof.

In some embodiments, the at least one binder material includes a linear polymer, a branched polymer, a homopolymer, a block-copolymer, a random-copolymer, or a combination thereof. In some embodiments, the at least one binder material includes at least one cross-linkable group that can be cross-linked upon treatment selected from the group consisting of thermal heating, irradiation, microwave treatment, and combinations thereof.

In some embodiments, the slurry further includes at least one cross-linking reagent, wherein the binder material is at least partially cross-linked with the cross-linking reagent, and wherein the cross-linking reagent includes at least one reagent selected from the group consisting of methacrylate reagents, acrylate reagents, vinyl reagents, allyl reagents, epoxy reagents, and combinations thereof.

In some embodiments, the slurry further includes at least one second particle, wherein the at least one second particle includes at least one covalently bonded amine group.

In some embodiments, the solvent includes, water, alcohol, or a combination thereof.

The exemplary embodiments described herein include a method of capturing at least one gas.

Figure 46 is an exemplary method flow chart 4610. In the exemplary embodiment, method flow chart 4610 depicts exemplary method steps of the method embodiments described herein and is not intended to limit the method embodiments. The method includes receiving 4612 a gas source including at least one gas at a solid sorbent. The solid sorbent may be any sorbent according to the present disclosure, including functionalized sorbents and/or non-functionalized sorbents. The method also includes capturing 4614 an amount of the at least one gas with the solid sorbent.

In some embodiments, the method includes: (I) receiving 4612 a gas source including at least one gas at a solid sorbent; and (II) capturing 4614 an amount of the at least one gas with the solid sorbent.

Generally, the gas source may be any suitable gas source known in the art that facilitates the method described herein. In some embodiments, the gas source is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

Generally, the at least one gas may be any suitable gas known in the art that facilitates the method described herein. In some embodiments, the at least one gas is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

In some embodiments, the at least one gas is present in the source gas in an amount in a range of from about 0.001%(v/v) to about 100%(v/v). In some embodiments, the at least one gas is present in the source gas in an amount in a range of from about 0.001%(v/v) to about 40%(v/v). In some embodiments, the at least one gas is present in the source gas in an amount in a range of from about 0.001%(v/v) to about 15%(v/v). In some embodiments, the at least one gas is present in the source gas in an amount in a range of from about 0.001%(v/v) to about 10%(v/v). In some embodiments, the at least one gas is present in the source gas in an amount in a range of from about 0.001%(v/v) to about 5%(v/v). In some embodiments, the at least one gas is present in the source gas in an amount in a range of from about 0.001%(v/v) to about 1%(v/v). In some embodiments, the at least one gas is present in the source gas in an amount greater than 10%(v/v).

In some embodiments, the at least one gas is present in the source gas in an amount in a range of from about 100 ppmv to about 1000 ppmv. In some embodiments, the at least one gas is present in the source gas in an amount in a range of from about 200 ppmv to about 1000 ppmv. In some embodiments, the at least one gas is present in the source gas in an amount in a range of from about 300 ppmv to about 5000 ppmv. In some embodiments, the at least one gas is present in the source gas in an amount in a range of from about 200 ppmv to about 500 ppmv.

In some embodiments, the at least one gas does not include water vapor.

In some embodiments, the at least one gas includes water vapor. In some embodiments, the at least one gas includes water vapor in an amount in a range of from about 0.001%(v/v) to about 25%(v/v). In some embodiments, the at least one gas includes water vapor in an amount in a range of from about 0.01%(v/v) to about 20%(v/v). In some embodiments, the at least one gas includes water vapor in an amount in a range of from about 0.5%(v/v) to about 15%(v/v). In some embodiments, the at least one gas includes water vapor in an amount in a range of from about 0.5%(v/v) to about 4%(v/v). In some embodiments, the at least one gas includes water vapor in an amount in a range of from about 4%(v/v) to about 15%(v/v).

In some embodiments, the at least one gas is present in the source gas in an amount in a range of from about 0.001%(v/v) to about 10%(v/v) and is in the presence of water vapor. In some embodiments, the at least one gas is present in the source gas in an amount in a range of from about 0.001%(v/v) to about 5%(v/v) and is in the presence of water vapor. In some embodiments, the at least one gas is present in the source gas in an amount in a range of from about 0.001%(v/v) to about 1%(v/v) and is in the presence of water vapor. In some embodiments, the at least one gas is present in the source gas in an amount greater than about 10%(v/v) and is in the presence of water vapor. In some embodiments, the water vapor is present in an amount in a range of from about 0.001%(v/v) to about 25%(v/v). In some embodiments, the water vapor is present in an amount in a range of from about 0.01%(v/v) to about 20%(v/v). In some embodiments, the water vapor is present in an amount in a range of from about 0.5%(v/v) to about 10%(v/v).

In some embodiments, capturing 4614 an amount of the at least one gas with the solid sorbent includes adsorbing an amount of the at least one gas with the solid sorbent. In some embodiments, capturing 4614 an amount of the at least one gas with the solid sorbent includes adsorbing an amount of the at least one gas with the solid sorbent in the presence of water vapor.

In some embodiments, the amount of the at least one gas captured 4614 with the solid sorbent is in a range of from about 1%(v/v) to about 100%(v/v) of the at least one gas present in the source gas. In some embodiments, the amount of the at least one gas captured 4614 with the solid sorbent is in a range of from about 10%(v/v) to about 90%(v/v) of the at least one gas present in the source gas. In some embodiments, the amount of the at least one gas captured 4614 with the solid sorbent is in a range of from about 20%(v/v) to about 80%(v/v) of the at least one gas present in the source gas. In some embodiments, the amount of the at least one gas captured 4614 with the solid sorbent is in a range of from about 30%(v/v) to about 70%(v/v) of the at least one gas present in the source gas. In some embodiments, the amount of the at least one gas captured 4614 with the solid sorbent is in a range of from about 40%(v/v) to about 60%(v/v) of the at least one gas present in the source gas.

In some embodiments, the amount of the at least one gas captured 4614 with the solid sorbent is in a range of from about 1%(v/v) to about 25%(v/v) of the at least one gas present in the source gas. In some embodiments, the amount of the at least one gas captured 4614 with the solid sorbent is in a range of from about 1%(v/v) to about 20%(v/v) of the at least one gas present in the source gas. In some embodiments, the amount of the at least one gas captured 4614 with the solid sorbent is in a range of from about 1%(v/v) to about 15%(v/v) of the at least one gas present in the source gas. In some embodiments, the amount of the at least one gas captured 4614 with the solid sorbent is in a range of from about 1%(v/v) to about 10%(v/v) of the at least one gas present in the source gas. In some embodiments, the amount of the at least one gas captured 4614 with the solid sorbent is in a range of from about 1%(v/v) to about 5%(v/v) of the at least one gas present in the source gas.

In some embodiments, the amount of the at least one gas captured 4614 with the solid sorbent is in a range of from about 80%(v/v) to about 100%(v/v) of the at least one gas present in the source gas. In some embodiments, the amount of the at least one gas captured 4614 with the solid sorbent is in a range of from about 85%(v/v) to about 100%(v/v) of the at least one gas present in the source gas. In some embodiments, the amount of the at least one gas captured 4614 with the solid sorbent is in a range of from about 90%(v/v) to about 100%(v/v) of the at least one gas present in the source gas. In some embodiments, the amount of the at least one gas captured 4614 with the solid sorbent is in a range of from about 95%(v/v) to about 100%(v/v) of the at least one gas present in the source gas.

In some embodiments, the source gas is modified to alter the amount of water vapor. In some embodiments, altering the amount of water vapor includes increasing the amount of water vapor. In some embodiments, altering the amount of water vapor includes decreasing the amount of water vapor. In some embodiments, increasing the amount of water vapor includes adding or injecting water vapor into the source gas. In some embodiments, decreasing the amount of water vapor includes removing water vapor from the source gas by evaporation, condensation, and/or pre-adsorption. In some embodiments, altering the amount of water vapor includes exhaust gas recirculation (EGR) and/or mixing.

In many embodiments, the solid sorbent, the source gas, the at least one gas, or a combination thereof are at a certain temperature. Each temperature may be altered to facilitate the method described herein. Each temperature may have a uniform temperature profile, a gradient temperature profile, a discrete temperature profile, or a combination thereof.

In some embodiments, the method includes an adsorption cycle. In some embodiments, the method includes a desorption cycle. In some embodiments, at least one of the solid sorbent, the source gas, the at least one gas, or a combination thereof are at a temperature in a range of from about -40 °C to about 150 °C during the gas adsorption cycle. In

some embodiments, at least one of the solid sorbent, the source gas, the at least one gas, or a combination thereof are at a temperature in a range of from about 60 °C to about 250 °C during the gas desorption cycle. Each adsorption module or sub-module can have a uniform temperature profile, a gradient temperature profile or discrete temperature profiles. In some embodiments, the method includes altering pressure during the desorption cycle to facilitate the desorption. During the desorption step, vacuum is optionally applied to facilitate the process. In one embodiment, the pressure inside the sorbent-integrated channel 158 is 0.8 Bar to 1.2 Bar. In another embodiment, the pressure inside the sorbent-integrated channel 158 is 0.4 Bar to 0.8 Bar. In another embodiment, the pressure inside the sorbent-integrated channel 158 is 0.1 Bar to 0.4 Bar. In another embodiment, the pressure inside the sorbent-integrated channel 158 is less than 0.1 Bar.

In some embodiments, the method includes controlling a temperature. Temperature may be controlled for the solid sorbent, the source gas, the at least one gas, or a combination thereof.

The exemplary embodiments described herein include a method of collecting at least one gas from a gas source.

EXAMPLES

Without further elaboration, it is believed that one skilled in the art using the preceding description can utilize the present invention to its fullest extent. The following Examples are, therefore, to be construed as merely illustrative, and not limiting of the disclosure in any way whatsoever. The starting material for the following Examples may not have necessarily been prepared by a particular preparative run whose procedure is described in other Examples. It also is understood that any numerical range recited herein includes all values from the lower value to the upper value. For example, if a range is stated as 10-50, it is intended that values such as 12-30, 20-40, or 30-50, etc., are expressly enumerated in this specification. These are only examples of what is specifically intended, and all possible combinations of numerical values between and including the lowest value and the highest value enumerated are to be considered to be expressly stated in this application.

Two types of sorbent support materials are exemplified to illustrate applicability of the present disclosure. One type of support material is inorganic particles, such as alumina and silica particles. The other type of support material is porous organic materials including but not limited to polymers. The present disclosure is also applicable to other types of support materials, including but not limited to, carbon-based supports and organic-inorganic hybrid materials, etc.

Example 1. General testing procedures.

Performance of $CO_2$ and $H_2O$ adsorption was studied using a gravimetric dynamic vapor sorption analyzer (DVS). In the experiments presented in this disclosure, the gas and vapor used are $CO_2$ and water, respectively. The DVS Vacuum analyzer is designed to accurately measure a sample's change in mass as it adsorbs precisely controlled concentrations of water and or gas molecules. The sample is placed in a sample pan hung from a microbalance (an empty pan is usually hung on the other side of the microbalance as a reference). The DVS Vacuum controls and measures sorbate entry and exit flows simultaneously while recording changes in sample mass. The main instrument, the microbalance (UltraBalance™) is housed in a precisely controlled temperature-controlled enclosure (referred to as an incubator). This ensures a highly stable instrument baseline and accurate vapor generation control to occur at the experimental temperature.

The gravimetric DVS method can accurately measure isotherms of pure $H_2O$ and pure $CO_2$. For wet $CO_2$ adsorption, a two-cycle sequential adsorption testing protocol is developed. At the beginning of each test, the sorbent material of interest is subjected to an activation (or regeneration) step at 120°C for 60 minutes under a vacuum of less than $10^{-5}$ mbar. The set partial pressure of water is introduced under vacuum without the interference of a carrier gas at given temperature. The sample's weight is measured directly and continuously using Surface Measurement Systems' Ultra precision micro-Balance with a resolution of 0.1 $\mu$g. All sorption measurements in this disclosure were done in a mass equilibrium mode where the mass equilibrium criterion is set as the change in mass per minute (dm/dt of <0.0035). When the water adsorption reaches equilibrium, $CO_2$ gas with a pre-set partial pressure target is introduced. The partial pressure of $CO_2$ can be adjusted to reflect application conditions, i.e. 400vppm for direct air capture (DAC) or 4.5v% for post combustion capture (PCC).

Performance of $CO_2$ and $H_2O$ adsorption can also be studied using home-made break through test rigs. The test rigs have a sample chamber that houses testing samples either in a powder form or a coating form, with separate and calibrated $CO_2$ and relative humidity (RH) sensors located at both the gas inlet before the sample chamber and gas outlet after the sample chamber. The test rigs can measure individual break through curves for $CO_2$ and $H_2O$ under either dry or wet $CO_2$ conditions with pre-set RH levels. Uptake can be calculated by integrating the breakthrough curve over time.

Dry $CO_2$ isotherms are measured at 25°C using the gravimetric DVS method to evaluate $CO_2$ uptake at different $CO_2$ partial pressures. Similarly, $H_2O$ isotherms are measured to evaluate $H_2O$ uptake at different relative humidity (RH) levels.

Adsorption performances are measured under a DAC-relevant co-adsorption condition (25°C, 50%RH and

400vppm $CO_2$) using the break through test rig. $CO_2$ desorption properties were studied by monitoring $CO_2$ desorption signals while the test bed temperature is increased stepwise. For each experiment, the sorbent is subjected to adsorption to full equilibrium under the DAC relevant condition, i.e. 25°C, 400vppm $CO_2$ and 50%RH.

$CO_2$ uptake or capacity is shown as adsorbed $CO_2$ in gram per gram of sorbent (g$CO_2$/gSorbent). Similarly, $H_2O$ uptake or capacity is expressed as gram of $H_2O$ adsorbed per gram of Sorbent (g$H_2O$/gSorbent). The $CO_2$ and $H_2O$ uptake can be generally considered as exponential growth over time, which can be expressed as $\frac{Q_{max}-Q_{(t)}}{Q_{max}} = e^{-kt}$ where $Q_{max}$ and $Q_{(t)}$ is equilibrium uptake and uptake at a given adsorption time of *t* (min), respectively, and *k* is the characteristics of the exponential growth with a unit of 1/min. Note that, mathematically, 1/k with a unit of mins equals the time required to reach 63% of $Q_{max}$. In this disclosure, *1/k* which is more intuitive than *k*, is used to compare kinetics or rate of $CO_2$ uptake, i.e. the lower the 1/k, the faster the $CO_2$ uptake kinetics.

Example 2. Classification of sorbent materials and sorbent composites.

Sorbent materials and sorbent composites of this disclosure are categorized and classified (Table 1) based on compositions and chemical states of amine functional groups.

Table 1. Classification and sorbent materials and sorbent composites.

| Category | Classification | Covalently bonded amine | Impregnated amine | Cross-linking agent |
|---|---|---|---|---|
| Sorbent | S-Class-I | No | Yes | No |
| | S-Class-IA | No | Yes | Yes |
| | S-Class-II | Yes | No | No |
| | S-Class-II+I | Yes | Yes | No |
| | S-Class-III | Yes | Yes | Yes |
| Composite | C-Class-I | No | Yes | No |
| | C-Class-II | Yes | No | No |
| | C-Class-II+I | Yes | Yes | No |
| | C-Class-III | Yes | Yes | Yes |

Example 3. Synthesis of sorbent materials.

Example 3A. Synthesis of S-Class-I and S-Class-IA sorbent materials.

Generic procedure for synthesizing inorganic support with impregnated not covalently-bonded amines (Sorbent classification: S-Class-I and S-Class-IA).

The general procedure for synthesizing amine functionalized $\gamma$-$Al_2O_3$: Amine loading by physisorption impregnation was disclosed in an earlier patent application, U.S. Patent Application No. 18/606,176, the entire contents of which are hereby incorporated by reference herein.

In particular, before synthesis, $\gamma$-$Al_2O_3$ was thermally activated under vacuum at 100°C to remove the physisorbed water. After that, the desired amount of amine was dissolved in MeOH and added to the $\gamma$-$Al_2O_3$. The reaction mixture was stirred at room temperature overnight. Then, the solvents were removed by applying slow vacuum via rotary evaporator. The obtained residue was further dried under vacuum at 100°C to obtain the amine loaded $\gamma$-$Al_2O_3$ material.

Synthesis of GE320-184A (alumina functionalized with spermine through impregnation).

In a 20 ml scintillation vial, pre-activated $\gamma$-$Al_2O_3$ (200 mg) was added. In a separate vial, spermine (50wt% with respect to $\gamma$-$Al_2O_3$, 200 mg) was dissolved in 3 ml MeOH and added to $\gamma$-$Al_2O_3$. The slurry was then stirred at room temperature overnight at 370 rpm. Thereafter, the solvent was removed by applying slow vacuum in rotavap. The obtained residue was then further dried under vacuum at 100°C to obtain GE320-184A.

Adsorption performances of $CO_2$ and $H_2O$ measured at the DAC-relevant co-adsorption condition (25°C, 50% RH and 400vppm $CO_2$) for GE320 and other exemplary sorbents are summarized in Table 2. Shown in Figure 1 is the desorption profile at different exemplary desorption temperatures. Approximately 80% of $CO_2$ desorption can be achieved at 100°C.

Synthesis of GE321-184B (alumina functionalized with -OH containing spermine through impregnation).

In a 20 ml scintillation vial, γ-$Al_2O_3$ (200 mg) was added. In a separate vial, 0.25 EB:spermine (50 wt% with respect to γ-$Al_2O_3$, 235 mg) was dissolved in 3 ml MeOH and added to γ-$Al_2O_3$. The slurry was then stirred at room temperature overnight at 370 rpm. Thereafter, the solvent was removed by applying slow vacuum in rotavap. The obtained residue was then further dried under vacuum at 100°C to obtain GE321-184B. Adsorption performances of $CO_2$ and $H_2O$, measured at the DAC-relevant co-adsorption condition (25°C, 50%RH and 400vppm $CO_2$) for GE321-184B, are summarized in Table 2. Over 90% of $CO_2$ desorption can be achieved at 100°C (Figure 2).

General synthetic procedure for crosslinked GE321.

In a 20 ml scintillation vial GE321-SG2-16 (45.6 wt% amine, 200 mg) was weighed. In a separate vial, different amount of epichlorohydrin (1,3 and 5 wt% based on amine loading) was dissolved in methanol. The methanolic solution of the crosslinker was subsequently added to the GE321. After stirring at room temperature overnight, the solvent methanol was evaporated under vacuum. The obtained residue was dried at 60°C in the vacuum to obtained cross-linked sorbents.

Synthesis of GE395-SG2-44C.

In a 20 ml scintillation vial GE321-SG2-16 (45.6 wt% amine, 200 mg) was weighed. In a separate vial, epichlorohydrin (9.11 mg, 5 wt% based on amine loading) was dissolved in 3 ml MeOH. The methanol solution was then added to the GE321-SG2-16. After overnight stirring at room temperature, the methanol was removed under vacuum in a rotavap. The obtained residue was dried further under vacuum at 60°C overnight to obtain GE395-SG2-44C. To obtain GE393-SG2-44A and GE394-SG2-44B, 2.9 mg and 7.4 mg of the cross-linker were added respectively.

Table 2. Exemplary sorbent materials and their adsorption performances of $CO_2$ and $H_2O$ measured at the DAC-relevant co-adsorption condition (25 °C, 50%RH and 400vppm $CO_2$).

| Sorbent name | Sorbent Classification | Impregnated amines | Cross-linking agent | $CO_2$ uptake ($gCO_2$/gSorbent) | $H_2O$ uptake ($gH_2O$/gSorbent) |
|---|---|---|---|---|---|
| GE320-184A | S-Class-I | spermine | No | 0.04 | 0.2653 |
| GE321-184B | S-Class-I | 0.25EB:spermine | No | 0.0848 | 0.224 |
| GE394-SG2-44B | S-Class-IA | 0.25EB:spermine | Yes (1wt%) | 0.0672 | 0.291 |
| GE395-SG2-44C | S-Class-IA | 0.25EB:spermine | Yes (3wt%) | 0.0939 | 0.4136 |
| GE393-SG2-44A | S-Class-IA | 0.25EB:spermine | Yes (5wt%) | 0.0297 | 0.199 |

Example 3B. Synthesis of S-Class-II sorbent materials.

Generic procedure for synthesizing inorganic support with covalently bonded amines (Sorbent classification: S-Class-II).

First, gamma-alumina (γ-$Al_2O_3$) is used as an example to illustrate the disclosure. Before the synthesis, γ-$Al_2O_3$ was thermally activated under vacuum at 100°C to remove the physisorbed water. After that, dried γ-$Al_2O_3$ was added to a flask connected with a water-cooled water condenser. To the flask, toluene and water were added and stirred to make a heterogeneous mixture. To the slurry, the grafting agent, hereafter referred to as *grafter*, (p-chloromethyl)phenyltrimethoxysilane (PCPT) was added dropwise. The reaction mixture was stirred overnight at 90°C. After the reaction cooled down, the excess toluene was removed, and the obtained slurry was washed with fresh toluene 3 times to remove any unreacted PCPT. After that, PCPT grafted γ-$Al_2O_3$ was dried in a vacuum oven at 90°C.

Exemplary sorbent materials and their adsorption performances of $CO_2$ and $H_2O$ measured at the DAC-relevant co-adsorption condition (25°C, 50%RH and 400vppm $CO_2$) are summarized in Table 3.

Synthesis of GE351-SG2-39 (an inorganic particle (e.g., alumina) with covalently bonded linear amines) (Sorbent material classification: S-Class-II).

GE351-SG2-39 was synthesized according to Figure 3. In a 3-necked round bottom flask 4g of γ-$Al_2O_3$ (pre-activated thermally at 100 °C) was added. To the flask, 20 ml of toluene and 200 μl of water were added. After stirring once a heterogeneous mixture was formed, PCPT (4g) was added dropwise. The reaction mixture was heated to reflux and stirred it overnight at 90°C. After the reaction cooled down to room temperature, the excess toluene was removed. The slurry was

transferred to a 50 ml centrifuge tube with fresh toluene. It was washed with fresh toluene for 3 times to remove any excess physisorbed PCPT. The residue was then kept in a vacuum oven at 90°C to obtain PCPT grafted γ-$Al_2O_3$.

Spermine (4.04g, 0.02 mmol) was dissolved in toluene (50 ml) and PCPT grafted γ-$Al_2O_3$ (2g, 0.002 mmol PCPT) was added to it. The reaction mixture was stirred at 90°C for 72 hours. After that, the reaction mixture was cooled down to room temperature and excess toluene was removed. The obtained residue was washed with methanol 3 times followed by drying under vacuum at 90°C to obtain GE351-SG2-39. Shown in Figure 4 are exemplary TGA traces of γ-$Al_2O_3$, PCPT grafted γ-$Al_2O_3$ and GE351-SG2-39.

Adsorption performances of $CO_2$ and $H_2O$ measured at the DAC-relevant co-adsorption condition (25°C, 50% RH and 400vppm $CO_2$) for GE351-SG2-39 are summarized in Table 3. The $CO_2$ desorption can be fully achieved at a desorption temperature of 80°C or below (Figure 5).

Synthesis of GE386-SG2-41A (an inorganic particle (e.g., silica) with covalently bonded linear amines) (Sorbent material classification: S-Class-II).

To obtain GE386-SG2-41A, mesoporous silica MCM-41 was first grafted with anchoring agent PCPT. MCM-41 (200 mg, activated at 100°C for 12 hours) was added to 20 ml scintillation vial. 2 ml of toluene and 100 μl water were added to the silica, followed by dropwise addition of PCPT (214 mg). The reaction mixture was heated to 90°C for 12 hours. After cooling down, the reaction mixture was centrifuged to remove the excess toluene. Fresh toluene was added, and the residue was washed for 3 times with toluene. The residue was dried in a vacuum oven for 12 hours at 90°C.

Butane epoxide modified spermine (herein referred to as 0.25EB:Spermine) (658 mg) was dissolved in 5 ml toluene in a 20 ml scintillation vial. PCPT grafted MCM-41 (200 mg) was added to the vial and it was stirred at 90°C overnight. After cooling back down to room temperature, the reaction mixture was centrifuged to remove the excess toluene. The obtained mixture was washed with methanol 3 times and the residue was dried under vacuum for 12 hours at 90°C to obtain GE386-SG2-41A. Shown in Figure 6 are exemplary TGA traces of MCM-41, PCPT grafted MCM-41 and GE386-SG2-41A.

Synthesis of GE382-SG2-40A (an inorganic particle (e.g., alumina) with covalently bonded branched polymer) (Sorbent material classification: S-Class-II).

GE382-SG2-40A was synthesized by covalently grafting branched polyethylenimine (with a molecular weight of 600) (PEI-600) to PCPT grafted γ-$Al_2O_3$: PEI-600 (1.04g) was dissolved in 5 ml of toluene and PCPT grafted γ-$Al_2O_3$ (200 mg) was added to it. The reaction mixture was stirred at 90°C for 48 hours. After cooling down to room temperature, the excess toluene was removed, and the residue was washed with methanol 3 times. Afterwards, the solid was dried under vacuum at 90 °C to obtain GE382-SG2-40A. Shown in Figure 7 are TGA traces of γ-$Al_2O_3$, PCPT grafted γ-$Al_2O_3$ and GE382-SG2-40A.

Adsorption performances of $CO_2$ and $H_2O$ measured at the DAC-relevant co-adsorption condition (25°C, 50% RH and 400vppm $CO_2$) for GE382-SG2-40A are summarized in Table 3. Approximately 80% $CO_2$ desorption can be achieved at a desorption temperature of 100°C or below (Figure 8).

Synthesis of GE383-SG2-40B (an inorganic particle (e.g., alumina) with covalently bonded branched polymer) (Sorbent material classification: S-Class-II).

GE383-SG2-40B was synthesized by covalently grafting branched polyethylenimine (with a molecular weight of 2000) (PEI-2000) to PCPT grafted γ-$Al_2O_3$: PEI-2000 (3.2g) was dissolved in 5 ml of toluene and PCPT grafted γ-$Al_2O_3$ (200 mg) was added to it. The reaction mixture was stirred at 90°C for 48 hours. After cooling down to room temperature, the excess toluene was removed and the residue was washed with methanol 3 times. Afterwards, the solid was dried under vacuum at 90 °C to obtain GE383-SG2-40B. Shown in Figure 9 are exemplary TGA traces of γ-$Al_2O_3$, PCPT grafted γ-$Al_2O_3$ and GE383-SG2-40B.

Adsorption performances of $CO_2$ and $H_2O$ measured at the DAC-relevant co-adsorption condition (25°C, 50% RH and 400vppm $CO_2$) for GE383-SG2-40B are summarized in Table 3. Approximately 80% $CO_2$ desorption can be achieved at a desorption temperature of 100°C or below (Figure 10).

Synthesis of GE396-SG2-42 (an inorganic particle (e.g., alumina) with covalently bonded branched polymer) (Sorbent material classification: S-Class-II).

GE396-SG2-42 was synthesized by covalently grafting branched polyethylenimine (with a molecular weight of 10000) (PEI-10000) to PCPT grafted γ-$Al_2O_3$: PEI-10000 (5g) was dissolved in 5 ml of toluene and PCPT grafted γ-$Al_2O_3$ (200 mg) was added to it. The reaction mixture was stirred at 90°C for 48 hours. After cooling down to room temperature, the excess toluene was removed and the residue was washed with methanol 3 times. Afterwards, the solid was dried under vacuum at 90 °C to obtain GE396-SG2-42. Shown in Figure 11 are exemplary TGA traces of γ-$Al_2O_3$, PCPT grafted γ-$Al_2O_3$ and GE396-SG2-42.

Adsorption performances of $CO_2$ and $H_2O$ measured at the DAC-relevant co-adsorption condition (25°C, 50% RH and 400vppm $CO_2$) for GE396-SG2-42 are summarized in Table 3. The $CO_2$ desorption can be fully achieved at a desorption temperature of 90°C or below (Figure 12).

Table 3. Exemplary sorbent materials and their adsorption performances of $CO_2$ and $H_2O$ measured at the DAC-relevant co-adsorption condition (25°C, 50%RH and 400vppm $CO_2$).

| Sorbent name | Sorbent Classification | Covalently bonded amine | Impregnated amines | Cross-linking agent | $CO_2$ uptake ($gCO_2$/gSorbent) | $H_2O$ uptake ($gH_2O$/gSorbent) |
|---|---|---|---|---|---|---|
| GE351-SG2-39 | S-Class-II | Spermine | n/a | n/a | 0.0404 | 0.254 |
| GE382-SG2-40A | S-Class-II | PEI-600 | n/a | n/a | 0.0354 | 0.2 |
| GE383-SG2-40B | S-Class-II | PEI-2000 | n/a | n/a | 0.0416 | 0.247 |
| GE396-SG2-42 | S-Class-II | PEI-10000 | n/a | n/a | 0.011 | 0.195 |
| GE409-A3169D | S-Class-II + I | Spermine | PEHA | n/a | 0.1365 | 0.4631 |
| GE426-A47B | S-Class-II + I | Spermine | PAA | n/a | 0.0125 | 0.2483 |
| GE411-A3170B | S-Class-III | Spermine | PEHA | Yes (1-pot) | 0.0867 | 0.4809 |
| GE417-A3176B | S-Class-III | Spermine | PEHA | Yes (sequential) | 0.087 | 0.5766 |

Example 3C. Synthesis of S-Class-II+1 sorbent materials.

General method for the impregnation of amine with support having covalently bonded amines.

In a round bottom flask, a sorbent support material, either an inorganic support such as alumina and silica having covalently bonded amines as described above or an organic support such as porous organic polymer (POP) having covalently bonded amines, was added and slurried in methanol. Anywhere from 30-100 wt % of amine was then added to the flask and stirred at room temperature for 8-24 hours. The methanol was removed via rotary evaporator and the material was dried in a vacuum oven for 8 hours at 90 °C. To characterize the amount of amine impregnated in the support material, TGA analysis was performed. The sample of interest was removed of residual adsorbed water via a ramp rate of 5 °C/min to 90 °C or 100 °C, an isothermal hold for 60 min followed by a ramp rate of 10 °C/min to 800 °C to determine organic material decomposition. To calculate the amount of amine impregnated, the mass % associated with the grafter such as PCPT and covalently bonded amines was subtracted from the total organic mass % loss. Elemental analysis such as carbon (C), hydrogen (H) and nitrogen (N) can also be performed on select samples.

Synthesis of GE409-A3169D (an inorganic particle (e.g., alumina) with covalently bonded linear amines and additional impregnated or not impregnated covalently bonded amines) (Sorbent material classification: S-Class-II+1).

To a 20 mL scintillation vial, 0.100 g of GE351-SG2-39 comprising PCPT grafted $\gamma$-$Al_2O_3$ having covalently bonded spermine (24.9% organics) was slurried in 5 mL methanol. Next, 0.067 g of pentaethylenehexamine (PEHA) was added to the vial and stirred for 16 hours at room temperature. The methanol was removed via rotary evaporator and the material was dried in a vacuum oven for 8 hours at 90 °C to obtain 166.6 mg of GE409. To characterize the amount of amine impregnated in the porous support, TGA was used. The total organic mass loss was 44.6%, therefore; the impregnated amine mass loss totaled 19.7 %. Elemental analysis composition is 26.56 % C, 4.88% H and 10.49% N. Shown in Figure 13 are exemplary TGA traces of $\gamma$-$Al_2O_3$, PCPT grafted $\gamma$-$Al_2O_3$, PCPT grafted $\gamma$-$Al_2O_3$ having covalently bonded spermine (GE351-SG2-39) and GE409-A3169D comprising GE351-SG2-39 with additional impregnated PEHA.

Adsorption performances of $CO_2$ and $H_2O$ measured at the DAC-relevant co-adsorption condition (25°C, 50% RH and 400vppm $CO_2$) for GE409-A3169D are summarized in Table 3. The $CO_2$ desorption can be fully achieved at a desorption temperature of 90°C or below (Figure 14).

Synthesis of GE426-A47B (an inorganic particle (e.g., alumina) with covalently bonded linear amines and additional impregnated or not impregnated covalently bonded polymeric amines) (Sorbent material classification: S-Class-II+1).

To a 20 mL scintillation vial, 0.150 g of GE351-A3183 comprised PCPT grafted $\gamma$-$Al_2O_3$ having covalently bonded spermine (22.3% organics) was slurried in 5 mL methanol. Next, 0.500 mL of 15% poly(allylamine) (PAA) aqueous solution (15,000 g/mol PAA) was added to the vial and stirred for 24 hours at room temperature. The methanol/water was removed

via rotary evaporator and the material was dried in a vacuum oven for 16 hours at 100 °C to obtain 220 mg of GE426. To characterize the amount of amine impregnated in the porous support, TGA was used. The total organic mass loss was 46.1%, therefore; the impregnated amine mass loss totaled 23.8 %. Shown in Figure 15 are exemplary TGA traces of γ-$Al_2O_3$, PCPT grafted γ-$Al_2O_3$, PCPT grafted γ-$Al_2O_3$ having covalently bonded spermine (GE351-SG2-39) and GE426-A47B comprising GE351-A3183 with additional impregnated PAA.

Adsorption performances of $CO_2$ and $H_2O$ measured at the DAC-relevant co-adsorption condition (25°C, 50% RH and 400vppm $CO_2$) for GE426-A47B are summarized in Table 3. Approximately 80% $CO_2$ desorption can be achieved at a desorption temperature of 90°C or below (Figure 16).

Example 3D. One-pot synthesis.

General method for the one-pot crosslinking of impregnated amine with support having covalently bonded amines.

In a round bottom flask, a support material, either an inorganic support such as alumina and silica having covalently bonded amines as described above or an organic support such as porous organic polymer (POP) having covalently bonded amines was added and slurried in methanol. Next, anywhere from 30-100 wt % of amine and 1-6 equivalent of crosslinker, based upon the amount of covalently attached amine, was added to the flask and stirred at room temperature for 8-24 hours. The methanol was removed via rotary evaporator and the material was dried in a vacuum oven for 8 hours at 90 °C. To characterize the amount of amine impregnated and crosslinked in the porous support, TGA was used. The material was removed of residual adsorbed water via a ramp rate of 5 °C/min to 90 °C or 100 °C, an isothermal hold for 60 min followed by a ramp rate of 10 °C/min to 800 °C to determine organic material decomposition. To calculate the amount of amine impregnated and crosslinked, the mass % loss associated with the grafter such as PCPT and covalently bonded amines was subtracted from the total organic mass % loss. Elemental analysis can also be performed on select samples.

Synthesis of GE411-A3170B (an inorganic particle (e.g., alumina) with covalently bonded linear amines and additional impregnated amines and cross-linking agent - one pot synthesis) (Sorbent material classification: S-Class-3).

To a 20 mL scintillation vial, 0.100 g of GE351-SG-2-39 comprising PCPT grafted γ-$Al_2O_3$ having covalently bonded spermine (24.9% organics) was slurried in 5 mL methanol. Next, 0.067 g of PEHA and 4 eq. of a cross-linking agent, e.g., 1,5-hexadiene diepoxide (0.0168 g) was added to the vial and stirred for 16 hours at room temperature. The methanol was removed via rotary evaporator and the material was dried in a vacuum oven for 8 hours at 90 °C to obtain 178 mg of GE411. To characterize the amount of amine impregnated and crosslinked in the porous support, TGA was used. The total organic mass loss was 51.0%, therefore; the impregnated amine mass loss totaled 26.1 %. Elemental analysis composition is 31.16 % C, 6.25% H and 12.36% N. Shown in Figure 17 are exemplary TGA traces of γ-$Al_2O_3$, PCPT grafted γ-$Al_2O_3$, PCPT grafted γ-$Al_2O_3$ having covalently bonded spermine (GE351-SG2-39) and GE411-A3170B comprising GE351-SG2-39 with additional impregnated PEHA and crosslinking agent (1,5-hexadiene diepoxide).

Adsorption performances of $CO_2$ and $H_2O$ measured at the DAC-relevant co-adsorption condition (25°C, 50% RH and 400vppm $CO_2$) for GE411-A3170B are summarized in Table 3. The $CO_2$ desorption can be fully achieved at a desorption temperature of 90°C or below (Figure 18).

Example 3E. Sequential crosslinking.

General Procedure for the sequential crosslinking of impregnated amine with support having covalently bonded amines.

In a round bottom flask, a support material, either an inorganic support such as alumina and silica having covalently bonded amines as described in Section 3.3.3 or an organic support such as porous organic polymer (POP) having covalently bonded amines, was added and slurried in methanol and 1-6 equivalent of crosslinker was added based upon the amount of covalently attached amine. The solution was stirred for one hour. Next, anywhere from 30-100 wt % of amine was then added to the flask and stirred at room temperature for 8-24 hours. The methanol was removed via rotary evaporator and the material was dried in a vacuum oven for 8 hours at 90 °C. To characterize the amount of amine impregnated and crosslinked in the porous support, TGA was used. The material was removed of residual adsorbed water via a ramp rate of 5 °C/min to 90 °C or 100 °C, an isothermal hold for 60 min followed by a ramp rate of 10 °C/min to 800 °C to determine organic material decomposition. To calculate the amount of amine impregnated and crosslinked, the mass % loss associated with the grafter such as PCPT and covalently bonded amines was subtracted from the total organic mass % loss. Elemental analysis can also be performed on select samples.

Synthesis of GE417-A3176B (an inorganic particle (e.g., alumina) with covalently bonded linear amines and additional impregnated amines and cross-linking agent - sequential synthesis) (Sorbent material classification: S-Class-3).

To a 20 mL scintillation vial, 0.100 g of GE351-SG-2-39 comprising PCPT grafted γ-$Al_2O_3$ having covalently

bonded spermine (24.9% organics) was slurried in 5 mL methanol. Next, 4 eq. of 1,5-hexadiene diepoxide (0.0168 g) was added to the vial and stirred for one hour. Then, 0.067 g of PEHA was added to the vial and the slurry was stirred for 16 hours at room temperature. The methanol was removed via rotary evaporator and the material was dried in a vacuum oven for 8 hours at 90 °C to obtain 183.8 mg of GE417. To characterize the amount of amine impregnated and crosslinked in the porous support, TGA was used. The total organic mass loss was 51.5%, therefore; the impregnated amine mass loss totaled 26.6 %. Elemental analysis composition is 30.04 % C, 5.84% H and 11.05% N. Shown in Figure 19 are exemplary TGA traces of $\gamma$-$Al_2O_3$, PCPT grafted $\gamma$-$Al_2O_3$, PCPT grafted $\gamma$-$Al_2O_3$ having covalently bonded spermine (GE351-SG2-39) and GE417-A3176B comprising GE351-SG2-39 with additional impregnated PEHA and crosslinking agent (1,5-hexadiene diepoxide).

Adsorption performances of $CO_2$ and $H_2O$ measured at the DAC-relevant co-adsorption condition (25°C, 50% RH and 400vppm $CO_2$) for GE417-A3176B are summarized in Table 3. The $CO_2$ desorption can be fully achieved at a desorption temperature of 90°C or below (Figure 20).

Example 3F. Reverse reaction.

General method for the reverse reaction of grafter +amine to support (Sorbent material classification: S-Class-II, reverse reaction).

First, PCPT was added to toluene. A 1.5 eq. excess of amine was dissolved in the PCPT/toluene solution. Then, the solution was heated at 85 °C for 4-24 hours. A precipitate crashed out. After allowing the reaction to cool, the contents were transferred to a centrifuge tube and the solid was separated from the soluble liquid. The reaction was characterized by 1H NMR showing the formation of the PCPT+amine molecule prior to grafting (Figure 21). Next, 2 eq. of $\gamma$-$Al_2O_3$ that was ground and activated for several hours was placed in a vial. The PCPT+amine toluene solution was added and the mixture allowed to stir at ambient conditions to create a slurry. Lastly 1.1 eq. distilled water based on $\gamma$-$Al_2O_3$ was added to the slurry. Then the solution was heated overnight in an oil bath at 85 °C. The resulting slurry was centrifuged and the solid was washed once with toluene and twice with methanol. The solid was then placed in a vacuum oven at 90 °C and dried overnight.

Synthesis of GE432.

A 1.5 eq. excess of spermine (2.594g, 12.82 mmol) was dissolved in 40 mL of toluene in a 250 mL round bottom flask. Then PCPT was added (1.85 mL, 8.5 mmol). The solution was heated by an oil bath at 85C for 8.5h. After allowing the reaction to cool, the contents were transferred to a 50 mL centrifuge tube and the solid was separated from the soluble liquid. The reaction was characterized by 1H NMR showing the formation of the PCPT+spermine molecule prior to grafting. Gamma alumina (1.733 g, 17.0 mmol) that was ground and activated for several hours was placed in a 100 mL flask. Then the PCPT+spermine mother liquor was added and the mixture allowed to stir at ambient conditions to create a slurry. Lastly distilled water (0.337 mL, 18.7 mmol) was added to the slurry. Then the solution was heated overnight in an oil bath at 85 °C. The resulting slurry was centrifuged and the solid was washed once with toluene and twice with methanol. The solid was then placed in a vacuum oven at 90 °C and dried overnight. To characterize the amount of amine+PCPT impregnated in the porous support, TGA was used. The total organic mass loss was 47.1%, therefore; the reacted spermine+PCPT then grafted mass loss totaled 47.1%. Shown in Figure 22 are exemplary TGA traces of TGA traces of $\gamma$-$Al_2O_3$, PCPT grafted $\gamma$-$Al_2O_3$ having covalently bonded spermine (GE351-SG2-39) and PCPT grafted $\gamma$-$Al_2O_3$ having covalently bonded spermine prepared by reverse reaction (GE432).

Adsorption performances of $CO_2$ and $H_2O$ measured at the DAC-relevant co-adsorption condition (25°C, 50% RH and 400vppm $CO_2$) for GE432, in comparison to GE351-SG2-39, are summarized in Table 4. The $CO_2$ desorption can be fully achieved at a desorption temperature of 90°C or below (Figure 23).

Table 4. Exemplary sorbent materials and their adsorption performances of $CO_2$ and $H_2O$ measured at the DAC-relevant co-adsorption condition (25°C, 50%RH and 400vppm $CO_2$).

| Sorbent name | Sorbent Classification | Grafter | Multi-armed coupler | Covalently bonded amine | $CO_2$ uptake ($gCO_2$/gSorbent) | $H_2O$ uptake ($gH_2O$/gSorbent) |
|---|---|---|---|---|---|---|
| GE351-SG2-39 | S-Class-II | PCPT | n/a | Spermine | 0.0404 | 0.254 |
| GE432 | S-Class-II | PCPT | n/a | Spermine | 0.021 | 0.1363 |
| GE424 | S-Class-II | 3-APTMS | TCB | Spermine | 0.0267 | 0.2102 |

(continued)

| Sorbent name | Sorbent Classification | Grafter | Multi-armed coupler | Covalently bonded amine | $CO_2$ uptake ($gCO_2$/gSorbent) | $H_2O$ uptake ($gH_2O$/gSorbent) |
|---|---|---|---|---|---|---|
| GE435-MD6348 | S-Class-II | 3-ICPTMS | DC2P | PEHA | 0.028 | 0.1994 |
| GE454-SG2-68 | S-Class-II | 3-APTMS | CC | Spermine | 0.01 | 0.175 |

Example 3G. Grafting + coupling using a symmetric multi-armed coupler.

General method for the grafting + coupling using a symmetric multi-armed coupler.

Synthesis of GE424-SG2-56: (Sorbent material classification: S-Class-II).

Synthesis of SG2-52.

In a 20 ml scintillation vial, γ-$Al_2O_3$ (1.01g, pre-dried at 100°C) was added with a stir bar. Toluene (5 ml) and water (100 μl) were subsequently added. 3-Aminopropyltrimethoxy silane (3-APTMS, 1g) was added to it and the resultant slurry was stirred at 90°C overnight. After the completion of the reaction, the vial was cooled down to the room temperature. After removing the residual toluene, the residue was washed with fresh toluene 3 times to remove any physisorbed 3-APTMS. After that, the obtained residue was dried under vacuum overnight at 90°C to obtain SG2-52 (Figure 24).

Synthesis of SG2-54.

1,3,5-tris(chloromethyl)benzene (TCB) (0.175g, 0.78 mmol) was dissolved in 3 ml of toluene in a 20 ml scintillation vial. Subsequently, SG2-52 (200 mg, 14.3% 3-APTMS loaded) was added to the solution. The TCB molecule is hereafter referred to as a *multi-armed coupler.* Furthermore, because the TCB has a symmetric structure, it is categorized as a *symmetric multi-armed coupler.* The obtained reaction mixture was stirred at 90°C for 24 hours. After the reaction, the vial was cooled down to room temperature. After removing the residual toluene, the residue was washed with methanol 3 times. Finally the residue was dried under vacuum overnight at 90°C to obtain SG2-54 (Figure 24).

Synthesis of GE424-SG2-56.

Spermine (90.5 mg, 0.45 mmol) was dissolved in toluene (3 ml) in a 20 ml scintillation vial. Subsequently, SG2-54 (100 mg, 24.3% organics loaded) was added to the toluene solution. The obtained reaction mixture was stirred at 90°C for 24 hours. After the reaction, the vial was cooled down to room temperature. After removing the residual toluene, the residue was washed with methanol 3 times. Finally the residue was dried under vacuum overnight at 90°C to obtain GE424-SG2-56 (Figure 24). Exemplary TGA traces for SG2-52, SG2-54 and GE424-SG2-56 are shown in Figure 25.

Synthesis of GE454-SG2-68 (Sorbent material classification: S-Class-II).

Synthesis of SG2-63B.

Cyanuric chloride (CC) (0.432g, 2.34 mmol), also used as a *symmetric multi-armed coupler,* was dissolved in 3 ml of toluene in a 20 ml scintillation vial. Subsequently, SG2-52 (300 mg, 14.3% 3-APTMS loaded) was added to the solution. The obtained reaction mixture was stirred at 90°C for 24 hours. After the reaction, the vial was cooled down to room temperature. After removing the residual toluene, the residue was washed with methanol 3 times. Finally the residue was dried under vacuum overnight at 90°C to obtain SG2-63B (Figure 26).

Synthesis of GE454-SG2-68.

Spermine (0.383 g, 1.84 mmol) was dissolved in toluene (3 ml) in 20 ml scintillation vial. Subsequently, SG2-63B (250 mg, 25% organics loaded) was added to the toluene solution. The obtained reaction mixture was stirred at 90°C for 24 hours. After the reaction, the vial was cooled down to room temperature. After removing the residual toluene, the residue was washed with methanol 3 times. Finally the residue was dried under vacuum overnight at 90°C to obtain GE454-SG2-68 (Figure 26). Exemplary TGA traces for SG2-52, SG2-63B and GE454-SG2-68 are shown in Figure 27.

Example 3H. Grafting + coupling using an asymmetric multi-armed coupler.

General method for grafting + coupling using an asymmetric multi-armed amine coupler.

General procedure for grafting amine using an asymmetric multi-armed coupler.

A suitable isocyanate functionalized alkoxysilane is reacted with a polychlorinated alcohol, which is used as *an asymmetric coupler,* or amine to generate a polychlorinated alkoxysilane grafting agent containing a urethane or urea linkage. Hydrolysis and subsequent condensation of this grafting agent in the presence of a suitable hydroxyl containing substrate (e.g., silica ($SiO_2$), alumina ($Al_2O_3$), titania ($TiO_2$), etc.) followed by reaction with a suitable polyamine (e.g., spermine, pentaethylenehexamine (PEHA), etc.) generates a multi-armed amine grafted material.

Synthesis of dichlorourethane.

3-isocyanatopropyltrimethoxysilane (3-ICPTMS) (9.0 mL, 0.047 mol) and 1,3-dichloro-2-propanol (4.5 mL, 0.047 mol) (DC2P), *an asymmetric coupler,* were combined in a 50 mL round bottomed flask (RBF) fitted with a condenser and heated to 75°C with stirring under $N_2$. After 2.5 hours $^1$H NMR indicated low conversion so the oil bath temperature was increased to 90°C and the reaction was stirred at the temperature for an additional 24 hours. $^1$H NMR of an aliquot indicated complete conversion to the dichlorourethane, as shown in Figure 28, and indicated by the disappearance of $CH_2NCO$ at 3.31 ppm in $CDCl_3$ and the appearance of a $CH_2$NHC(O)O at 3.2 ppm and the consumption of the dichloroisopropanol OH signal.

Grafting of dichlorourethane onto mesoporous silica KIT-6.

2.0027g of KIT-6 mesoporous silica and dichlorourethane (2.094g, 6.26 mmol) were combined with 10 mL of toluene and a magnetic stir bar in a 20 mL scintillation vial. 100 μL of water was added and the mixture was vortexed to homogenize before stirring in a hot block maintained at 90°C for 12 hours. The resulting slurry was cooled to ambient temperature and transferred to a 50 mL centrifuge tube along with ~2-3 mL of toluene used to rinse the vial. The mixture was centrifuged for 3 min at 4000 rpm. The supernatant was decanted and the remaining solid was washed with 10 mL toluene and centrifuged as above. This process was repeated two more times. The resulting solid was dried in a vacuum oven at 90°C overnight to yield 2.7411g of a white powder. TGA analysis (Figure 29; 5°C ramp to 90 °C, hold for 60 min, 10°C/min ramp to 800°C) showed a weight loss of 27.220 wt% after the 60 min hold at 90°C indicating successful grafting with a total organic content of 27.220 wt%.

GE435-MD6348 sorbent (Sorbent material classification: S-Class-II).

0.9996g of dichlorourethane grafted KIT-6 mesoporous silica and pentaethylenehexamine (PEHA; 4.1435g, 17.83 mmol, 10 equivalents per Cl based on 27.220 wt% dichlorourethane content) were combined with a magnetic stir bar in a 20 mL scintillation vial. The vial was briefly vortexed to homogenize before stirring in a hot block maintained at 90°C for 4 days. The resulting slurry was cooled to ambient temperature and transferred to a 50 mL centrifuge tube along with ~10 mL of methanol used to rinse the vial. The mixture was centrifuged for 4 min at 5000 rpm. The supernatant was decanted and the remaining solid was washed with 10 mL methanol and centrifuged as above. This process was repeated two more times. The resulting solid was dried in a vacuum oven at 90°C for 6 hours to yield 0.7365g of a white powder. TGA analysis (Figure 30; 5°C ramp to 90 °C, hold for 60 min, 10°C/min ramp to 800°C) showed a weight loss of 24.651 wt% after the 60 min hold at 90°C indicating a total organic content of 24.651 wt%.

Adsorption performances of $CO_2$ and $H_2O$ measured at the DAC-relevant co-adsorption condition (25°C, 50% RH and 400vppm $CO_2$) for GE435-MD6348, in comparison to other S-Class-II sorbents such as GE351-SG2-39, are summarized in Table 4. The $CO_2$ desorption can be fully achieved at a desorption temperature of 90°C or below (Figure 31).

Grafting of dichlorourethane onto mesoporous silica MCM-41.

1.024g of MCM-41 mesoporous silica and dichlorourethane (1.501g, 4.49 mmol) were combined with 10 mL of toluene and a magnetic stir bar in a 20 mL scintillation vial. 100 μL of water was added and the mixture was vortexed to homogenize before stirring in a hot block maintained at 90°C for 12 hours. The resulting slurry was cooled to ambient temperature and transferred to a 50 mL centrifuge tube along with ~2-3 mL of toluene used to rinse the vial. The mixture was centrifuged for 3 min at 4000 rpm. The supernatant was decanted and the remaining solid was washed with 10 mL toluene and centrifuged as above. This process was repeated two more times. The resulting solid was dried in a vacuum oven at 90°C overnight to yield 1.7106g of a white powder. TGA analysis (Figure 32; 5°C ramp to 90 °C, hold for 60 min, 10°C/min ramp to 800°C) showed a weight loss of 31.414 wt% after the 60 min hold at 90°C indicating successful grafting with a total organic content of 31.414 wt%.

GE436-MD6349 sorbent (Sorbent material classification: S-Class-II).

0.7514g of dichlorourethane grafted MCM-41 mesoporous silica and pentaethylenehexamine (PEHA; 3.7293g, 16.049 mmol, 10.5 equivalents per Cl based on 31.414 wt% dichlorourethane) were combined with a magnetic stir bar in a 20 mL scintillation vial. The vial was briefly vortexed to homogenize before stirring in a hot block maintained at 90°C for 4

days. The resulting slurry was cooled to ambient temperature and transferred to a 50 mL centrifuge tube along with ~10 mL of methanol used to rinse the vial. The mixture was centrifuged for 4 min at 5000 rpm. The supernatant was decanted and the remaining solid was washed with 10 mL methanol and centrifuged as above. This process was repeated two more times. The resulting solid was dried in a vacuum oven at 90°C for 6 hours to yield 0.7202g of a white powder. TGA analysis (Figure 33; 5°C ramp to 90 °C, hold for 60 min, 10°C/min ramp to 800°C) showed a weight loss of 34.398 wt% after the 60 min hold at 90°C indicating a total organic content of 34.398 wt%.

Example 3I. Sorbent materials including a porous polymer support.

General method for the synthesis of porous organic polymer.

A three-neck round-bottom flask was charged with a 1:1 ratio of tri- and/or bis-chloro monomers plus anhydrous $FeCl_3$ catalyst in dichloroethane to promote Friedel Crafts Alkylation and formation of porous polymers. Either 1,3,5-trichloromethylbenzene (TCB), 4,4-bis(chloromethyl)-1,1-biphenyl (BCMBP) or different ratios of both can be used to promote homopolymerization or heteropolymerization to vary both chloride content and surface area/pore size. To form the heteropolymers, ratios of 2:1, 1:2 and 1:4 BCMBP: TCB were used. The monomers were dissolved in dichloroethane under $N_2$ followed by fast addition of anhydrous $FeCl_3$ and vigorous stirring. The reaction mixture was heated to 45 °C for one hour and then refluxed at 80 °C overnight under $N_2$. Upon cooling, the precipitate was filtered and thrice washed with THF and then methanol to remove residual starting materials. The powder was placed in an 80 °C vacuum oven overnight to fully remove the solvent.

General method for the synthesis of porous organic polymer with amine.

A porous polymer with 4-18% chloride via elemental analysis was added to a round bottom flask and slurried in toluene. An excess of 9 eq. of amine based on the chloride content was added to the reaction. The reaction mixture was refluxed at 90 °C overnight under $N_2$. Upon cooling, the slurry was filtered and washed once with toluene and twice with methanol to remove residual amine and HCl salt. The powder was placed in a 90 °C vacuum oven overnight to fully remove the solvent. Elemental analysis (CHN and Cl combustion technique) was utilized to analyze amine content and residual unreacted chloride.

Synthesis of 1:4 PBTP A3147

To a 1 L, 3-neck round bottom flask, add 24 mmol of 1,3,5-trichloromethylbenzene (TCB, 5.364 g) and 6 mmol of 4,4-bis(chloromethyl)-1,1-biphenyl (BCMBP, 1.51 g) and dissolve in 390 mL dichloroethane under $N_2$. Quickly add 30 mmol (4.866 g) of anhydrous $FeCl_3$ under $N_2$ and stir vigorously. Heat to 45 °C for one hour, then ramp temperature to 80 °C and reflux overnight. Wash thrice with 300 mL THF and thrice with 300 mL MeOH until filtrate is clear. Dry in vacuum oven at 80 °C for 8-12 hours to produce 5.535 g of a crosslinked porous polymer 1:4 PBTP. Elemental analysis composition is 76.03 % C, 4.28% H, and 15.54% Cl.

Synthesis of GE362-A3150 (organic support with covalently bonded amines) (Sorbent material classification: S-Class-II).

To a 500 mL round bottom flask, 3 g of porous polymer 1:4 PBTP was added and slurried in 200 mL toluene. Excess spermine, 9 eq. based on the expected Cl content of 14%, was added to the slurry (0.108 mol, 21.85 g). The reaction was refluxed at 90 °C overnight under $N_2$. The sorbent was washed once with toluene and thrice with methanol. It was dried in a vacuum oven at 80 °C for 16 hours to produce 3.78 g of GE362. Elemental analysis composition is 70.43 % C, 6.61% H, 7.25% N and 4.54% Cl.

Synthesis of GE389-A3161B (organic support with covalently bonded linear amines and additional impregnated amines and cross-linking agent using sequential synthesis) (Sorbent material classification: S-Class-II+1).

To a 20 mL scintillation vial, 0.100 g of GE362-A3150 comprised of spermine+1:4 PBTP was slurried in 5 mL methanol. Next, 2 eq. of 1,5-hexadiene diepoxide (0.122 mmol, 0.014 g) was added to the vial and stirred for 30 minutes. Then, 100 wt % of pentaethylenehexamine (PEHA, 0.100 g) was added to the vial and the slurry was stirred for 16 hours at room temperature. The methanol was removed via rotary evaporator and the material was dried in a vacuum oven for 8 hours at 90 °C to obtain 185 mg of GE389. Elemental analysis composition is 65.01 % C, 7.58% H and 16.33% N.

Adsorption performances of $CO_2$ and $H_2O$ measured at the DAC-relevant co-adsorption condition (25°C, 50% RH and 400vppm $CO_2$) for GE389-A3161B are summarized in Table 5. Approximately 70% of $CO_2$ desorption can be achieved at a desorption temperature of 80°C or below (Figure 34).

Synthesis of GE400-A3165C (inorganic particle (e.g., alumina) with covalently bonded linear amines and additional impregnated amines and cross-linking agent using 1-pot synthesis) (Sorbent material classification: S-Class-3).

To a 20 mL scintillation vial, 0.100 g of GE362-A3150 comprised of spermine+1:4 PBTP was slurried in 5 mL methanol. Next, 4 eq. of 1,5-hexadiene diepoxide (0.244 mmol, 0.028 g) and 100 wt % of pentaethylenehexamine (PEHA, 0.100 g) was added to the vial and the slurry was stirred for 16 hours at room temperature. The methanol was removed via

rotary evaporator and the material was dried in a vacuum oven for 8 hours at 90 °C to obtain 300 mg of GE400. Elemental analysis composition is 60.53 % C, 8.01% H and 19.17% N.

Adsorption performances of $CO_2$ and $H_2O$ measured at the DAC-relevant co-adsorption condition (25°C, 50% RH and 400vppm $CO_2$) for GE400-A3165C are summarized in Table 5. Approximately 70% of $CO_2$ desorption can be achieved at a desorption temperature of 80°C or below (Figure 35).

Synthesis of GE405-A3168C (inorganic particle (e.g., alumina with covalently bonded linear amines and additional impregnated polymeric amines) (Sorbent material classification: S-Class-II + I).

To a 20 mL scintillation vial, 0.150 g of GE362-A3150 comprised of spermine+1:4 PBTP was slurried in 5 mL methanol. Next, 50 wt % of 10% poly(allylamine) aqueous solution (65,000 g/mol PAA, 0.750 mL) was added to the vial and stirred for 24 hours at room temperature. The methanol/water was removed via rotary evaporator and the material was dried in a vacuum oven for 16 hours at 100 °C to obtain 236.6 mg of GE405. Elemental analysis composition is 66.22 % C, 8.31% H and 12.32% N.

Adsorption performances of $CO_2$ and $H_2O$ measured at the DAC-relevant co-adsorption condition (25°C, 50% RH and 400vppm $CO_2$) for GE405-A3168C are summarized in Table 5. Approximately 70% of $CO_2$ desorption can be achieved at a desorption temperature of 80°C or below (Figure 36).

Table 5. Exemplary sorbent materials comprising a porous polymer support and their adsorption performances of $CO_2$ and $H_2O$ measured at the DAC-relevant co-adsorption condition (25°C, 50%RH and 400vppm $CO_2$).

| Sorbent name | Sorbent Classification | Covalently bonded amine | Impregnated amines | Cross-linking agent | $CO_2$ uptake ($gCO_2$/gSorbent) | $H_2O$ uptake ($gH_2O$/gSorbent) |
|---|---|---|---|---|---|---|
| GE362-A3150 | S-Class-II | Spermine | n/a | n/a | 0.013 | 0.278 |
| GE389-A3161B | S-Class-III | Spermine | PEHA | Yes | 0.065 | 0.443 |
| GE400-A3165C | S-Class-III | Spermine | PEHA | Yes | 0.087 | 0.41 |
| GE405-A3168C | S-Class-II + I | Spermine | PEHA | n/a | 0.0514 | 0.3263 |

Example 4. Making sorbent composite coatings using a sequential method.

General procedure of making sorbent composite coatings using sequential method.

The functionalized sorbent material may be in any form including, but not limited to, powder, composites mixed with binders, films or coating, packed bed, columns, etc. The functionalized sorbent may be present as a film or coating further including at least one binder. The functionalized sorbent may be present as a film or coating further including at least one polymeric binder and at least one additive including, but not limited to, clay particles, silica particles, alumina particles etc. The functionalized sorbent may be present as a film or coating prepared using an organic solvent including, but not limited to, xylene, p-xylene, o-xylene, ketones, ethanol, isopropyl alcohol etc. The functionalized sorbent may be present as a film or coating prepared using water.

As one example, a coating of sorbent-containing film may be prepared by: (1) creating a slurry formulation including a solvent, a functionalized sorbent, and a binder. The solvent may be either aqueous or organic or a mixture with any ratios. The binder can generally be a polymer or precursors including a polymer, mixture of monomers, etc., that cross-link upon curing; (2) optionally, additional additives may be incorporated to improve slurry rheology and coating quality as needed. The additives need to be compatible with the solvent and the functionalized sorbent to facilitate the linkage of sorbent particles and even dispersion through the solvent; (3) applying the slurry onto a substrate by a coating technique such as, but not limited to, spray coating, dip coating, flow coating, spin coating, drop coating etc.; (4) drying to remove solvents, and optionally (5) curing under heat or irradiation with UV light etc. Exemplary sorbent composites having different composite classifications are summarized in Table 6.

Example 4A. Aqueous sorbent composites including impregnated non-covalently bonded amines.

GE321-composite using Westcoat EC-11 as binder (Sorbent composite classification: C-Class-1).

Westcoat EC-11, a two-part water-based epoxy, was used as the binder material. 72 mg of Westcoat EC-11-part A, i.e. precursor having epoxy groups, was mixed with 36 mg of Westcoat EC-11-part B, i.e. a mixed amine-containing precursors as a curing agent, in 1 g of water. 0.5 g of GE321-184B was added and the slurry was sonicated for 5 min. The slurry was drop cast on 2" × 2" aluminum coupon. The coupon (referred to as GE321-composite) was cured under ambient conditions for 1 day and then dried in the oven at 90°C for 1 hour. Note that, the ratio of Westcoat EC-11-part A to Westcoat

EC-11-part B is fixed at 2 to 1 according to the material specification. The ratio of Westcoat EC-11-part A to Westcoat EC-11-part B can be adjusted to optimize coating properties such as the degree of cross-linking. For instance, the ratio of Westcoat EC-11-part A to Westcoat EC-11-part B can be increased to greater than 2 to 1 so that a portion of Westcoat EC-11-part A, the precursor having epoxy groups, can cross-link with the amine present in the sorbent powder such as GE321-184B in this example.

Adsorption performances of $CO_2$ and $H_2O$, measured at the DAC-relevant co-adsorption condition (25°C, 50% RH and 400vppm $CO_2$) for GE321-composite, are summarized in Table 6. Approximately 80% of $CO_2$ desorption can be achieved at a desorption temperature of 100°C or below (Figure 37).

Example 4B. Aqueous coating of sorbent including covalently bonded amines.

GE351-composite using Westcoat EC-11 as binder (Sorbent composite classification: C-Class-II).

Westcoat EC-11, a two-part water-based epoxy, was used as the binder material. 72 mg of Westcoat EC-11-part A was mixed with 36 mg of Westcoat EC-11-part B in 1 g of water. 0.5 g of GE351 was added and the slurry was sonicated for 5 min. The slurry was drop cast on 2" × 2" aluminum coupon. The coupon was cured under ambient conditions for 1 day and then dried in the oven at 90°C for 1 hour.

Example 4C. Aqueous coating of sorbent including covalently bonded amines and impregnated non-covalently bonded amines.

GE409-composite using Westcoat EC-11 as binder (Sorbent composite classification: C-Class-II+1).

Westcoat EC-11, a two-part water-based epoxy, was used as the binder material. 72 mg of Westcoat EC-11-part A was mixed with 36 mg of Westcoat EC-11-part B in 1 g of water. 0.5 g of GE409 was added and the slurry was sonicated for 5 min. The slurry was drop cast on 2" × 2" aluminum coupon. The coupon (referred to as GE409-composite) was cured under ambient conditions for 1 day and then dried in the oven at 90°C for 1 hour. The coating density was measured at 0.6 g/$cm^3$. Note that, the ratio of Westcoat EC-11-part A to Westcoat EC-11-part B is fixed at 2 to 1 according to the material specification. The ratio of Westcoat EC-11-part A to Westcoat EC-11-part B can be adjusted to optimize coating properties such as the degree of cross-linking. For instance, the ratio of Westcoat EC-11-part A to Westcoat EC-11-part B can be increased to greater than 2 to 1 so that a portion of Westcoat EC-11-part A, the precursor having epoxy groups, can cross-link with the amine present in the sorbent powder such as GE409 in this example.

Adsorption performances of $CO_2$ and $H_2O$ measured at the DAC-relevant co-adsorption condition (25°C, 50% RH and 400vppm $CO_2$) for GE409-composite are summarized in Table 6. Approximately 90% of $CO_2$ desorption can be achieved at a desorption temperature of 80°C or below (Figure 38).

GE409-composite using PVAc/ PVA as binder.

Polyvinyl acetate (PVAc) and polyvinyl alcohol (PVA) were used as polymer binder materials. 0.235 g of 21% solid PVAc/PVA emulsion was mixed with 1 g of water and 5 mg of Agitan 351 that serves as a defoamer. 0.5 g of GE409 was added later and the slurry was sonicated for 5 min. The slurry was drop cast on 2" × 2" aluminum coupon. The coupon was air dried at room temperature for 1 day and then dried in the oven at 90°C for 1 hour. The coating density was measured at 0.53 g/$cm^3$.

Example 4D. Aqueous coating of sorbent comprising covalently bonded amines, additional impregnated amines and cross-linking reagent.

GE417-composite using Westcoat EC-11 as binder (Sorbent composite classification: C-Class-3).

Westcoat EC-11, a two-part water-based epoxy, was used as the binder material. 72 mg of Westcoat EC-11-part A was mixed with 36 mg of Westcoat EC-11-part B in 0.5 g of water. 0.5 g of GE417 was added and the slurry was sonicated for 5 min. The slurry was drop cast on 2" × 2" aluminum coupon. The coupon (referred to as GE417-composite) was dried under ambient conditions for 2 days to cure and then dried in the oven at 90°C for 1 hour. The coating density was measured at 0.93 g/$cm^3$. Note that, the ratio of Westcoat EC-11-part A to Westcoat EC-11-part B is fixed at 2 to 1 according to the material specification. The ratio of Westcoat EC-11-part A to Westcoat EC-11-part B can be adjusted to optimize coating properties such as the degree of cross-linking. For instance, the ratio of Westcoat EC-11-part A to Westcoat EC-11-part B can be increased to greater than 2 to 1 so that a portion of Westcoat EC-11-part A, the precursor having epoxy groups, can cross-link with the amine present in the sorbent powder such as GE417 in this example.

Adsorption performances of $CO_2$ and $H_2O$, measured at the DAC-relevant co-adsorption condition (25°C, 50% RH and 400vppm $CO_2$) for GE417-composite, are summarized in Table 6. Over 70% of $CO_2$ desorption can be achieved at a desorption temperature of 80°C or below (Figure 39).

GE417-composite using PVAc/ PVA as binder.

Polyvinyl acetate (PVAc) and polyvinyl alcohol (PVA) were used as polymer binder materials. 0.235 g of 21% solid Polyvinyl acetate/ polyvinyl alcohol emulsion was mixed with 1 g of water and 5 mg of Agitan 351 (defoamer). 0.5 g of GE417 was added later and the slurry was sonicated for 5 min. The slurry was drop casted on 2" × 2" aluminum coupon.

The coupon was air dried at RT for 1 day and then dried in the oven at 90°C for 1 hour. The coating density was measured at 0.94 g/cm$^3$.

Table 6. Exemplary sorbent composites and their adsorption performances of $CO_2$ and $H_2O$ measured at the DAC-relevant co-adsorption condition (25°C, 50%RH and 400vppm $CO_2$).

| Composite | Composite Classification | Covalently bonded amine | Impregnated amines | Cross-linking agent | $CO_2$ uptake ($gCO_2$/gSorbent) | $H_2O$ uptake ($gH_2O$/gSorbent) |
|---|---|---|---|---|---|---|
| GE321-composite | C-Class-I | n/a | EB:spermine | n/a | 0.0831 | 0.2495 |
| GE351-composite | C-Class-II | Spermine | n/a | n/a | 0.0404 | 0.254 |
| GE409-composite | C-Class-II+I | Spermine | PEHA | n/a | 0.0927 | 0.3301 |
| GE417-composite | C-Class-III | Spermine | PEHA | Yes | 0.03 | 0.3756 |

Example 5. Making sorbent composite coatings using 1-pot method.

As one example, a sorbent composite coating can be prepared by: (1) creating a slurry formulation including a solvent, a binder, a support with amines or free of any amines, and at least one amine material. The solvent may be either aqueous or organic or a mixture with any ratios. The binder material may generally be a polymer or precursors including a polymer, mixture of monomers etc., that cross-link upon curing; (2) optionally, additional additives may be incorporated to improve slurry rheology and coating quality as needed. The additives need to be compatible with the solvent and the functionalized sorbent to facilitate the linkage of sorbent particles and even dispersion through the solvent; (3) applying the slurry onto a substrate by a coating technique such as, but not limited to, spray coating, dip coating, flow coating, spin coating, drop coating etc.; (4) drying to remove solvents; and optionally (5) curing under heat or irradiation with UV light etc. Shown in Table 7 are exemplary sorbent composites prepared using the 1-pot method and their corresponding adsorption performances.

GE423-composite (Example of aqueous coating of sorbent composite comprising non-covalently bonded small molecular amines using 1-pot method) (Sorbent composite classification: C-Class-1).

0.5 g of 0.25Eb-spermine (EB: Spermine) was dissolved in 1 g of water. To this solution, 0.5 g of $\gamma$-$Al_2O_3$ was added, and the mixture was stirred at room temperature for 2 hours. In another vial, 144 mg of Westcoat EC-11-part A was mixed with 72 mg of Westcoat EC-11-part B in 1 g of water with 10 mg of tergitol 15-S-7, and 5 mg of Agitan 351. Both tergitol and Agitan are used to improve slurry rheology. The contents of the two vials were mixed and sonicated for 5 minutes to form the coating slurry. The slurry was later drop cast on 2" × 2" aluminum coupons to produce a sorbent composite film (sample ID: MCF264B) and 2" × 2" P413 heresite coated aluminum coupon to produce another sorbent composite film (sample ID: MCF264A). The films were cured under ambient conditions for 24 hours then dried in the oven at 90°C for 1 hour. Note that, the ratio of Westcoat EC-11-part A to Westcoat EC-11-part B is fixed at 2 to 1 according to the material specification. The ratio of Westcoat EC-11-part A to Westcoat EC-11-part B can be adjusted to optimize coating properties such as the degree of cross-linking. For instance, the ratio of Westcoat EC-11-part A to Westcoat EC-11-part B can be increased to greater than 2 to 1 so that a portion of Westcoat EC-11-part A, the precursor having epoxy groups, can cross-link with the amine used in this example, e.g., EB:spermine.

Adsorption performances of $CO_2$ and $H_2O$, measured at the DAC-relevant co-adsorption condition (25°C, 50% RH and 400vppm $CO_2$) for GE423-composite, are summarized in Table 6. Approximately 80% of $CO_2$ desorption can be achieved at a desorption temperature of 100°C or below (Figure 40).

GE437-composite (Example of aqueous coating of sorbent composite comprising non-covalently bonded polymeric amines using 1-pot synthesis) (Sorbent composite classification: C-Class-1).

0.25 g of $\gamma$-$Al_2O_3$ was added to 1.6 g of 15 wt% poly(allylamine) (PAA) aqueous solution and the mixture was stirred at room temperature for 2 hours. In another vial, 72 mg of Westcoat EC-11-part A was mixed with 36 mg of Westcoat EC-11-part B in 0.5 g of water. The contents of the two vials were mixed and sonicated for 5 minutes to form a coating slurry. The slurry was dropcast on 2" × 2" aluminum coupons to produce a sorbent composite film (sample ID: GE437_F01-MCF278). The film was cured under ambient conditions for 24 hours followed by drying in the oven at 90°C for 1 hour. Note that, the ratio of Westcoat EC-11-part A to Westcoat EC-11-part B is fixed at 2 to 1 according to the material specification. The ratio of Westcoat EC-11-part A to Westcoat EC-11-part B can be adjusted to optimize coating properties such as the

degree of cross-linking. For instance, the ratio of Westcoat EC-11-part A to Westcoat EC-11-part B can be increased to greater than 2 to 1 so that a portion of Westcoat EC-11-part A, the precursor having epoxy groups, can cross-link with the amine used in this example, e.g., PAA.

Adsorption performances of $CO_2$ and $H_2O$ measured at the DAC-relevant co-adsorption condition (25°C, 50% RH and 400vppm $CO_2$) for GE437-composite are summarized in Table 6. Approximately 80% of $CO_2$ desorption can be achieved at a desorption temperature of 100°C or below (Figure 41).

GE455-composite (Example of aqueous coating of sorbent composite comprising non-covalently bonded amines using 1-pot synthesis) (Sorbent composite classification: C-Class-1).

0.25 g of 0.25Eb-Spermine was dissolved in 1.5 g of water. 0.25 g of $\gamma$-$Al_2O_3$ was added to this solution, and the mixture was stirred at room temperature for 2 hours. To this mixture, 144 mg of Westcoat EC-11-part A was mixed with 72 mg of Westcoat EC-11-part B was added directly. The slurry was sonicated for 5 min before drop casting it on 2" × 2" aluminum coupons to produce a sorbent composite film (sample ID: GE455_F01-MCF286). The film was cured under ambient conditions for 24 hours followed by drying in the oven at 90°C for 1 hour. The sample is similar to GE423-composite with an increased binder loading of 18% vs 9% for GE423-composite and the absence of additives. Note that, the ratio of Westcoat EC-11-part A to Westcoat EC-11-part B is fixed at 2 to 1 according to the material specification. The ratio of Westcoat EC-11-part A to Westcoat EC-11-part B can be adjusted to optimize coating properties such as the degree of cross-linking. For instance, the ratio of Westcoat EC-11-part A to Westcoat EC-11-part B can be increased to greater than 2 to 1 so that a portion of Westcoat EC-11-part A, the precursor having epoxy groups, can cross-link with the amine used in this example, e.g., EB:spermine.

GE456-composite (Example of aqueous coating of sorbent composite comprising non-covalently bonded amines using 1-pot synthesis) (Sorbent composite classification: C-Class-1).

0.25 g of pentaethylenehexamine (PEHA) was dissolved in 1.4 g of water. 0.25 g of $\gamma$-$Al_2O_3$ was added to this solution, and the mixture was stirred at room temperature for 2 hours. 72 mg of Westcoat EC-11-part A was mixed with 36 mg of Westcoat EC-11-part B was added directly to the previous mixture. The slurry was sonicated for 5 min before drop casting it on 2" × 2" aluminum coupons to produce a sorbent composite film (sample ID: GE456_F01-MCF287). The film was cured under ambient conditions for 24 hours followed by drying in the oven at 90°C for 1 hour. The GE456-composite has a binder loading of 9% and free of slurry additives. Note that, the ratio of Westcoat EC-11-part A to Westcoat EC-11-part B is fixed at 2 to 1 according to the material specification. The ratio of Westcoat EC-11-part A to Westcoat EC-11-part B can be adjusted to optimize coating properties such as the degree of cross-linking. For instance, the ratio of Westcoat EC-11-part A to Westcoat EC-11-part B can be increased to greater than 2 to 1 so that a portion of Westcoat EC-11-part A, the precursor having epoxy groups, can cross-link with the amine used in this example, e.g., PEHA.

GE457-composite (Example of aqueous coating of sorbent composite comprising non-covalently bonded amines using 1-pot synthesis) (Sorbent composite classification: C-Class-1).

0.25 g of 0.25EB-PEHA (epoxide modified PEHA) was dissolved in 1.5 g of water. 0.25 g of $\gamma$-$Al_2O_3$ was added to this solution, and the mixture was stirred at room temperature for 2 hours. 72 mg of Westcoat EC-11-part A mixed with 36 mg of Westcoat EC-11-part B was added directly to this mixture. The slurry was sonicated for 5 min before drop casting it on 2" × 2" aluminum coupons to produce a sorbent composite film (sample ID: GE457_F01-MCF289). The film was cured under ambient conditions for 24 hours followed by drying in the oven at 90°C for 1 hour. The GE457-composite has a binder loading of 9% and free of slurry additives. Note that, the ratio of Westcoat EC-11-part A to Westcoat EC-11-part B is fixed at 2 to 1 according to the material specification. The ratio of Westcoat EC-11-part A to Westcoat EC-11-part B can be adjusted to optimize coating properties such as the degree of cross-linking. For instance, the ratio of Westcoat EC-11-part A to Westcoat EC-11-part B can be increased to greater than 2 to 1 so that a portion of Westcoat EC-11-part A, the precursor having epoxy groups, can cross-link with the amine used in this example, e.g., EB:PEHA.

Embodiment of aqueous coating of sorbent composite comprising non-covalently bonded amines using 1-pot synthesis (Sorbent composite classification: C-Class-II).

As one example, a sorbent composite coating may be prepared by: (1) creating a slurry formulation including a solvent, a binder, a support having only covalently bonded amines, such as GE351, and at least one amine material, such as spermine. The solvent may be either aqueous or organic or a mixture with any ratios. The binder material can generally be a polymer or precursors including a polymer, mixture of monomers etc., that cross-link upon curing; (2) optionally, additional additives may be incorporated to improve slurry rheology and coating quality as needed. The additives need to be compatible with the solvent and the functionalized sorbent to facilitate the linkage of sorbent particles and even dispersion through the solvent; (3) applying the slurry onto a substrate by a coating technique, such as but not limited to, spray coating, dip coating, flow coating, spin coating, drop coating etc.; (4) drying to remove solvents; and optionally (5) curing under heat or irradiation with UV light etc.

Table 7. Exemplary sorbent composites prepared using 1-pot method and their adsorption performances of $CO_2$ and $H_2O$ measured at the DAC-relevant co-adsorption condition (25°C, 50%RH and 400vppm $CO_2$).

| Composite | Classification | Covalently bonded amine | Impregnated amines | Cross-linking agent | $CO_2$ uptake ($gCO_2$/gSorbent) | $H_2O$ uptake ($gH_2O$/gSorbent) |
|---|---|---|---|---|---|---|
| GE423-composite | C-Class-I | n/a | EB:Spermine | n/a | 0.0833 | 0.2532 |
| GE437-composite | C-Class-I | n/a | PAA | n/a | 0.021 | 0.3075 |

Example 6. General procedure for making sorbent composite coatings comprising different sorbent materials.

A sorbent composite coating may include one type of sorbent material. As described in more detail herein, the sorbent material generally includes materials capable of binding certain fluids, such as carbon dioxide ($CO_2$), water ($H_2O$), oxygen ($O_2$), or other gas molecules that may be present in air or form as result of a decomposition reaction (e.g., combustion). For example, the sorbent materials may include metal organic frameworks (MOFs) and/or covalent-organic frameworks (COFs). In some embodiments, the sorbent materials may include polymeric resins, silicas, zeolites, and the other materials capable of capturing fluids as discussed herein. Exemplary sorbent materials further include but not limited to amine functionalized mesoporous inorganic supports such as alumina and silica, amine functionalized mesoporous polymer supports, amine functionalized MOFs, amine functionalized COFs, and amine functionalized polymer resins.

A sorbent composite coating may instead include at least two different types of sorbent materials. Suitable sorbent materials may include MOFs, COFs, polymeric resins, silicas, zeolites, amine functionalized mesoporous inorganic supports, such as alumina and silica, amine functionalized mesoporous polymer supports, amine functionalized MOFs, amine functionalized COFs and amine functionalized polymer resins etc.

Example 7. Adsorption and desorption cyclic stability.

Adsorption and desorption cyclic stability of sorbent materials and sorbent composites were studied using the test rig. A typical procedure of cyclic stability test includes the following: (1) regenerating or activating the sample of interest at a specified regeneration temperature, (2) cooling down to a specified adsorption temperature (either 25C or 30C) with nitrogen ($N_2$) flow, (3) introducing target gas to mimic DAC-relevant conditions (50%RH at the corresponding adsorption temperature and 400vppm $CO_2$ balanced with $N_2$), (4) performing adsorption for 30mins, (5) stopping the target gas and switching to $N_2$ flow, (6) raising temperature to the specified regeneration temperature under $N_2$ flow, (7) performing desorption for 30mins, which completes one cycle; and (8) optionally repeating steps 2-7) for additional cycles. Cyclic stability for exemplary sorbent materials and sorbent composites are summarized in Table 8.

Table 8. Cyclic stability for exemplary sorbent materials and sorbent composites (negative changes indicating degradation).

| Sorbent name | Regeneration temperature | Sorbent Classification | Covalently bonded amine | Impregnated amines | Cross-linking agent | Change in $CO_2$ uptake (%/cycle) | Change in $H_2O$ uptake (%/cycle) |
|---|---|---|---|---|---|---|---|
| GE321 | 90°C | S-Class-I | n/a | EB: spermine | n/a | 0.042 | (-0.894) |
| GE395-SG2-44C | 90°C | S-Class-IA | n/a | Spermine | n/a | (-0.28) | (-0.411) |
| GE351-SG2-39 | 120°C | S-Class-II | PCPT | Spermine | n/a | 2.177 | 0.067 |
| GE432 | 90°C | S-Class-II | PCPT | Spermine | n/a | 0.614 | 0.927 |
| GE435-MD6348 | 90°C | S-Class-II | dichlorourethane | PEHA | n/a | (-0.014) | (-0.549) |
| GE409-A3169D | 90°C | S-Class-II + I | Spermine | PEHA | n/a | (-0.01) | (-0.01) |

(continued)

| Sorbent name | Regeneration temperature | Sorbent Classification | Covalently bonded amine | Impregnated amines | Cross-linking agent | Change in $CO_2$ uptake (%/cycle) | Change in $H_2O$ uptake (%/cycle) |
|---|---|---|---|---|---|---|---|
| GE411-A3170B | 90°C | S-Class-III | Spermine | PEHA | Yes (1-pot) | 0.061 | (-0.384) |
| GE417-A3176B | 90°C | S-Class-III | Spermine | PEHA | Yes | (-0.012) | (-0.333) |
| GE400-A3165C | 120°C | S-Class-III | Spermine | PEHA | Yes | (-0.01) | (-0.01) |
| GE405-A3168C | 90°C | S-Class-II + I | Spermine | PEHA | n/a | (-009) | 0.853 |
| GE321-composite | 120°C | C-Class-I | n/a | EB: spermine | n/a | (-0.69) | (-0.161) |
| GE321-composite | 90°C | C-Class-I | n/a | EB: spermine | n/a | 0.462 | (-0.081) |
| GE409-composite | 90°C | C-Class-II+I | Spermine | PEHA | n/a | 0.693 | -0.184 |
| GE423-composite | 90°C | C-Class-I | n/a | EB: spermine | n/a | 0.228 | -0.262 |
| GE437-composite | 100°C | C-Class-I | n/a | PAA | n/a | (-0.574) | -0.356 |

Example 8. Sorbent composites including mixed sorbent materials.

This example relates to sorbent composites including two or more types of sorbent materials, in addition to binder materials.

The sorbent composites may include at least one MOF based sorbent and at least one amine-functionalized inorganic support such as alumina, silica, and zirconia etc. The sorbent composites may include at least one MOF based sorbent and at least one amine-functionalized organic support such as porous polymers, polymer resins and cross-linked thermoset polymers etc. The sorbent composites may include at least one amine-functionalized inorganic support such as alumina, silica, and zirconia etc., and at least one amine-functionalized organic support such as porous polymers, polymer resins and cross-linked thermoset polymers etc. The sorbent composites may include at least one amine-functionalized support selected from one sorbent classification as defined in Table 1 and at least one amine-functionalized support selected from a different sorbent classification in Table 1. For example, the sorbent composites may include at least one amine-functionalized support (sorbent classification of S-Class-II) such as alumina, silica, and zirconia etc., having covalently bonded amines such as GE351 and at least one amine-functionalized support having impregnated and not covalently-bonded amines (sorbent classification of S-Class-I) such as GE321.

Using sorbent composites comprising two or more types of sorbent materials may allow tailored compositions to achieve different properties, such as adjusting $CO_2$ capture kinetics, and/or adjusting $H_2O$ uptake amount or $H_2O$ uptake kinetics because adsorption and desorption of $H_2O$ would lead to undesired system energy consumption.

In this example, an amine functionalized MOF-based sorbent, GE292, which was disclosed in an earlier application (WO 2024/123909, the entire contents of which are hereby incorporated by reference herein), is used as an example for illustration purpose. Sorbent composites can be made in similar ways as described herein.

Table 9. Exemplary sorbent composites having one or two sorbent materials.

| Sample ID | MCF180A | MCF207 | MCF 194 | MCF196 |
|---|---|---|---|---|
| Binder-1 | Butvar B98 | Butvar B98 | Westcoat EC-11 | Butvar B98 |
| Binder-1 loading | 4.5% | 4.5% | 10% | 4.5% |
| Binder-2 | Kaolin clay particle | n/a | n/a | n/a |
| Binder-2 loading | 4.5% | 0% | 0% | 0% |
| Sorbent-1 | GE292-A388 | GE292-A388 | GE321-SG2-8A | GE292-A388 |
| Sorbent-1 type | Amine functionalized MOF | Amine functionalized MOF | Amine functionalized alumina | Amine functionalized MOF |
| Sorbent-1 loading | 91% | 91% | 90% | 45.5% |
| Sorbent-2 | n/a | GE328 | n/a | GE321-SG2-8A |
| Sorbent-2 type | n/a | Amine functionalized polymer | n/a | Amine functionalized alumina |
| Sorbent-2 loading | 0% | 4.5% | 0% | 45.5% |
| Solvent used for coating | ethanol | ethanol | water | ethanol |
| $CO_2$ Capacity ($gCO_2$/gSorbent) | 10.20% | 10.20% | 7.70% | 3.90% |
| $H_2O$ Capacity ($gH_2O$/gSorbent) | 30% | 29.60% | 19.80% | 13.10% |
| $CO_2$ kinetics | 29.4 | 29.2 | 17.6 | 20.4 |
| $H_2O$ kinetics | 5.1 | 5.5 | 4.3 | 2.5 |

Shown in Table 9 are some exemplary sorbent composites made according to Example 4. Butvar B-98, a thermoplastic polyvinyl butyral (PVB) resin, is used as a polymeric binder. Kaolin clay particles are also optionally used as part of the binder formulation. The sample MCF180A comprises only GE292 with a batch ID of GE292-A388, the amine functionalized MOF sorbent. As illustrated by the sample MCF207, the kaolin clay particles can be replaced with GE328, an amine functionalized polymer sorbent, which leads to better coating quality. Replacing the kaolin clay particles with GE321 (with a batch number of GE321-SG2-8A), an amine functionalized alumina, leads to much reduced $H_2O$ uptake of 13.1% vs 30% for the sample of MCF180A, and increased $CO_2$ kinetics of 20.4min vs 29.4min for the sample of MCF180A.

In another example (Table 10), optimizing the loading of GE321, an amine functionalized alumina, in the composite further comprising GE292 (with a batch ID of GE292-A381) can lead to improved $CO_2$ capacity than composites comprising only individual sorbents.

Table 10. Exemplary sorbent composites based on GE292 and mixture of GE292 and GE321.

| Sample ID | MCF170B | MCF184A |
|---|---|---|
| Binder-1 | Butvar B98 | Butvar B98 |
| Binder-1 loading | 4.5% | 4.5% |
| Binder-2 | Kaolin clay particle | n/a |
| Binder-2 loading | 4.5% | 0% |
| Sorbent-1 | GE292-A381 | GE292-A381 |
| Sorbent-1 type | Amine functionalized MOF | Amine functionalized MOF |
| Sorbent-1 loading | 91% | 91% |
| Sorbent-2 | n/a | GE321-SG2-8A |
| Sorbent-2 type | n/a | Amine functionalized alumina |

(continued)

| Sample ID | MCF170B | MCF184A |
|---|---|---|
| Sorbent-2 loading | 0% | 4.5% |
| Solvent used for coating | ethanol | ethanol |
| $CO_2$ Capacity ($gCO_2$/gSorbent) | 10.00% | 12.50% |
| $H_2O$ Capacity ($gH_2O$/gSorbent) | 24.40% | 29.40% |
| $CO_2$ kinetics | 32.4 | 36.8 |
| $H_2O$ kinetics | 4.7 | 6.4 |

An inorganic support including covalently bonded amines such as GE351 disclosed herein may alternatively be used (Table 11). Varying the loading of GE351, an alumina based sorbent having covalently bonded amines, in the composite further including GE292 (with a batch ID of GE292-B1_B2) can lead to different properties such as reduced $H_2O$ uptake, increased composite densities etc. or cost reduction assuming the alumina-based sorbents such as GE351 has lower cost with respect to MOF-based sorbents such as GE292.

Table 11. Exemplary sorbent composites having one or two sorbent materials with different loadings.

| Sample ID | F01-022724A1 | M002-F01 | M003-F01 | M004-F01 |
|---|---|---|---|---|
| Binder-1 | Butvar B98 | Butvar B98 | Butvar B98 | Butvar B98 |
| Binder-1 loading | 4.5% | 4.5% | 4.0% | 3.0% |
| Binder-2 | Kaolin clay particle | n/a | n/a | n/a |
| Binder-2 loading | 4.5% | 0% | 0% | 0% |
| Sorbent-1 | GE292-B 1-B2 | GE292-B 1-B2 | GE292-B 1-B2 | GE292-B 1-B2 |
| Sorbent-1 type | Amine functionalized MOF | Amine functionalized MOF | Amine functionalized MOF | Amine functionalized MOF |
| Sorbent-1 loading | 91% | 86.7% | 76.8% | 64.7% |
| Sorbent-2 | n/a | GE351 | GE351 | GE351 |
| Sorbent-2 type | n/a | Alumina with covalently bonded amines | Alumina with covalently bonded amines | Alumina with covalently bonded amines |
| Sorbent-2 loading | 0% | 4.3% | 19.2% | 32.3% |
| Solvent used for coating | ethanol | ethanol | ethanol | ethanol |
| $CO_2$ Capacity ($gCO_2$/gSorbent) | 9.9% | 7.8% | 7.7% | 6.2% |
| $H_2O$ Capacity ($gH_2O$/gSorbent) | 26.2% | 27.1% | 26.0% | 21.6% |
| $CO_2$ kinetics | 32.8 | 31.3 | 36.3 | 32.9 |
| $H_2O$ kinetics | 3.6 | 5.7 | 6.3 | 5.5 |
| Composite Density ($g/cm^3$) | 0.24 | 0.25 | 0.26 | 0.30 |

Summary.

Described herein are solid sorbents including amines that are covalently bonded to a porous support. The solid sorbents exhibit high adsorption capacities for carbon dioxide. The solid sorbents exhibit desirable hydrothermal and cycling stability.

Definitions.

As used herein, references to "example embodiment" or "one embodiment" or "some embodiments" of the present disclosure are not intended to be interpreted as excluding the existence of additional embodiments that also incorporate the recited features.

When introducing elements of various embodiments disclosed herein, the articles "a," "an," "the," and "said" are intended to mean that there are one or more of the elements. The terms "comprising," "including," and "having" are intended to be inclusive and mean that there may be additional elements other than the listed elements.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

As used herein, the term "alkyl", used either alone or in compound words such as "haloalkyl" includes functional groups including carbon chains. Alkyl groups may include aliphatic carbon chains, aryl carbon chains, or a combination thereof. An alkyl defined by a number of carbon atoms, e.g., $C_6$ alkyl, is understood to have that many carbon atoms but is not otherwise limited.

As used herein, "amine-containing unit" means a functional group including an amine group, such as a primary amine, secondary amine, tertiary amine, cyclic amine, or combination thereof.

As used herein, "OH-containing unit" means a functional group including a hydroxy (-OH) group. The -OH group may be a primary -OH group in which the -OH group is bound to a primary carbon atom to form a primary alcohol, a secondary -OH group in which the -OH group is bound to a secondary carbon atom to form a secondary alcohol, or a tertiary -OH group in which the -OH group is bound to a tertiary carbon atom to form a tertiary alcohol.

As used herein, the term "halogen" or "halide" either alone or in compound words such as "haloalkyl", includes fluorine, chlorine, bromine or iodine. Further, when used in compound words such as "haloalkyl", said alkyl may be partially or fully substituted with halogen atoms which may be the same or different. Examples of "haloalkyl" include $CF_3$, $ClCH_2$, $CF_3CH_2$, and $CF_3CCl_2$. The term "haloalkoxy", and the like, are defined analogously to the term "haloalkyl". Examples of "haloalkoxy" include $CF_3O$, $CCl_3CH_2O$, $CF_2HCH_2CH_2O$, and $CF_3CH_2O$.

As used herein, the term "polyamine" refers to chemical compounds having at least two amine groups. Polyamines may therefore include diamines, triamines, tetra-amines, penta-amines, hexa-amines, and combinations thereof.

$^1H$ NMR spectra are reported in ppm downfield from tetramethylsilane; "s" means singlet, "d" means doublet, "dd" means doublet of doublets, "ddd" means doublet of doublet of doublets, "t" means triplet, "m" means multiplet, and "br s" means broad singlet.

As used herein, the term "fluid" includes any medium or material that flows, including, but not limited to, air, gas, liquid, and steam.

Although specific features of various embodiments of the invention may be shown in some drawings and not in others, this is for convenience only. In accordance with the principles of the invention, any feature of a drawing may be referenced and/or claimed in combination with any feature of any other drawing.

While the invention has been described in terms of various specific embodiments, those skilled in the art will recognize that the invention can be practiced with modification within the spirit and scope of the claims.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Exemplary Embodiments.

The individual aspects of the present disclosure may be combined in any combination or permutation. Select exemplary combinations, and their respective underlying concepts, are set forth in the below table. Select exemplary embodiments are set forth below the table in clauses. This table and these embodiments are non-limiting.

| Combination | Sorbent or coating | Concept |
|---|---|---|
| Class-II & method-1 | Sorbent | Grafting alumina w/ -Cl first, then reacting amine with -Cl |
| Class-II & method-2 | Sorbent | Reacting -Cl and amine first and then grafting to alumina |
| Class-II & method-3 | Sorbent | Grafting alumina w/ $-NH_2$ first, then reacting(coupler) with multiple-Cl; then reacting 2nd amine with -Cl |
| Class-II+1 | Sorbent | Alumina + grafted amines + impregnated amines |
| Class-3 | Sorbent | Alumina + grafted amines + impregnated amines + x-linker |
| Embodiment-1 & sorbent class-1 (GE321 based) | Coating | Coating with impregnated amines |
| Embodiment-2 & sorbent Class-II (GE351 based) | Coating | Coating with grafted amines |
| Embodiment-3 & sorbent class-3 (GE411 based) | Coating | Alumina + grafted amines + impregnated amines + x-linker |
| Embodiment-4 & sorbent class-II+1 (GE409 based) | Coating | Alumina + grafted amines + impregnated amines |
| Embodiment-5 & sorbent class-1 & II+1 | Coating | Slurry in-situ impregnation |
| Embodiment-5 & mixed sorbents | Coating | MOF & GE321 (impregnation) |
| Embodiment-5 & mixed sorbents | Coating | MOF & GE351 (covalent bond) |

Further aspects of the invention are provided by the subject matter of the following clauses. These clauses may be combined in any permutation or combination, including between embodiments.

Embodiment 1.

1. A functionalized sorbent comprising a sorbent and at least one functionalization ligand covalently bonded to the sorbent,

    wherein the functionalization ligand comprises a first amine-containing unit, and
    wherein the first amine-containing unit is formed by a process comprising amine alkylation between an alkyl halide and a second amine-containing unit.

2. The functionalized sorbent of clause 1, wherein the second amine-containing unit comprises ammonia or one or more amine groups.

3. The functionalized sorbent of clause 1, wherein the alkyl halide comprises at least one halide selected from the group consisting of chloride, bromide, and iodide.

4. The functionalized sorbent of clause 1, wherein the alkyl group of the alkyl halide consists of aliphatic groups.

5. The functionalized sorbent of clause 1, wherein the alkyl group of the alkyl halide comprises at least one aromatic group.

6. The functionalized sorbent of clause 1, wherein the first amine-containing unit comprises at least one primary amine and at least one secondary amine.

7. The functionalized sorbent of clause 1, wherein the first amine-containing unit does not comprise tertiary amines.

8. The functionalized sorbent of clause 1, wherein the first amine-containing unit comprises at least one primary amine, at least one secondary amine, and at least one tertiary amine.

9. The functionalized sorbent of clause 1, wherein the sorbent comprises an inorganic sorbent or a carbon-based sorbent.

10. The functionalized sorbent of clause 1, wherein the sorbent comprises alumina, silica, zirconia, a silicate, carbon powder, graphene, or a combination thereof.

11. The functionalized sorbent of clause 1, wherein the first amine-containing unit is covalently bonded to the sorbent through silanization using at least one alkoxysilane-containing grafter.

12. The functionalized sorbent of clause 1, wherein the sorbent comprises an organic sorbent.

13. The functionalized sorbent of clause 1, wherein the sorbent comprises an organic sorbent comprising at least one oligomer, at least one porous homo-polymer, or at least one porous copolymer.

14. A method of making a functionalized sorbent comprising a sorbent and at least one functionalization ligand covalently bonded to the sorbent, wherein the functionalization ligand comprises a first amine-containing unit, the method comprising:

forming a first mixture comprising:

the sorbent; and

a grafter comprising an alkoxysilane-containing unit and an alkyl halide-containing unit;

reacting the first mixture in a silanization reaction to form a grafted sorbent comprising the grafter attached to the sorbent;

forming a second mixture comprising:

the grafted sorbent; and

a second amine-containing unit; and

reacting the second mixture in an amine alkylation reaction to form the functionalized sorbent.

15. The method of clause 14, wherein the second amine-containing unit comprises a polymer, an oligomer, a small molecule, or a combination thereof.

16. The method of clause 14, wherein the grafter comprises one alkyl halide-containing unit.

17. The method of clause 14, wherein the grafter comprises at least two alkyl halide-containing units.

18. The method of clause 14, wherein the alkyl halide-containing unit comprises at least one halide selected from the group consisting of chloride, bromide, and iodide.

19. The method of clause 14, wherein the alkyl group of the alkyl halide-containing unit consists of aliphatic groups.

20. The method of clause 14, wherein the alkyl group of the alkyl halide-containing unit comprises at least one aromatic group.

21. The method of clause 14, wherein the first amine-containing unit comprises at least one primary amine and at least one secondary amine.

22. The method of clause 14, wherein the first amine-containing unit does not comprise tertiary amines.

23. The method of clause 14, wherein the first amine-containing unit comprises at least one primary amine, at least one secondary amine, and at least one tertiary amine.

24. The method of clause 14, wherein the sorbent comprises an inorganic sorbent or a carbon-based sorbent.

25. The method of clause 14, wherein the sorbent comprises alumina, silica, zirconia, a silicate, carbon powder, graphene, or a combination thereof.

26. A method of making a functionalized sorbent comprising a sorbent and at least one functionalization ligand covalently bonded to the sorbent, wherein the functionalization ligand comprises a first amine-containing unit, the method comprising:

forming a first mixture comprising:

a grafter comprising an alkoxysilane-containing unit and an alkyl halide-containing unit; and

a second amine-containing unit;

reacting the first mixture in an amine alkylation reaction to form a functionalized grafter;

forming a second mixture comprising:

the functionalized grafter; and

the sorbent; and

reacting the second mixture in a silanization reaction to form the functionalized sorbent.

27. The method of clause 26, wherein the second amine-containing unit comprises a polymer, an oligomer, a small molecule, or a combination thereof.

28. The method of clause 26, wherein the grafter comprises one alkyl halide-containing unit.

29. The method of clause 26, wherein the grafter comprises at least two alkyl halide-containing units.

30. The method of clause 26, wherein the alkyl halide-containing unit comprises at least one halide selected from the group consisting of chloride, bromide, and iodide.

31. The method of clause 26, wherein the alkyl group of the alkyl halide-containing unit consists of aliphatic groups.

32. The method of clause 26, wherein the alkyl group of the alkyl halide-containing unit comprises at least one aromatic group.

33. The method of clause 26, wherein the first amine-containing unit comprises at least one primary amine and at least one secondary amine.

34. The method of clause 26, wherein the first amine-containing unit does not comprise tertiary amines.

35. The method of clause 26, wherein the first amine-containing unit comprises at least one primary amine, at least one secondary amine, and at least one tertiary amine.

36. The method of clause 26, wherein the sorbent comprises an inorganic sorbent or a carbon-based sorbent.

37. The method of clause 26, wherein the sorbent comprises alumina, silica, zirconia, a silicate, carbon powder, graphene, or a combination thereof.

38. A method of making a functionalized sorbent comprising a sorbent and at least one functionalization ligand covalently bonded to the sorbent, wherein the functionalization ligand comprises a first amine-containing unit, the

method comprising:

forming a first mixture comprising:

the sorbent; and

a grafter comprising an alkoxysilane-containing unit and a third amine-containing unit;

reacting the first mixture in a silanization reaction to form a grafted sorbent comprising the grafter attached to the sorbent;

forming a second mixture comprising:

the grafted sorbent; and

a coupler comprising at least two alkyl halide-containing units;

reacting the second mixture in an amine alkylation reaction to form a multiplier comprising at least one alkyl halide-containing unit;

forming a third mixture comprising:

the multiplier; and

a second amine-containing unit; and

reacting the third mixture in an amine alkylation reaction to form the functionalized sorbent.

39. The method of clause 38, wherein the coupler comprises a polymer, an oligomer, a small molecule, or a combination thereof.

40. The method of clause 38, wherein the coupler comprises at least two alkyl halide-containing units.

41. The method of clause 38, wherein the coupler comprises at least three alkyl halide-containing units.

42. The method of clause 38, wherein the coupler comprises at least one halide selected from the group consisting of chloride, bromide, and iodide.

43. The method of clause 38, wherein the alkyl groups of the at least two alkyl halide-containing units of the coupler consist of aliphatic groups.

44. The method of clause 38, wherein at least one alkyl group of the at least two alkyl halide-containing units of the coupler comprises at least one aromatic group.

45. The method of clause 38, wherein the first amine-containing unit comprises at least one primary amine and at least one secondary amine.

46. The method of clause 38, wherein the first amine-containing unit does not comprise tertiary amines.

47. The method of clause 38, wherein the first amine-containing unit comprises at least one primary amine, at least one secondary amine, and at least one tertiary amine.

48. The method of clause 38, wherein the sorbent comprises an inorganic sorbent or a carbon-based sorbent.

49. The method of clause 38, wherein the sorbent comprises alumina, silica, zirconia, a silicate, carbon powder, graphene, or a combination thereof.

Embodiment 2.

1. A functionalized sorbent comprising a sorbent, at least one functionalization ligand covalently bonded to the sorbent, and at least one functionalization ligand not covalently bonded to the sorbent,

wherein the functionalization ligand covalently bonded to the sorbent comprises a first amine-containing unit, and

wherein the functionalization ligand not covalently bonded to the sorbent comprises a second amine-containing unit.

2. The functionalized sorbent of clause 1, wherein the first amine-containing unit comprises one or more amine groups.

3. The functionalized sorbent of clause 1, wherein the second amine-containing unit comprises one or more amine groups.

4. The functionalized sorbent of clause 1, wherein the first amine-containing unit is identical to the second amine-containing unit.

5. The functionalized sorbent of clause 1, wherein the first amine-containing unit has a lower molar mass than the second amine-containing unit.

6. The functionalized sorbent of clause 1, wherein the first amine-containing unit has fewer amine groups than the second amine-containing unit.

7. The functionalized sorbent of clause 1, wherein the second amine-containing unit is an oligomer, a polymer, or a mixture thereof.

8. The functionalized sorbent of clause 1, wherein the first amine-containing unit does not comprise tertiary amines.

9. The functionalized sorbent of clause 1, wherein the first amine-containing unit comprises at least one primary amine and at least one secondary amine.

10. The functionalized sorbent of clause 1, wherein the first amine-containing unit comprises at least one primary amine, at least one secondary amine, and at least one tertiary amine.

11. The functionalized sorbent of clause 1, wherein the second amine-containing unit comprises only primary amines.

12. The functionalized sorbent of clause 1, wherein the second amine-containing unit comprises at least one primary amine and at least one secondary amine.

13. The functionalized sorbent of clause 1, wherein the second amine-containing unit comprises at least one primary amine, at least one secondary amine, and at least one tertiary amine.

14. The functionalized sorbent of clause 1, wherein the sorbent comprises an inorganic sorbent, a carbon-based sorbent, an organic support, a polymer support, or a combination thereof.

15. The functionalized sorbent of clause 1, wherein the sorbent comprises alumina, silica, zirconia, a silicate, carbon powder, graphene, or a combination thereof.

16. The functionalized sorbent of clause 1, wherein the first amine-containing unit is covalently bonded to the sorbent through silanization using at least one alkoxysilane-containing grafter.

17. The functionalized sorbent of clause 1, wherein the first amine-containing unit is covalently bonded to the sorbent through silanization using at least one alkoxysilane-containing grafter selected from the group consisting of (p-chloromethyl)phenyltrimethoxysilane (PCPT), (p-chloromethyl)phenyltriethoxysilane, chloropropyltrimethoxysilane,

chloropropyltriethoxysilane, and combinations thereof.

18. The functionalized sorbent of clause 1, wherein the first amine-containing unit is covalently bonded to the sorbent through an amine alkylation using at least one alkyl halide.

19. The functionalized sorbent of clause 1, wherein the first amine-containing unit is covalently bonded to the sorbent through an amine alkylation using at least one alkyl halide comprising a halide selected from the group consisting of chloride, bromide, iodide, and combinations thereof.

20. The functionalized sorbent of clause 1, wherein the sorbent comprises an inorganic sorbent, a carbon-based sorbent, an organic support, a porous polymer support, or a combination thereof.

21. The functionalized sorbent of clause 1, further comprising a cross-linking moiety, wherein the cross-linking moiety can react with the first amine-containing unit or the second amine-containing unit.

22. The functionalized sorbent of clause 21, wherein the second amine-containing unit is at least partially self covalently bonded through the cross-linking moiety.

23. The functionalized sorbent of clause 21, wherein the first amine-containing unit and the second amine-containing unit are at least partially self covalently bonded through the cross-linking moiety.

Embodiment 3.

1. A system comprising:

a substrate;

at least one particle;

at least one binder material; and

at least one amine-containing unit, wherein the amine-containing unit is not covalently bonded to the at least one particle.

2. The system of clause 1, wherein the at least one amine-containing unit comprises two or more amine groups.

3. The system of clause 1, wherein the second amine-containing unit comprises an oligomer, a polymer, a small molecule, or a mixture thereof.

4. The system of clause 1, wherein the at least one amine-containing unit does not comprise tertiary amines.

5. The system of clause 1, wherein the at least one amine-containing unit comprises only primary amines.

6. The system of clause 1, wherein the at least one amine-containing unit comprises at least one primary amine, at least one secondary amine, and at least one tertiary amine.

7. The system of clause 1, wherein the at least one particle comprises at least one inorganic particle, at least one organic particle, at least one carbon-based particle, or a combination thereof.

8. The system of clause 1, wherein the at least one particle comprises alumina, silica, zirconia, a silicate, carbon powder, graphene, or a combination thereof.

9. The system of clause 1, wherein the at least one amine-containing unit comprises at least one oxygen-containing unit.

10. The system of clause 1, wherein the at least one amine-containing unit comprises at least one -OH-containing

group.

11. The system of clause 1, wherein the at least one amine-containing unit comprises at least two different amine-containing units.

12. The system of clause 1, wherein the at least one amine-containing unit is at least partially infused into the at least one particle.

13. The system of clause 1, wherein the at least one amine-containing unit is at least partially present in the at least one binder material.

14. The system of clause 1, wherein the at least one particle comprises a solid particle, a mesoporous particle, a microporous particle, a macroporous particle, or a combination thereof.

15. The system of clause 1, wherein the at least one particle comprises an amorphous particle, a semi-crystalline particle, a crystalline particle, or a combination thereof.

16. The system of clause 1, wherein the at least one binder material comprises a linear polymer, a branched polymer, a homopolymer, a block-copolymer, a random-copolymer, or a combination thereof.

17. The system of clause 1, wherein the at least one binder material comprises at least one cross-linkable group that can be cross-linked upon treatment selected from the group consisting of thermal heating, irradiation, microwave treatment, and combinations thereof.

18. The system of clause 1, further comprising at least one cross-linking reagent, wherein the binder material is at least partially cross-linked with the cross-linking reagent, and wherein the cross-linking reagent comprises at least one reagent selected from the group consisting of methacrylate reagents, acrylate reagents, vinyl reagents, allyl reagents, epoxy reagents, and combinations thereof.

19. The system of clause 1, further comprising at least one second particle, wherein the at least one second particle comprises at least one covalently bonded amine group.

20. The system of clause 1, wherein the at least one binder material is water soluble.

21. A system comprising:

a substrate;

at least one binder material;

at least one sorbent, wherein the at least one sorbent comprises a support and at least one amine-containing unit, wherein the at least one amine-containing unit is covalently bonded to the support.

22. The system of clause 21, wherein the at least one amine-containing unit comprises two or more amine groups.

23. The system of clause 21, wherein the second amine-containing unit comprises an oligomer, a polymer, a small molecule, or a mixture thereof.

24. The system of clause 21, wherein the at least one amine-containing unit does not comprise tertiary amines.

25. The system of clause 21, wherein the at least one amine-containing unit comprises at least one primary amine and at least one secondary amine.

26. The system of clause 21, wherein the at least one amine-containing unit comprises at least one primary amine, at least one secondary amine, and at least one tertiary amine.

27. The system of clause 21, wherein the support comprises at least one particle comprising at least one inorganic particle, at least one organic particle, at least one carbon-based particle, or a combination thereof.

28. The system of clause 21, wherein the support comprises alumina, silica, zirconia, a silicate, carbon powder, graphene, or a combination thereof.

29. The system of clause 21, wherein the at least one amine-containing unit comprises at least two different amine-containing units.

30. The system of clause 21, wherein the support comprises at least one particle comprising a solid particle, a mesoporous particle, a microporous particle, a macroporous particle, or a combination thereof.

31. The system of clause 21, wherein the support comprises at least one particle comprising an amorphous particle, a semi-crystalline particle, a crystalline particle, or a combination thereof.

32. The system of clause 21, wherein the at least one binder material comprises a homopolymer, a block-copolymer, a random-copolymer, or a combination thereof.

33. The system of clause 21, wherein the at least one binder material comprises at least one cross-linkable group that can be cross-linked upon treatment selected from the group consisting of thermal heating, irradiation, microwave treatment, and combinations thereof.

34. The system of clause 21, further comprising at least one cross-linking reagent, wherein the binder material is at least partially cross-linked with the cross-linking reagent, and wherein the cross-linking reagent comprises at least one reagent selected from the group consisting of methacrylate reagents, acrylate reagents, vinyl reagents, allyl reagents, epoxy reagents, and combinations thereof.

35. The system of clause 21, further comprising at least one second particle, wherein the at least one second particle does not comprise covalently bonded amine groups.

36. The system of clause 21, wherein the at least one amine-containing unit is covalently bonded to the support through silanization using at least one alkoxysilane-containing grafter.

37. The system of clause 21, wherein the at least one amine-containing unit is covalently bonded to the support through silanization using at least one alkoxysilane-containing grafter selected from the group consisting of (p-chloromethyl)phenyltrimethoxysilane (PCPT), (p-chloromethyl)phenyltriethoxysilane, chloropropyltrimethoxysilane, chloropropyltriethoxysilane, and combinations thereof.

38. The functionalized sorbent of clause 21, wherein the at least one amine-containing unit is covalently bonded to the support through silanization using at least one alkoxysilane-containing grafter, wherein the at least one amine-containing unit is covalently bonded to the grafter through an amine alkylation using at least one alkyl halide.

39. The functionalized sorbent of clause 21, wherein the at least one amine-containing unit is covalently bonded to the support through silanization using at least one alkoxysilane-containing grafter, wherein the at least one amine-containing unit is covalently bonded to the grafter through an amine alkylation using at least one alkyl halide comprising a halide selected from the group consisting of chloride, bromide, iodide, and combinations thereof.

40. The system of clause 21, wherein the at least one binder material is water soluble.

41. A system comprising:

a substrate;

at least one binder material; at least one sorbent, wherein the at least one sorbent comprises a support, a first amine-containing unit covalently bonded to the support, and a second amine-containing unit not covalently bonded to the support; and

optionally a cross-linking moiety, wherein the cross-linking moiety can react with the first amine-containing unit or the second amine-containing unit.

42. The system of clause 41, wherein the second amine-containing unit is at least partially self cross-linked through the

cross-linking moiety.

43. The system of clause 41, wherein the first amine-containing unit and second the amine-containing unit are at least partially covalently bonded through the cross-linking moiety.

44. The system of clause 41, wherein the first amine-containing unit comprises two or more amine groups.

45. The system of clause 41, wherein the second amine-containing unit comprises two or more amine groups.

46. The system of clause 41, wherein the second amine-containing unit is identical to the first amine-containing unit.

47. The system of clause 41, wherein the first amine-containing unit has a lower molar mass than the second amine-containing unit.

48. The system of clause 41, wherein the first amine-containing unit has fewer amine groups than the second amine-containing unit.

49. The system of clause 41, wherein the second amine-containing unit is at least partially infused into the support.

50. The system of clause 41, wherein the second amine-containing unit is at least partially present in the at least one binder material.

51. The system of clause 41, wherein the first amine-containing unit does not comprise tertiary amines.

52. The system of clause 41, wherein the first amine-containing unit comprises at least one primary amine, at least one secondary amine, and at least one tertiary amine.

53. The system of clause 41, wherein the second amine-containing unit does not comprise tertiary amines.

54. The system of clause 41, wherein the second amine-containing unit comprises at least one primary amine, at least one secondary amine, and at least one tertiary amine.

55. The system of clause 41, wherein the support comprises an inorganic particle, a carbon-based support, an organic support, a polymer support, or a combination thereof.

56. The system of clause 41, wherein the support comprises an inorganic particle comprising alumina, silica, zirconia, a silicate, carbon powder, graphene, or a combination thereof.

57. The system of clause 41, wherein the first amine-containing unit is covalently bonded to the support through silanization using at least one alkoxysilane-containing grafter.

58. The system of clause 41, wherein the first amine-containing unit is covalently bonded to the support through silanization using at least one alkoxysilane-containing grafter selected from the group consisting of (p-chloromethyl) phenyltrimethoxysilane (PCPT), (p-chloromethyl)phenyltriethoxysilane, chloropropyltrimethoxysilane, chloropropyltriethoxysilane, and combinations thereof.

59. The functionalized sorbent of clause 41, wherein the first amine-containing unit is covalently bonded to the support through silanization using at least one alkoxysilane-containing grafter, wherein the first amine-containing unit is covalently bonded to the grafter through an amine alkylation using at least one alkyl halide.

60. The functionalized sorbent of clause 41, wherein the first amine-containing unit is covalently bonded to the support through silanization using at least one alkoxysilane-containing grafter, wherein the first amine-containing unit is covalently bonded to the grafter through an amine alkylation using at least one alkyl halide comprising a halide selected from the group consisting of chloride, bromide, iodide, and combinations thereof.

61. The system of clause 41, wherein the binder material is at least partially cross-linked with the cross-linking moiety, and wherein the cross-linking moiety comprises at least one reagent selected from the group consisting of methacrylate reagents, acrylate reagents, vinyl reagents, allyl reagents, epoxy reagents, and combinations thereof.

62. The system of clause 41, wherein the support comprises a solid support, a mesoporous support, a microporous support, a macroporous support, or a combination thereof.

63. The system of clause 41, wherein the binder material is water soluble.

Embodiment 4.

1. A method of making a sorbent composite, the method comprising:

forming a slurry comprising:

at least one particle;

a solvent;

at least one binder material that is soluble in the solvent;

at least one amine-containing unit that is soluble in the solvent applying the slurry onto a substrate; and

removing the solvent to form the sorbent composite.

2. The method of clause 1, wherein the at least one amine-containing unit comprises two or more amine groups.

3. The method of clause 1, wherein the at least one amine-containing unit comprises a polymer, an oligomer, a small molecule, or a combination thereof.

4. The method of clause 1, wherein the at least one amine-containing unit does not comprise tertiary amines.

5. The method of clause 1, wherein the at least one amine-containing unit comprises only primary amines.

6. The method of clause 1, wherein the at least one amine-containing unit comprises at least one primary amine, at least one secondary amine, and at least one tertiary amine.

7. The method of clause 1, wherein the at least one particle comprises at least one inorganic particle, at least one organic particle, at least one carbon-based particle, or a combination thereof.

8. The method of clause 1, wherein the at least one particle comprises alumina, silica, zirconia, a silicate, carbon powder, graphene, or a combination thereof.

9. The method of clause 1, wherein the at least one amine-containing unit comprises at least one oxygen-containing unit.

10. The method of clause 1, wherein the at least one amine-containing unit comprises at least one -OH-containing group.

11. The method of clause 1, wherein the at least one amine-containing unit comprises at least two different amine-containing units.

12. The method of clause 1, wherein the at least one amine-containing unit is at least partially infused into the at least one particle.

13. The method of clause 1, wherein the at least one amine-containing unit is at least partially present in the at least one binder material.

14. The method of clause 1, wherein the at least one particle comprises a solid particle, a mesoporous particle, a microporous particle, a macroporous particle, or a combination thereof.

15. The method of clause 1, wherein the at least one particle comprises an amorphous particle, a semi-crystalline particle, a crystalline particle, or a combination thereof.

16. The method of clause 1, wherein the at least one binder material comprises a linear polymer, a branched polymer, a homopolymer, a block-copolymer, a random-copolymer, or a combination thereof.

17. The method of clause 1, wherein the at least one binder material comprises at least one cross-linkable group that can be cross-linked upon treatment selected from the group consisting of thermal heating, irradiation, microwave treatment, and combinations thereof.

18. The method of clause 1, further comprising at least one cross-linking reagent, wherein the binder material is at least partially cross-linked with the cross-linking reagent, and wherein the cross-linking reagent comprises at least one reagent selected from the group consisting of methacrylate reagents, acrylate reagents, vinyl reagents, allyl reagents, epoxy reagents, and combinations thereof.

19. The method of clause 1, further comprising at least one second particle, wherein the at least one second particle comprises at least one covalently bonded amine group.

20. The method of clause 1, wherein the solvent comprises, water, alcohol, or a combination thereof.

Embodiment 5.

1. A system comprising:

a substrate;

at least one particle;

at least one sorbent material;

at least one binder material;

at least one amine-containing unit not covalently bonded to the at least one particle.

2. The system of clause 1, wherein the sorbent material is selected from the group consisting of metal organic frameworks (MOF), covalent organic frameworks (COF), and combinations thereof.

3. The system of clause 1, wherein the sorbent material is functionalized with amine groups.

4. The system of clause 1, wherein the sorbent material is functionalized with two or more different amine groups.

5. The system of clause 1, wherein the at least one amine-containing unit comprises two or more amine groups.

6. The system of clause 1, wherein the at least one amine-containing unit comprises a polymer, an oligomer, a small molecule, or a combination thereof.

7. The system of clause 1, wherein the at least one amine-containing unit does not comprise tertiary amines.

8. The system of clause 1, wherein the at least one amine-containing unit only comprises primary amine groups.

9. The system of clause 1, wherein the at least one amine-containing unit comprises at least one primary amine, at least one secondary amine, and at least one tertiary amine.

10. The system of clause 1, wherein the at least one particle comprises at least one inorganic particle, at least one organic particle, at least one carbon-based particle, or a combination thereof.

11. The system of clause 1, wherein the at least one particle comprises alumina, silica, zirconia, a silicate, carbon powder, graphene, or a combination thereof.

12. The system of clause 1, wherein the at least one amine-containing unit comprises at least one oxygen-containing unit.

13. The system of clause 1, wherein the at least one amine-containing unit comprises at least one -OH-containing group.

14. The system of clause 1, wherein the at least one amine-containing unit comprises at least two different amine-containing units.

15. The system of clause 1, wherein the at least one amine-containing unit is at least partially infused into the at least one particle.

16. The system of clause 1, wherein the at least one amine-containing unit is at least partially present in the at least one binder material.

17. The system of clause 1, wherein the at least one particle comprises a solid particle, a mesoporous particle, a microporous particle, a macroporous particle, or a combination thereof.

18. The system of clause 1, wherein the at least one particle comprises an amorphous particle, a semi-crystalline particle, a crystalline particle, or a combination thereof.

19. The system of clause 1, wherein the at least one binder material comprises a linear polymer, a branched polymer, a homopolymer, a block-copolymer, a random-copolymer, or a combination thereof.

20. The system of clause 1, wherein the at least one binder material comprises at least one cross-linkable group that can be cross-linked upon treatment selected from the group consisting of thermal heating, irradiation, microwave treatment, and combinations thereof.

21. The system of clause 1, further comprising at least one cross-linking reagent, wherein the binder material is at least partially cross-linked with the cross-linking reagent, and wherein the cross-linking reagent comprises at least one reagent selected from the group consisting of methacrylate reagents, acrylate reagents, vinyl reagents, allyl reagents, epoxy reagents, and combinations thereof.

22. The system of clause 1, further comprising at least one second particle, wherein the at least one second particle comprises at least one covalently bonded amine group.

23. The system of clause 1, wherein the at least one binder material is water soluble.

24. A system comprising:

a substrate;

at least one binder material;

a first sorbent material comprising a support and at least one amine-containing unit covalently bonded to the support; and

a second sorbent material.

25. The system of clause 24, wherein the first sorbent material is selected from the group consisting of metal organic frameworks (MOF), covalent organic frameworks (COF), and combinations thereof.

26. The system of clause 24, wherein the first sorbent material is functionalized with amine groups.

27. The system of clause 24, wherein the first sorbent material is functionalized with two or more different amine

groups.

28. The system of clause 24, wherein the at least one amine-containing unit comprises two or more amine groups.

29. The system of clause 24, wherein the at least one amine-containing unit comprises a polymer, an oligomer, a small molecule, or a combination thereof.

30. The system of clause 24, wherein the at least one amine-containing unit does not comprise tertiary amines.

31. The system of clause 24, wherein the at least one amine-containing unit comprises at least one primary amine and at least one secondary amine.

32. The system of clause 24, wherein the at least one amine-containing unit comprises at least one primary amine, at least one secondary amine, and at least one tertiary amine.

33. The system of clause 24, wherein the support comprises at least one inorganic particle, at least one organic particle, at least one carbon-based particle, or a combination thereof.

34. The system of clause 24, wherein the at support comprises alumina, silica, zirconia, a silicate, carbon powder, graphene, or a combination thereof.

35. The system of clause 24, wherein the at least one amine-containing unit comprises at least two different amine-containing units.

36. The system of clause 24, wherein the support comprises a solid particle, a mesoporous particle, a microporous particle, a macroporous particle, or a combination thereof.

37. The system of clause 24, wherein the support comprises an amorphous particle, a semi-crystalline particle, a crystalline particle, or a combination thereof.

38. The system of clause 24, wherein the at least one binder material comprises a homopolymer, a block-copolymer, a random-copolymer, or a combination thereof.

39. The system of clause 24, wherein the at least one binder material comprises at least one cross-linkable group that can be cross-linked upon treatment selected from the group consisting of thermal heating, irradiation, microwave treatment, and combinations thereof.

40. The system of clause 24, further comprising at least one cross-linking reagent, wherein the binder material is at least partially cross-linked with the cross-linking reagent, and wherein the cross-linking reagent comprises at least one reagent selected from the group consisting of methacrylate reagents, acrylate reagents, vinyl reagents, allyl reagents, epoxy reagents, and combinations thereof.

41. The system of clause 24, further comprising at least one second particle, wherein the at least one second particle does not comprise covalently bonded amine groups.

42. The system of clause 24, wherein the first amine-containing unit is covalently bonded to the support through silanization using at least one alkoxysilane-containing grafter.

43. The system of clause 24, wherein the first amine-containing unit is covalently bonded to the support through silanization using at least one alkoxysilane-containing grafter selected from the group consisting of (p-chloromethyl) phenyltrimethoxysilane (PCPT), (p-chloromethyl)phenyltriethoxysilane, chloropropyltrimethoxysilane, chloropropyltriethoxysilane, and combinations thereof.

44. The functionalized sorbent of clause 24, wherein the first amine-containing unit is covalently bonded to the support through silanization using at least one alkoxysilane-containing grafter, wherein the first amine-containing unit is covalently bonded to the grafter through an amine alkylation using at least one alkyl halide.

45. The functionalized sorbent of clause 24, wherein the first amine-containing unit is covalently bonded to the support

through silanization using at least one alkoxysilane-containing grafter, wherein the first amine-containing unit is covalently bonded to the grafter through an amine alkylation using at least one alkyl halide comprising a halide selected from the group consisting of chloride, bromide, iodide, and combinations thereof.

46. The system of clause 24, wherein the at least one binder material is water soluble.

Embodiment 6.

1. A contactor, comprising:

a contactor body having a first end with a fluid stream inlet to receive a fluid stream, a second end with a fluid stream outlet to release the fluid stream, and a fluid flow path extending between the first end and the second end that directs the fluid stream received by the fluid stream inlet to the fluid stream outlet for release therefrom; and a plurality of fluidically-isolated, thermally-connected, parallel fluid domains disposed in the contactor body between the first end and the second end orthogonal to the fluid flow path, wherein the plurality of fluidically-isolated, thermally-connected, parallel fluid domains include:

a plurality of sorbent-integrated fluid channels, each sorbent-integrated fluid channel defining a flow path for the fluid stream passing from the first end to the second end of the contactor body; and

a plurality of heat transfer fluid channels thermally connected to the plurality of sorbent-integrated fluid channels in an alternating arrangement, each heat transfer fluid channel defining a flow path for a heat transfer fluid stream that flows orthogonally to the fluid flow path between the first end and the second end of the contactor body.

2. The contactor of clause 1, wherein each of the plurality of sorbent-integrated fluid channels includes a first walled surface that is configured to receive the fluid stream and a second walled surface opposing the first walled surface that is configured to release a $CO_2$ depleted fluid stream during an adsorption mode of operation.

3. The contactor of clause 2, wherein both the first walled surface and the second walled surface of each of the plurality of sorbent-integrated fluid channels are configured to release a $CO_2$ rich fluid stream during a desorption mode of operation.

4. The contactor of clause 1, wherein the contactor body further comprises:

a heat transfer fluid stream inlet in a region between the first end and the second end that is configured to receive the heat transfer fluid stream; and

a heat transfer fluid stream outlet in a region between the first end and the second end opposing the heat transfer fluid stream inlet that is configured to release the heat transfer fluid stream from the contactor body.

5. The contactor of clause 4, wherein each of the plurality of heat transfer fluid channels is configured to receive a portion of the heat transfer fluid stream received by the heat transfer fluid stream inlet and direct the corresponding heat transfer fluid stream to the heat transfer fluid stream outlet for release from the contactor body after facilitating heat transfer with adjacent sorbent-integrated fluid channels while the heat transfer fluid stream passes through the channel between the heat transfer fluid stream inlet and the heat transfer fluid stream outlet.

6. The contactor of clause 2, wherein the plurality of sorbent-integrated channels are configured to receive the flow of the fluid stream in the adsorption mode of operation up until reaching a specified $CO_2$ adsorption capacity.

7. The contactor of clause 6, wherein the plurality of heat transfer fluid channels are configured to receive the heat transfer fluid stream in a desorption mode of operation in response to the plurality of sorbent-integrated fluid channels reaching the specified $CO_2$ adsorption capacity, the heat transfer fluid stream flowing through the plurality of heat transfer fluid channel to promote desorption via transfer of heat to the plurality of sorbent-integrated fluid channels and regeneration of the sorbent.

8. The contactor of clause 1, wherein the plurality of sorbent-integrated fluid channels comprise one or more of a sorbent material and a sorbent coating.

9. The contactor of clause 8, wherein the sorbent material is a sorbent according to the present disclosure.

10. The contactor of clause 8, wherein some of the plurality of sorbent-integrated fluid channels comprise a hydrophobic coating selected from the group consisting of a silica nano-coating, a fluorinated silane and a fluoropolymer coating.

11. The contactor of clause 1, wherein the heat transfer fluid stream has a temperature greater than the temperature of the fluid stream.

12. The contactor of clause 1, wherein each of the plurality of fluidically-isolated, thermally-connected, parallel fluid domains is segmented into separate and distinct fluid domains.

13. A contactor, comprising:

a contactor body having a first end with a fluid stream inlet to receive a fluid stream, a second end with a fluid stream outlet to release the fluid stream, and a fluid flow path extending between the first end and the second end that directs the fluid stream received by the fluid stream inlet to the fluid stream outlet for release therefrom; and

a plurality of fluidically-isolated, thermally-connected, parallel fluid domains disposed in the contactor body between the first end and the second end orthogonal to the fluid flow path, wherein the plurality of fluidically-isolated, thermally-connected, parallel fluid domains include:

a plurality of sorbent-integrated fluid channels, each sorbent-integrated fluid channel defining a flow path for the fluid stream passing from the first end to the second end of the contactor body, wherein each of the plurality of sorbent-integrated fluid channels includes a first walled surface that is configured to receive the fluid stream and a second walled surface opposing the first walled surface that is configured to release a $CO_2$ depleted fluid stream during an adsorption mode of operation, and wherein the second walled surface of each of the plurality of sorbent-integrated fluid channels is configured to release a $CO_2$ rich fluid stream during a desorption mode of operation; and

a plurality of heat transfer fluid channels thermally connected to the plurality of sorbent-integrated fluid channels in an alternating arrangement, each heat transfer fluid channel defining a flow path for a heat transfer fluid stream that flows orthogonally to the fluid flow path between the first end and the second end of the contactor body.

14. The contactor of clause 13, wherein the contactor body further comprises:

a heat transfer fluid stream inlet in a region between the first end and the second end that is configured to receive the heat transfer fluid stream; and

a heat transfer fluid stream outlet in a region between the first end and the second end opposing the heat transfer fluid stream inlet that is configured to release the heat transfer fluid stream from the contactor body.

15. The contactor of clause 14, wherein each of the plurality of heat transfer fluid channels is configured to receive a portion of the heat transfer fluid stream received by the heat transfer fluid stream inlet and direct the corresponding heat transfer fluid stream to the heat transfer fluid stream outlet for release from the contactor body after facilitating heat transfer with adjacent sorbent-integrated fluid channels while the heat transfer fluid stream passes through the channel between the heat transfer fluid stream inlet and the heat transfer fluid stream outlet.

16. The contactor of clause 13, wherein the plurality of sorbent-integrated fluid channels comprise one or more of a sorbent material and a sorbent coating.

17. The contactor of clause 16, wherein the sorbent material is a sorbent according to the present disclosure.

18. The contactor of clause 16, wherein some of the plurality of sorbent-integrated fluid channels comprise a

hydrophobic coating selected from the group consisting of a silica nano-coating, a fluorinated silane and a fluoropolymer coating.

19. The contactor of clause 13, wherein the heat transfer fluid stream has a temperature greater than the temperature of the fluid stream.

20. The contactor of clause 13, wherein each of the plurality of fluidically-isolated, thermally-connected, parallel fluid domains is segmented into separate and distinct fluid domains.

Embodiment 7.

1. A system, comprising:
a first contactor including:

a first contactor body having a first end with a fluid stream inlet to receive a fluid stream, a second end with a fluid stream outlet to release the fluid stream, and a fluid flow path extending between the first end and the second end that directs the fluid stream received by the fluid stream inlet to the fluid stream outlet for release therefrom; and

a plurality of fluidically-isolated, thermally-connected, parallel fluid domains disposed in the first contactor body between the first end and the second end orthogonal to the fluid flow path, wherein the plurality of fluidically-isolated, thermally-connected, parallel fluid domains include:

a plurality of sorbent-integrated fluid channels, each sorbent-integrated fluid channel defining a flow path for the fluid stream passing from the first end to the second end of the first contactor body; and

a plurality of heat transfer fluid channels thermally connected to the plurality of sorbent-integrated fluid channels in an alternating arrangement, each heat transfer fluid channel defining a flow path for a heat transfer fluid stream that flows orthogonally to the fluid flow path between the first end and the second end of the first contactor body; and

a second contactor to operate in conjunction with the first contactor, the second contactor including:

a second contactor body having a first end with a fluid stream inlet to receive the fluid stream, a second end with a fluid stream outlet to release the fluid stream, and a fluid flow path extending between the first end and the second end that directs the fluid stream received by the fluid stream inlet to the fluid stream outlet for release therefrom; and

a plurality of fluidically-isolated, thermally-connected, parallel fluid domains disposed in the second contactor body between the first end and the second end orthogonal to the fluid flow path, wherein the plurality of fluidically-isolated, thermally-connected, parallel fluid domains include:

a plurality of sorbent-integrated fluid channels, each sorbent-integrated fluid channel defining a flow path for the fluid stream passing from the first end to the second end of the second contactor body; and

a plurality of heat transfer fluid channels thermally connected to the plurality of sorbent-integrated fluid channels in an alternating arrangement, each heat transfer fluid channel defining a flow path for the heat transfer fluid stream that flows orthogonally to the fluid flow path between the first end and the second end of the second contactor body.

2. The system of clause 1, wherein the first contactor and the second contactor are configured to cycle through an adsorption mode of operation and a desorption mode of operation in an alternating pattern to provide continuous $CO_2$ removal from the fluid stream, wherein the second contactor operates in the desorption mode of operation when the first contactor operates in the adsorption mode of operation, while the first contactor operates in the desorption mode of operation when the second contactor operates in the adsorption mode of operation.

3. The system of clause 1, further comprising a plurality of additional contactors configured to operate in conjunction with the first contactor and the second contactor, wherein the plurality of additional contactors are configured to operate cooperatively in alternating patterns of adsorption and desorption modes of operation.

4. The system of clause 1, wherein each of the plurality of sorbent-integrated fluid channels in the first contactor body and the second contactor body includes a first walled surface that is configured to receive the fluid stream and a second walled surface opposing the first walled surface that is configured to correspondingly release a $CO_2$ depleted fluid stream during an adsorption mode of operation.

5. The system of clause 4, wherein both the first walled surface and the second walled surface of each of the plurality of sorbent-integrated fluid channels are configured to release a $CO_2$ rich fluid stream during a desorption mode of operation.

6. The system of clause 1, wherein each of the first contactor body and the second contactor body further comprises:

a heat transfer fluid stream inlet in a region between the first end and the second end that is configured to receive the heat transfer fluid stream; and

a heat transfer fluid stream outlet in a region between the first end and the second end opposing the heat transfer fluid stream inlet that is configured to correspondingly release the heat transfer fluid stream from the first contactor body and the second contactor body.

7. The system of clause 6, wherein each of the plurality of heat transfer fluid channels in the first contactor body and the second contactor body is configured to correspondingly receive a portion of the heat transfer fluid stream received by the heat transfer fluid stream inlet and direct the heat transfer fluid stream to the heat transfer fluid stream outlet for release from the first contactor body and the second contactor body after facilitating heat transfer with adjacent sorbent-integrated fluid channels while the heat transfer fluid stream passes through the channel between the heat transfer fluid stream inlet and the heat transfer fluid stream outlet.

8. The system of clause 1, wherein the plurality of sorbent-integrated fluid channels in the first contactor and the second contactor comprise one or more of a sorbent material and a sorbent coating.

9. The system of clause 8, wherein the sorbent material is a sorbent according to the present disclosure.

10. The system of clause 8, wherein some of the plurality of sorbent-integrated fluid channels comprises a hydrophobic coating selected from the group consisting of a silica nano-coating, a fluorinated silane and a fluoropolymer coating.

11. The system of clause 1, wherein each of the plurality of fluidically-isolated, thermally-connected, parallel fluid domains in the first contactor and the second contactor is segmented into separate and distinct fluid domains.

12. The system of clause 1, further comprising a heat generating source operatively coupled with the first contactor and the second contactor to generate and provide the heat transfer fluid stream thereto.

13. The system of clause 12, wherein the first contactor and the second contactor are in fluid communication with an inlet into the heat generating source, wherein the heat transfer fluid stream released from the first contactor and the second contactor is recirculated back to the heat generating source.

14. The system of clause 12, wherein the heat transfer fluid stream generated in the heat generating source is configured for supply to the first contactor and the second contactor, wherein the heat transfer fluid stream has a temperature greater than the temperature of the fluid stream.

15. The system of clause 12, further comprising:

a vacuum pump operatively coupled to the first contactor and the second contactor, wherein the vacuum pump is configured to supply a $CO_2$ rich fluid stream from the first contactor and the second contactor to a $CO_2$ stream line while operating in the desorption mode of operation;

an air cooler operatively coupled to the vacuum pump, wherein the air cooler is configured to release moisture from the $CO_2$ rich fluid stream that is provided by the vacuum pump; and

a condensation line operatively coupled to the air cooler and the heat generating source, wherein the condensation line is configured to receive excess moisture vented away from the air cooler for recirculation back to the heat generating source for production of the heat transfer fluid stream.

16. The system of clause 15, further comprising:

a compressor downstream of the air cooler that is configured to compress the $CO_2$ rich fluid stream in the $CO_2$ stream line; and

a recirculation line operatively coupled to the compressor and the heat generating source, wherein the recirculation line is configured to receive heat vented away from the compression of the $CO_2$ for recirculation back to the heat generating source for production of the heat transfer fluid stream.

17. The system of clause 1, further comprising a fan upstream or downstream of one or more of the first contactor and the second contactor to drive the fluid stream therethrough.

18. The system of clause 1, further comprising a passive air concentrator in fluid communication with the first contactor and the second contactor, wherein the passive air concentrator includes a cone-shaped concentrator with a diverging portion at a first axial end to receive the flow of the fluid stream that transitions to a converging portion at an opposing second axial end that supplies the flow of the fluid stream to the first contactor and the second contactor at an increased velocity and increased wind pressure that exceeds the pressure drop across the one or more of the first contactor and the second contactor.

19. The system of clause 18, wherein the passive air concentrator further comprises a gate disposed about the diverging portion and the converging portion to control the flow of the fluid stream to the one or more of the first contactor and the second contactor.

20. The system of clause 1, wherein the fluid stream comprises directly captured ambient air or post combustion captured gas.

## Claims

**1.** A system comprising:

a substrate;
at least one particle;
at least one sorbent material;
at least one binder material;
at least one amine-containing unit not covalently bonded to the at least one particle.

**2.** The system of claim 1, wherein the sorbent material is selected from the group consisting of metal organic frameworks (MOF), covalent organic frameworks (COF), and combinations thereof.

**3.** The system of claim 1, wherein the sorbent material is functionalized with amine groups.

**4.** The system of claim 1, wherein the sorbent material is functionalized with two or more different amine groups.

**5.** The system of claim 1, wherein the at least one amine-containing unit comprises two or more amine groups.

**6.** The system of claim 1, wherein the at least one amine-containing unit comprises a polymer, an oligomer, a small molecule, or a combination thereof.

**7.** The system of claim 1, wherein the at least one amine-containing unit does not comprise tertiary amines.

**8.** The system of claim 1, wherein the at least one amine-containing unit only comprises primary amine groups.

**9.** The system of claim 1, wherein the at least one amine-containing unit comprises at least one primary amine, at least one secondary amine, and at least one tertiary amine.

**10.** A system comprising:

a substrate;
at least one binder material;
a first sorbent material comprising a support and at least one amine-containing unit covalently bonded to the support; and
a second sorbent material.

**11.** The system of claim 10, wherein the first sorbent material is selected from the group consisting of metal organic frameworks (MOF), covalent organic frameworks (COF), and combinations thereof.

**12.** The system of claim 10, wherein the first sorbent material is functionalized with amine groups.

**13.** The system of claim 10, wherein the first sorbent material is functionalized with two or more different amine groups.

**14.** The system of claim 10, wherein the at least one amine-containing unit comprises two or more amine groups.

**15.** The system of claim 10, wherein the at least one amine-containing unit comprises a polymer, an oligomer, a small molecule, or a combination thereof.

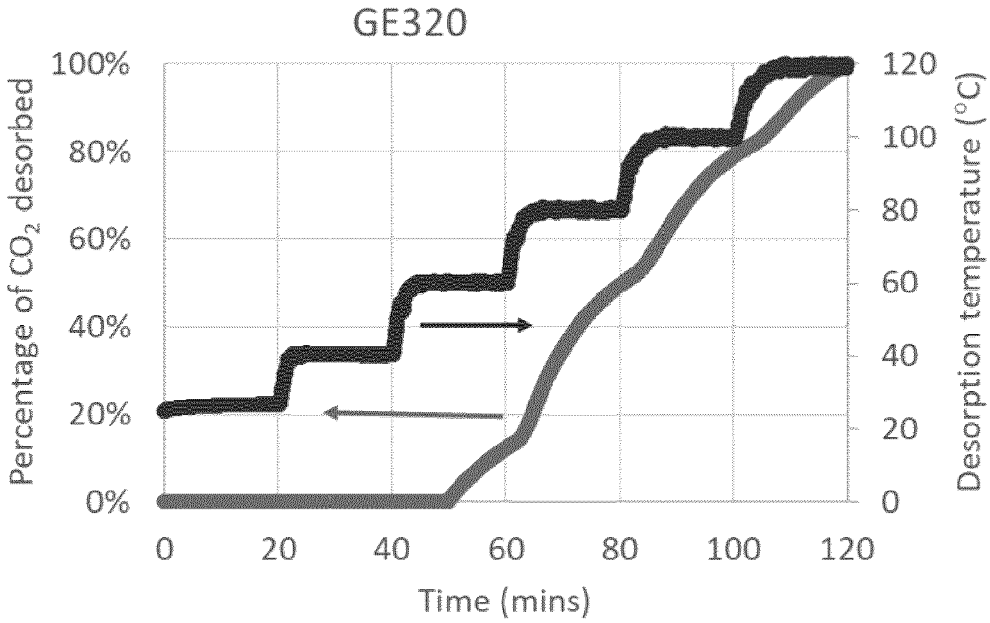
GE320
100%
80%
60%
40%
20%
0%
Percentage of $CO_2$ desorbed
120
100
80
60
40
20
0
Desorption temperature (°C)
0
20
40
60
80
100
120
Time (mins)

FIG. 1

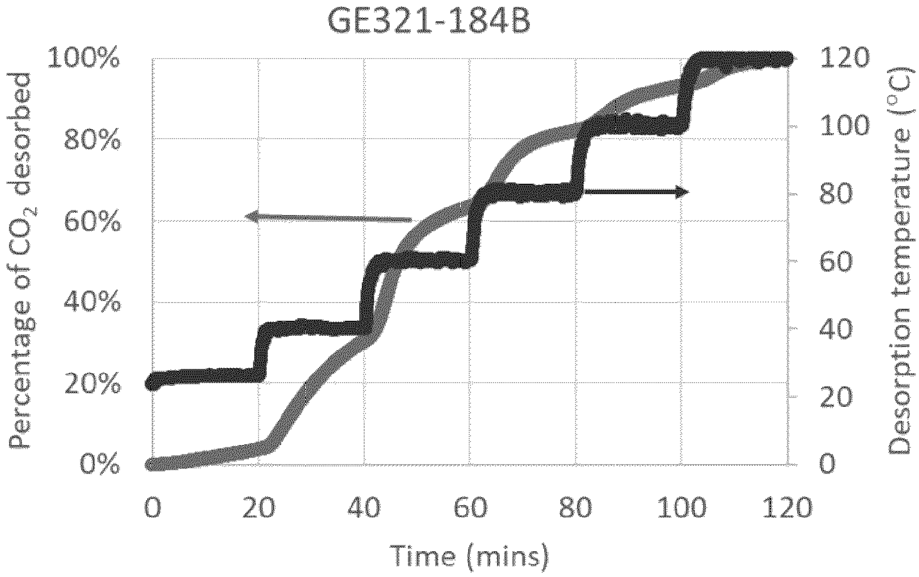
GE321-184B
Percentage of $CO_2$ desorbed
100%
80%
60%
40%
20%
0%
Desorption temperature (°C)
120
100
80
60
40
20
0
0
20
40
60
80
100
120
Time (mins)

FIG. 2

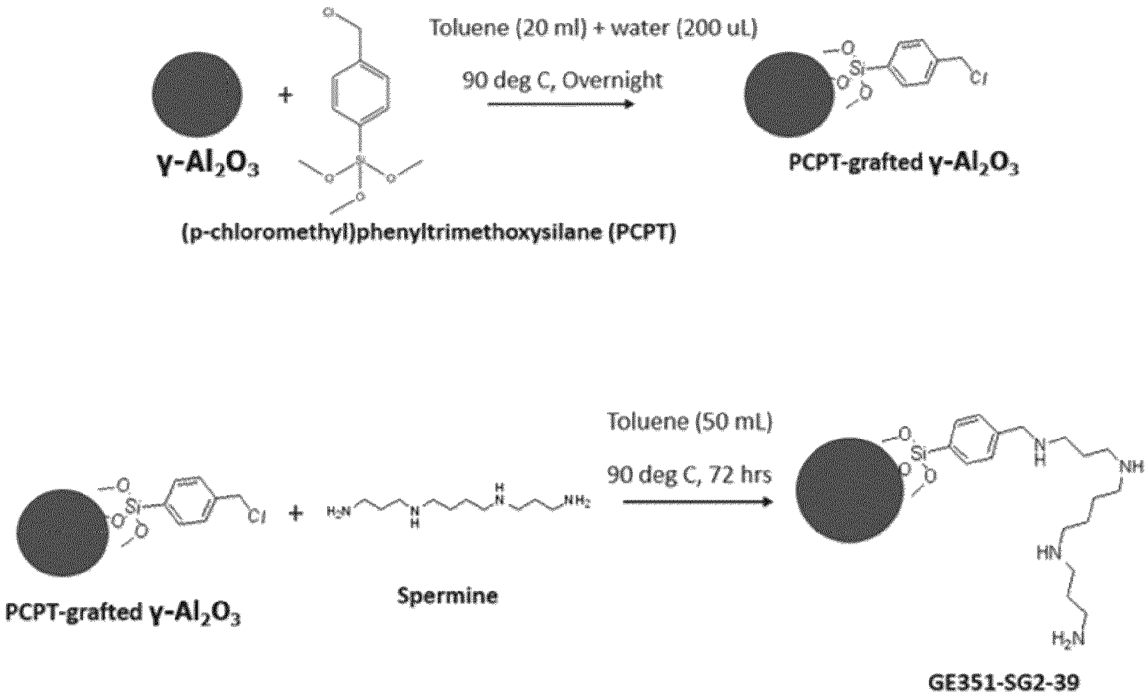


γ-$Al_2O_3$

(p-chloromethyl)phenyltrimethoxysilane (PCPT)

PCPT-grafted γ-$Al_2O_3$

PCPT-grafted γ-$Al_2O_3$

Spermine

GE351-SG2-39

FIG. 3

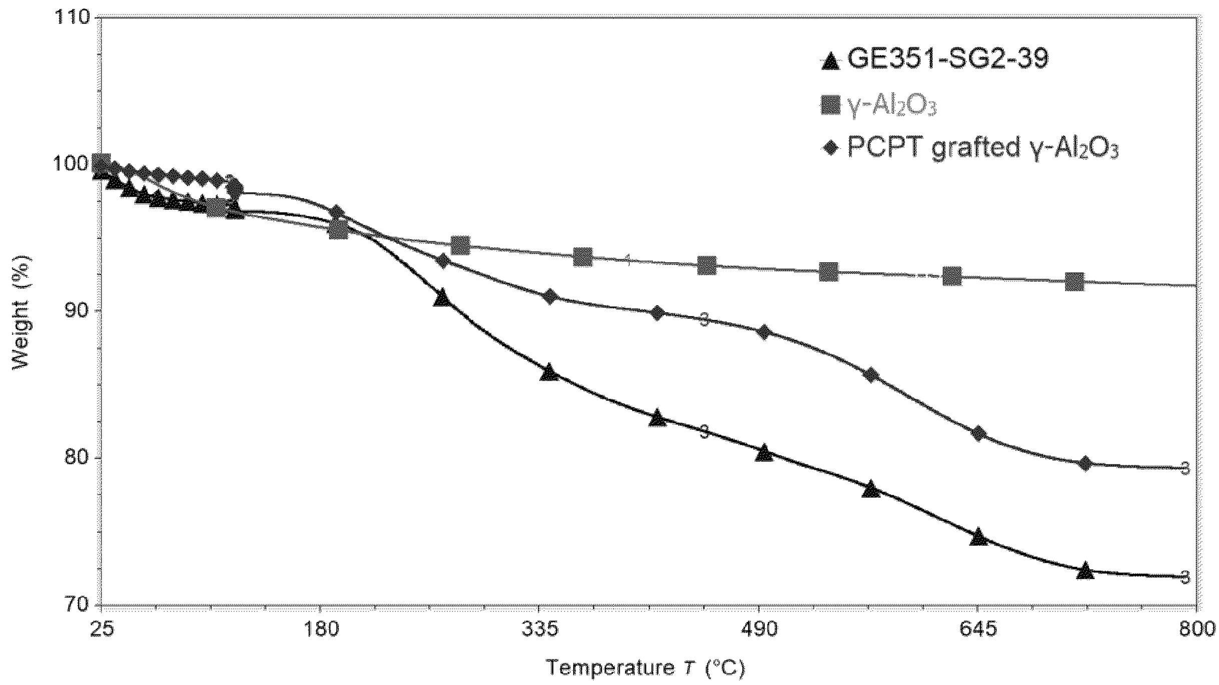

110
100
90
80
70
Weight (%)
25
180
335
490
645
800
Temperature T (°C)
GE351-SG2-39
γ-Al2O3
PCPT grafted γ-Al2O3


FIG. 4

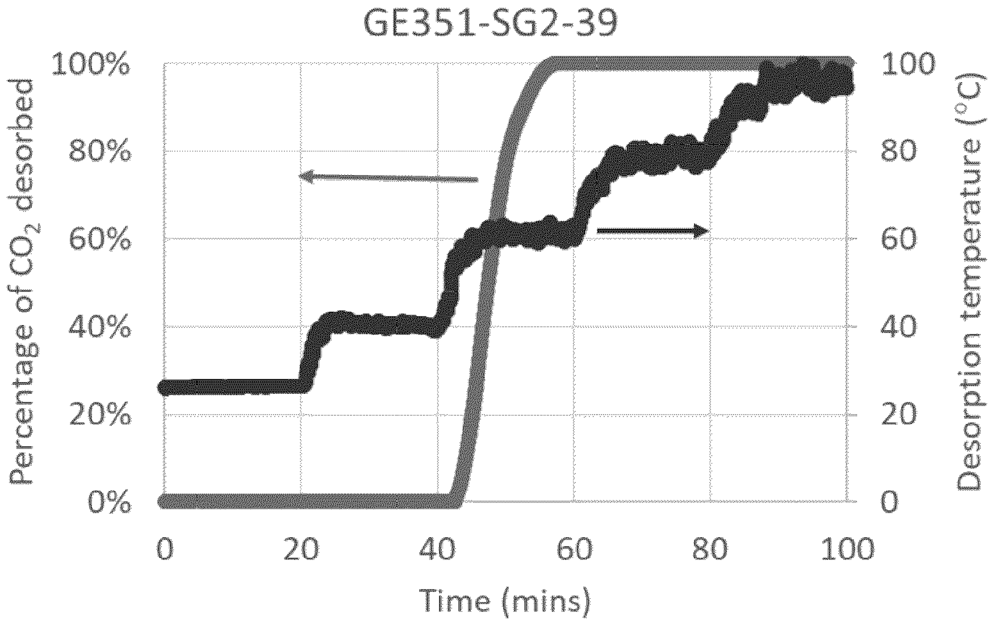
GE351-SG2-39
Percentage of $CO_2$ desorbed
100%
80%
60%
40%
20%
0%
Desorption temperature (°C)
100
80
60
40
20
0
0
20
40
60
80
100
Time (mins)

FIG. 5

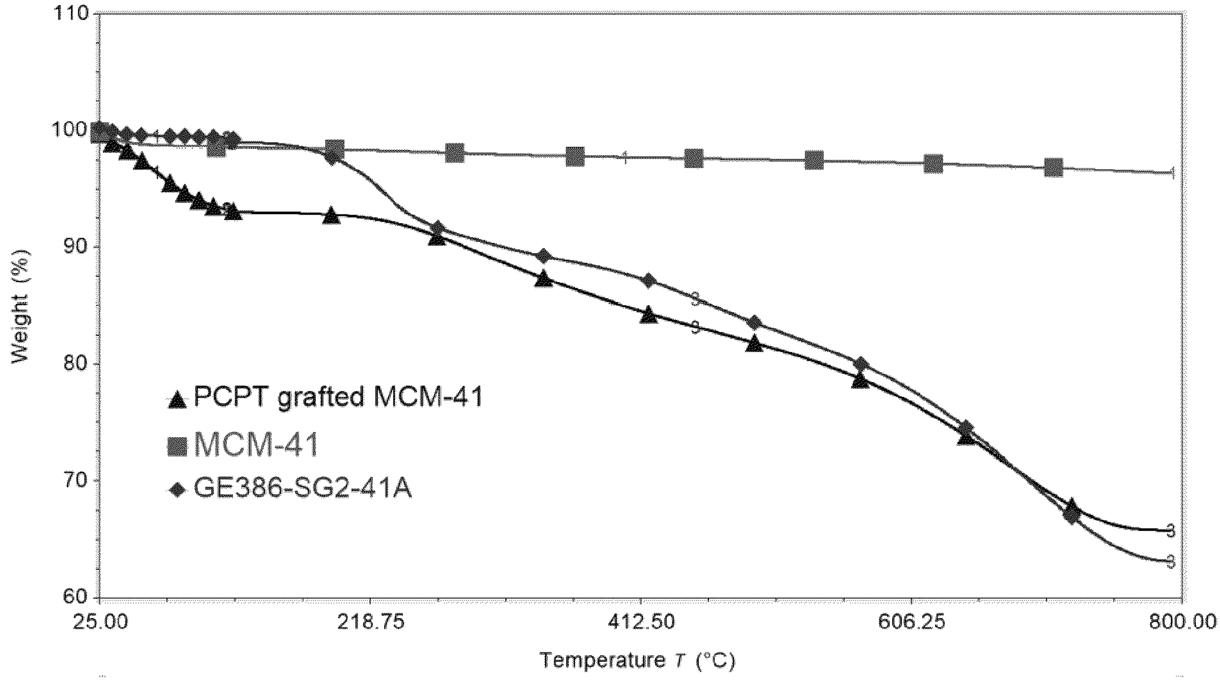
110
100
90
80
70
60
Weight (%)
PCPT grafted MCM-41
MCM-41
GE386-SG2-41A
25.00
218.75
412.50
606.25
800.00
Temperature T (°C)

FIG. 6

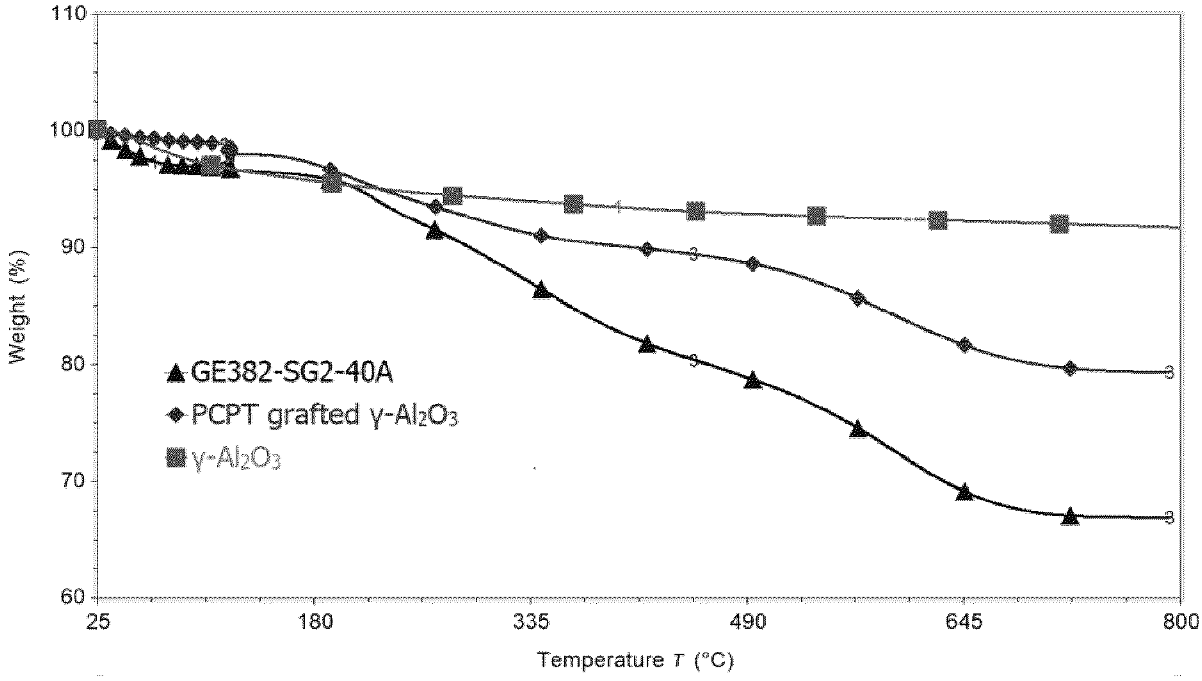
110
100
90
80
70
60
Weight (%)
GE382-SG2-40A
PCPT grafted γ-Al2O3
γ-Al2O3
25
180
335
490
645
800
Temperature T (°C)

FIG. 7

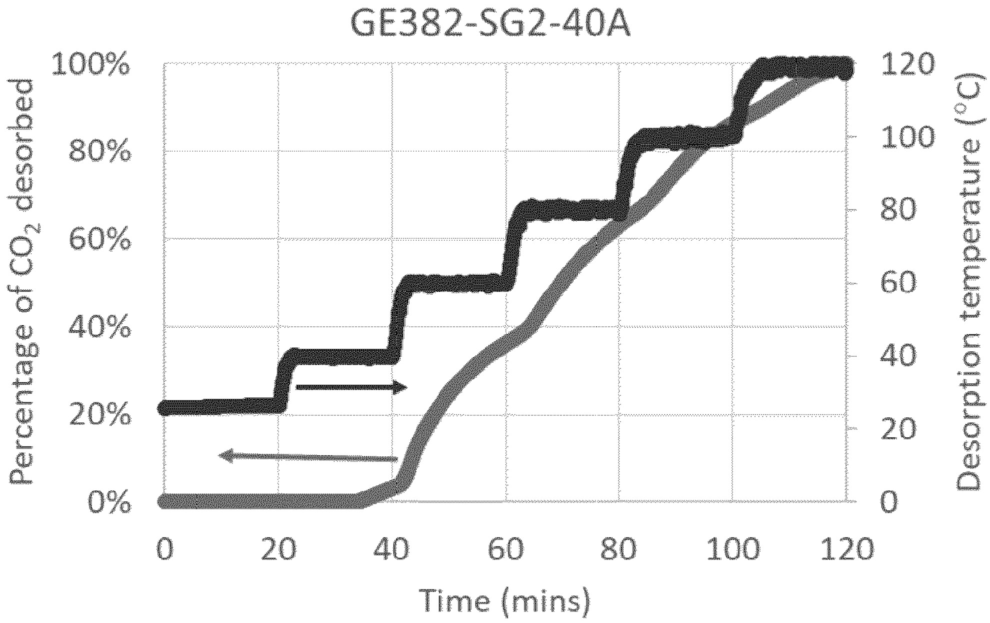
GE382-SG2-40A
Percentage of $CO_2$ desorbed
100%
80%
60%
40%
20%
0%
0
20
40
60
80
100
120
Time (mins)
120
100
80
60
40
20
0
Desorption temperature (°C)

FIG. 8

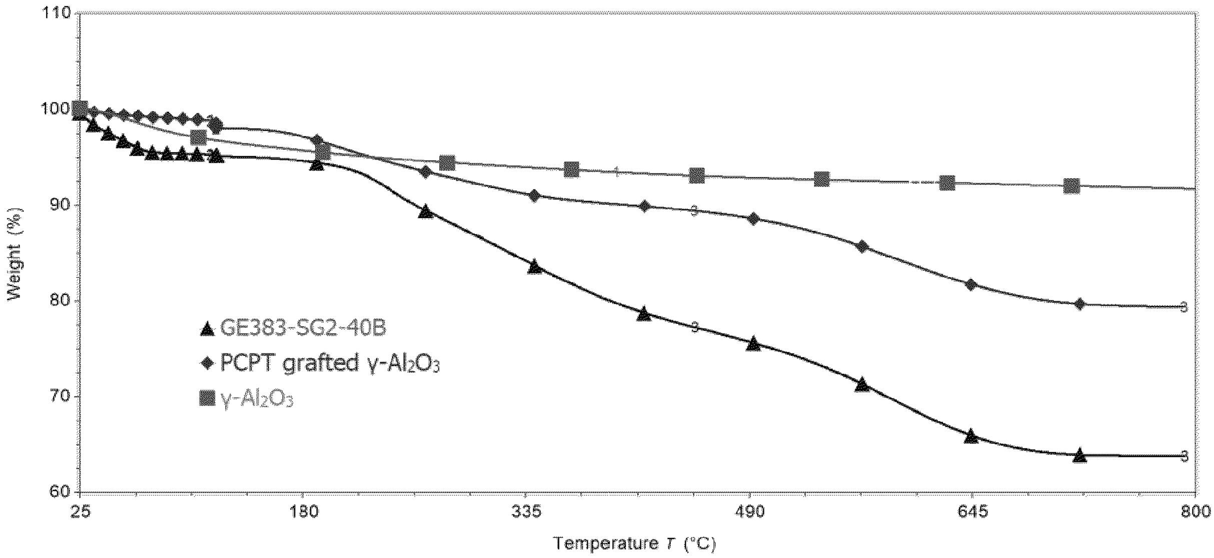
110
100
90
80
70
60
Weight (%)
25
180
335
490
645
800
Temperature T (°C)
GE383-SG2-40B
PCPT grafted γ-Al2O3
γ-Al2O3

FIG. 9

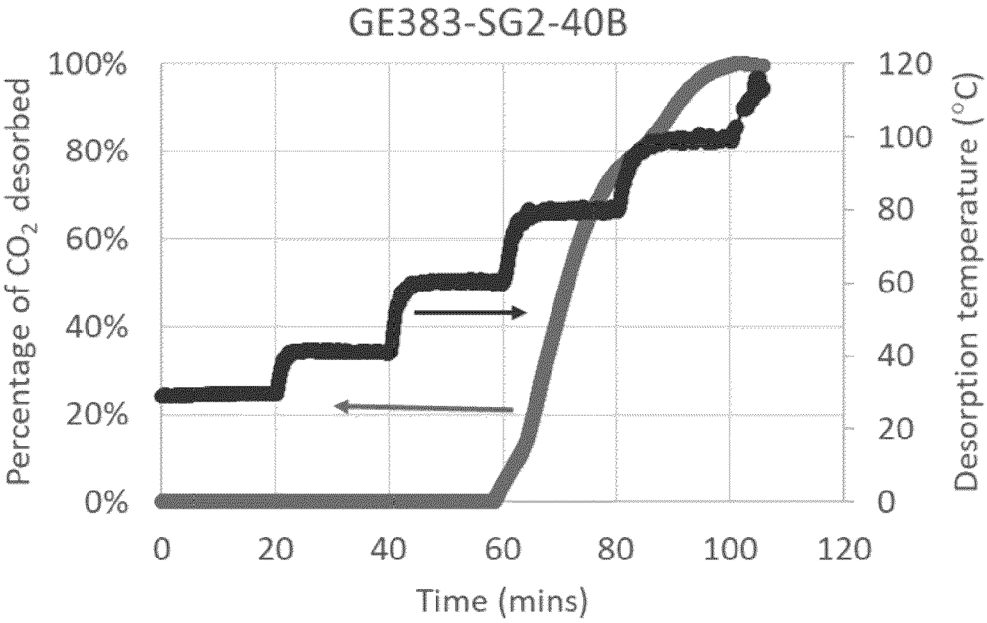
GE383-SG2-40B
100%
80%
60%
40%
20%
0%
Percentage of CO2 desorbed
120
100
80
60
40
20
0
Desorption temperature (°C)
0
20
40
60
80
100
120
Time (mins)

FIG. 10

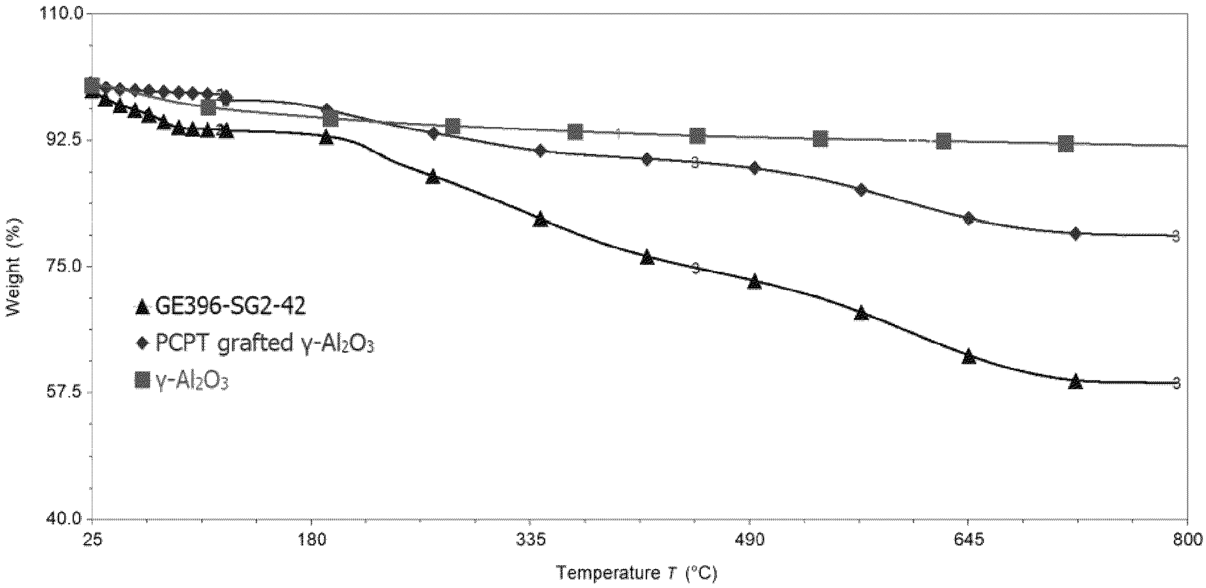
110.0
92.5
75.0
57.5
40.0
Weight (%)
25
180
335
490
645
800
Temperature T (°C)
GE396-SG2-42
PCPT grafted γ-Al2O3
γ-Al2O3

FIG. 11

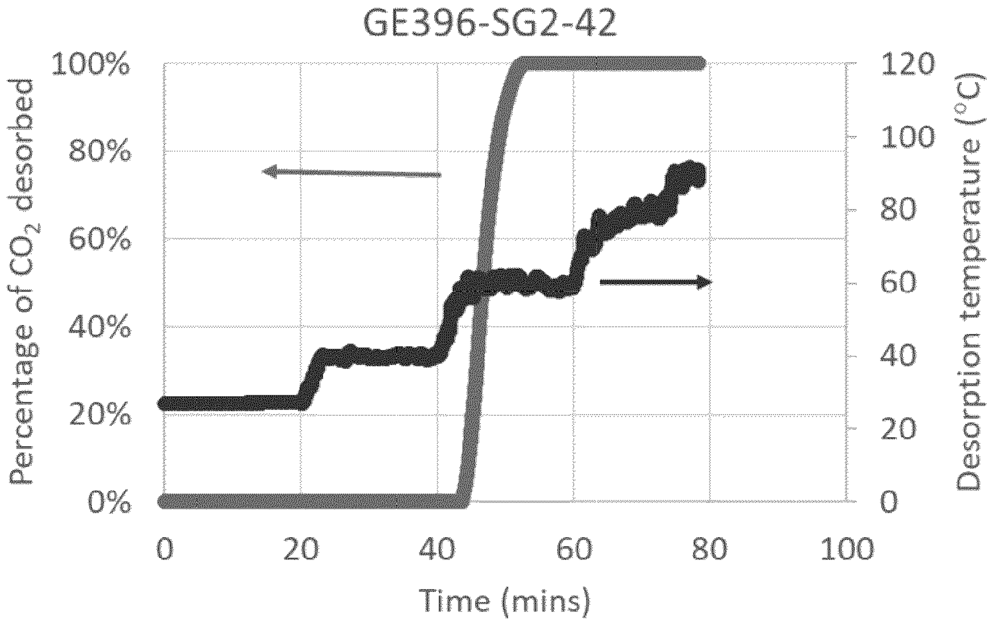
GE396-SG2-42
100%
80%
60%
40%
20%
0%
Percentage of CO2 desorbed
120
100
80
60
40
20
0
Desorption temperature (°C)
0
20
40
60
80
100
Time (mins)

FIG. 12

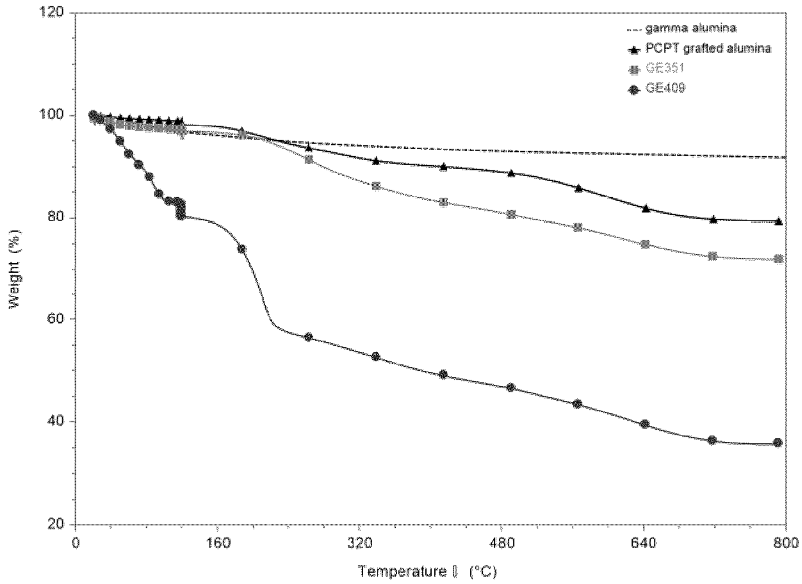
120
100
80
60
40
20
Weight (%)
0
160
320
480
640
800
Temperature (°C)
gamma alumina
PCPT grafted alumina
GE351
GE409

FIG. 13

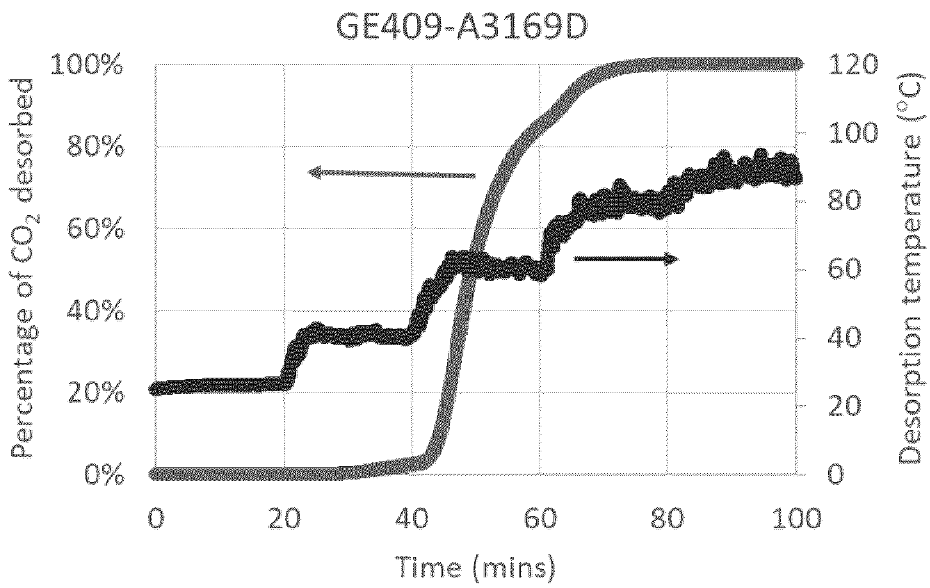
GE409-A3169D
100%
80%
60%
40%
20%
0%
Percentage of $CO_2$ desorbed
120
100
80
60
40
20
0
Desorption temperature (°C)
0
20
40
60
80
100
Time (mins)

FIG. 14

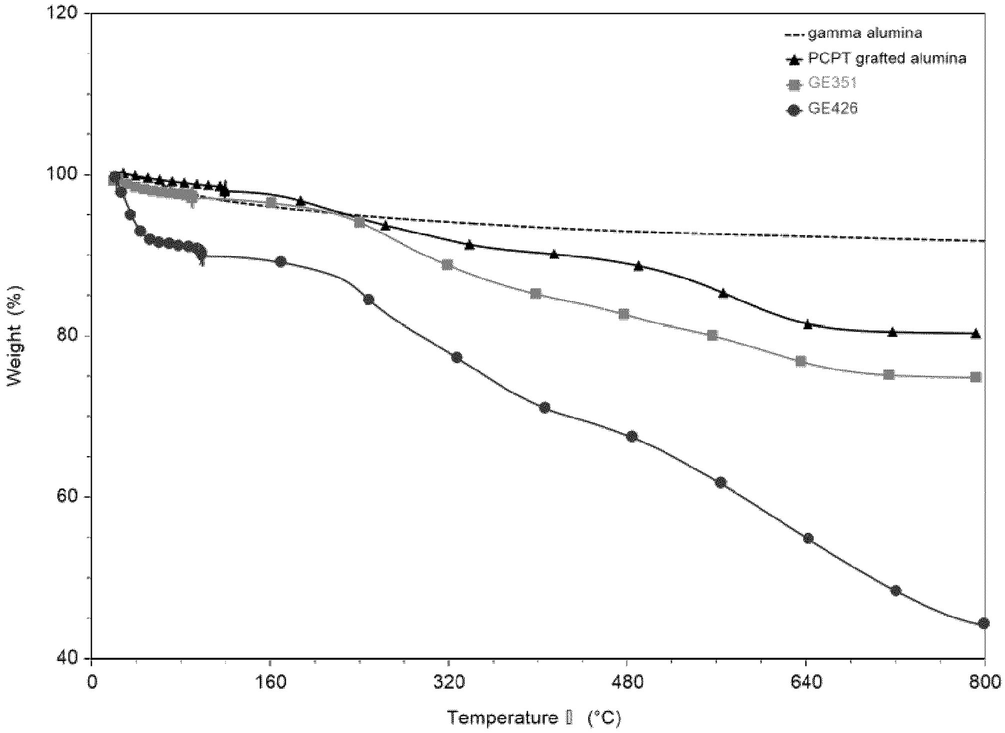
gamma alumina
PCPT grafted alumina
GE351
GE426
Weight (%)
Temperature (°C)
120
100
80
60
40
0
160
320
480
640
800

FIG. 15

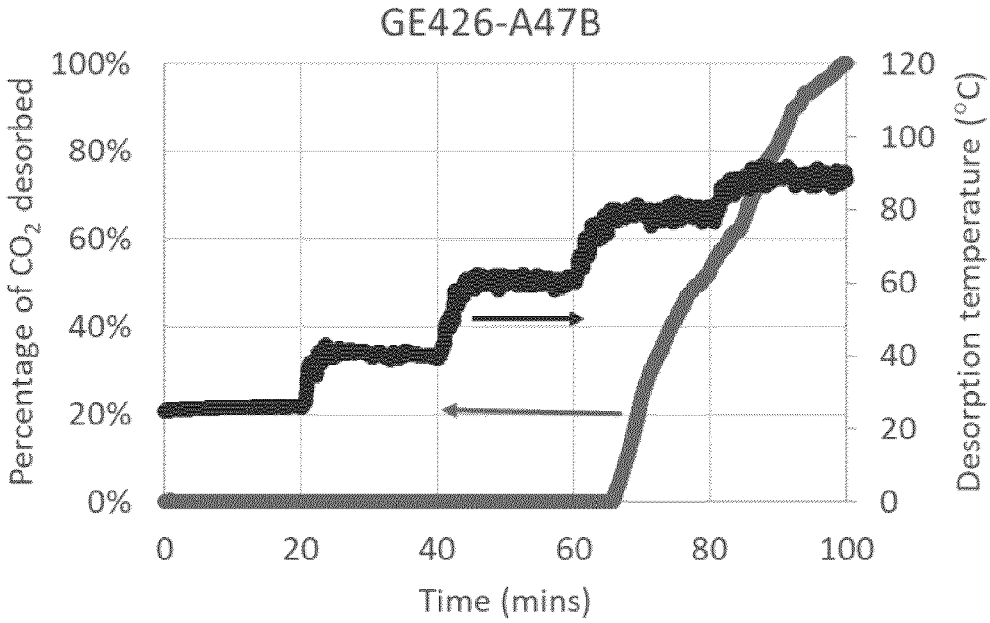
GE426-A47B
Percentage of $CO_2$ desorbed
100%
80%
60%
40%
20%
0%
120
100
80
60
40
20
0
Desorption temperature (°C)
0
20
40
60
80
100
Time (mins)

FIG. 16

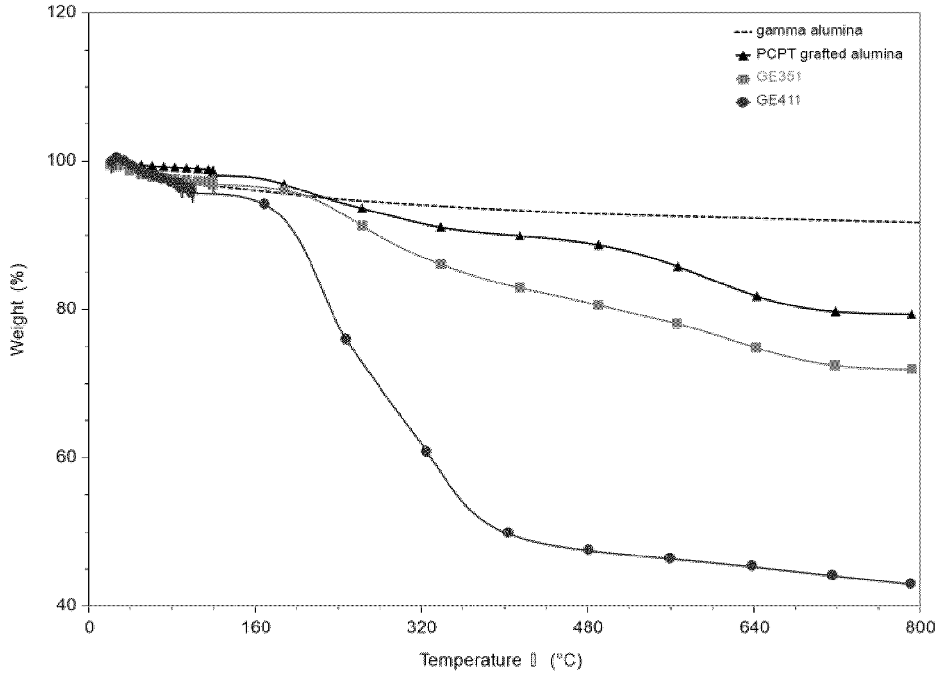

gamma alumina
PCPT grafted alumina
GE351
GE411
Weight (%)
120
100
80
60
40
0
160
320
480
640
800
Temperature (°C)


FIG. 17

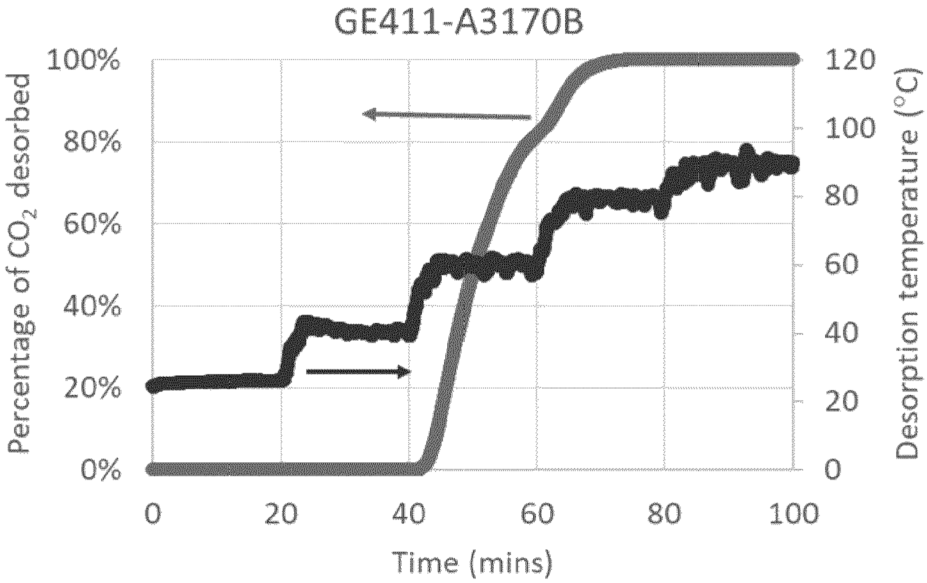
GE411-A3170B
100%
80%
60%
40%
20%
0%
Percentage of $CO_2$ desorbed
120
100
80
60
40
20
0
Desorption temperature (°C)
0
20
40
60
80
100
Time (mins)

FIG. 18

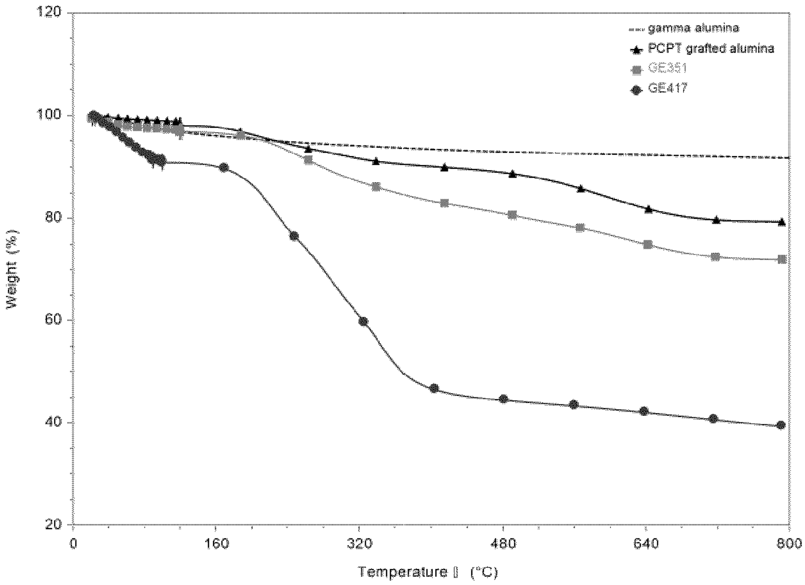
120
100
80
60
40
20
Weight (%)
0
160
320
480
640
800
Temperature (°C)
gamma alumina
PCPT grafted alumina
GE351
GE417

FIG. 19

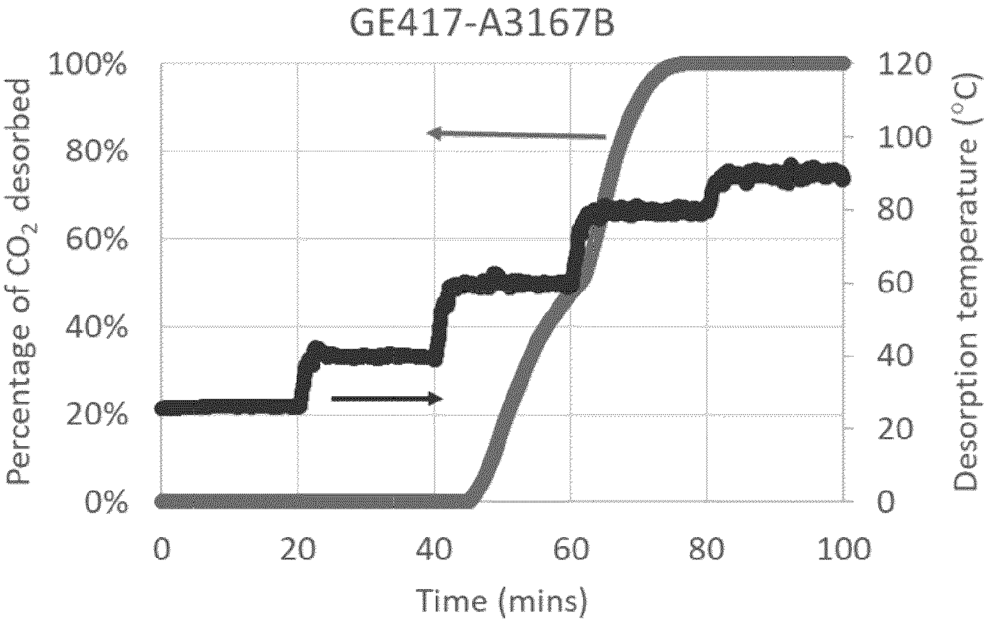
GE417-A3167B
100%
80%
60%
40%
20%
0%
Percentage of $CO_2$ desorbed
120
100
80
60
40
20
0
Desorption temperature (°C)
0
20
40
60
80
100
Time (mins)

FIG. 20

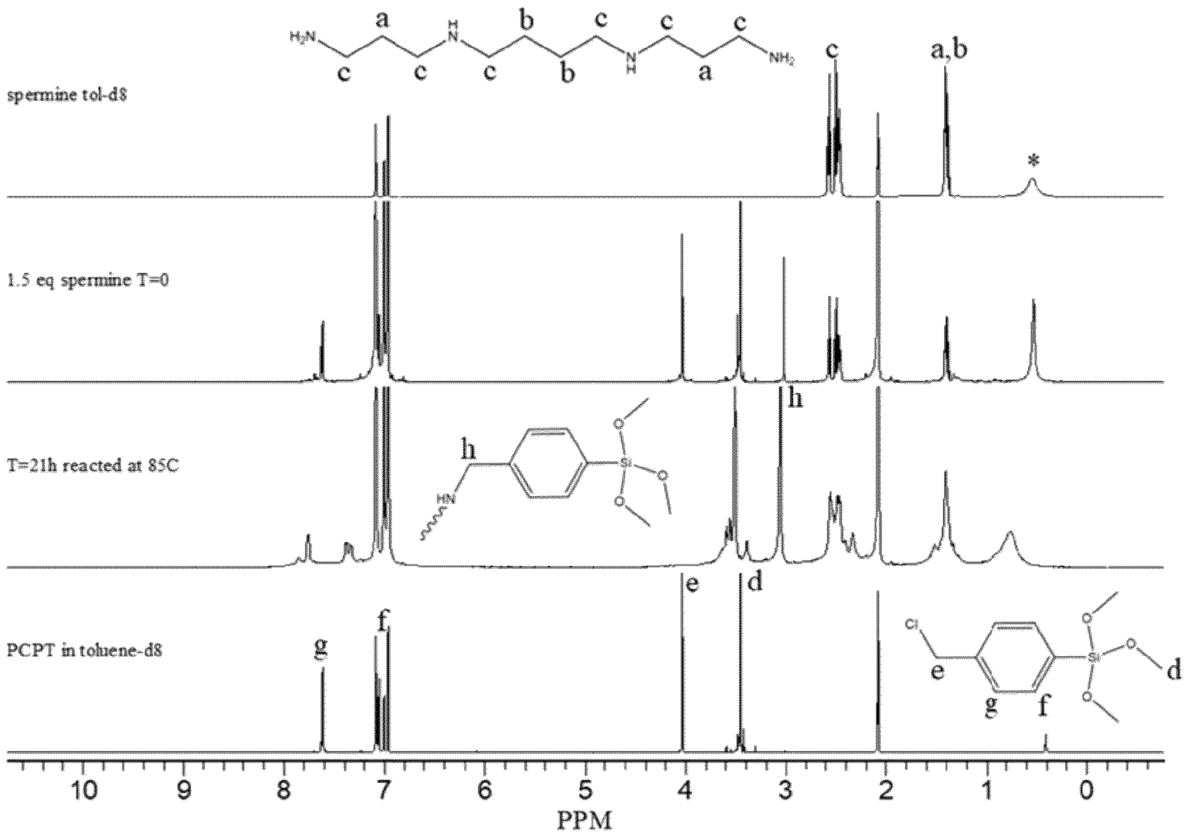
spermine tol-d8
1.5 eq spermine T=0
T=21h reacted at 85C
PCPT in toluene-d8
10 9 8 7 6 5 4 3 2 1 0
PPM

FIG. 21

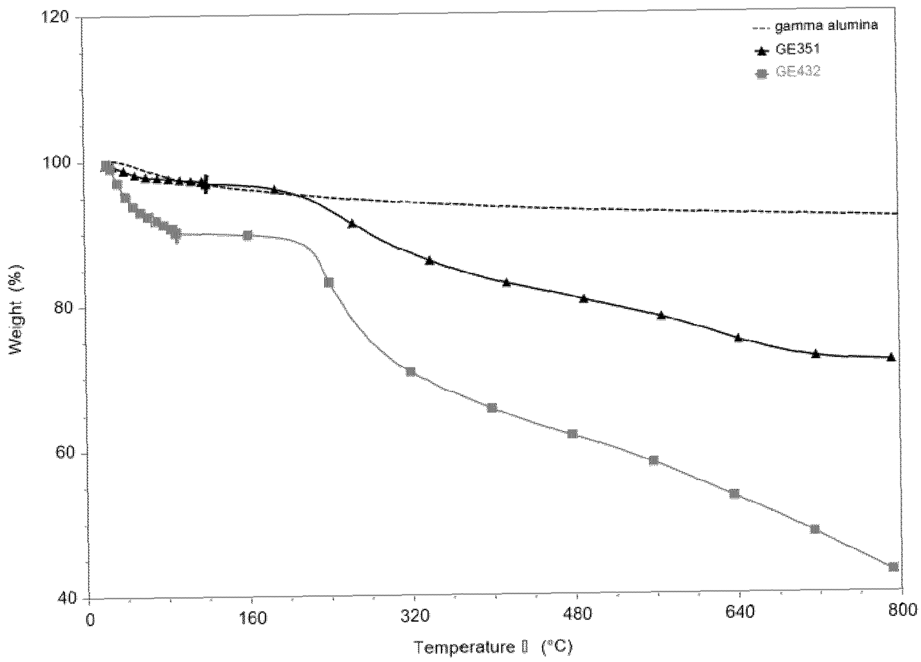
120
100
80
60
40
Weight (%)
0
160
320
480
640
800
Temperature (°C)
gamma alumina
GE351
GE432

FIG. 22

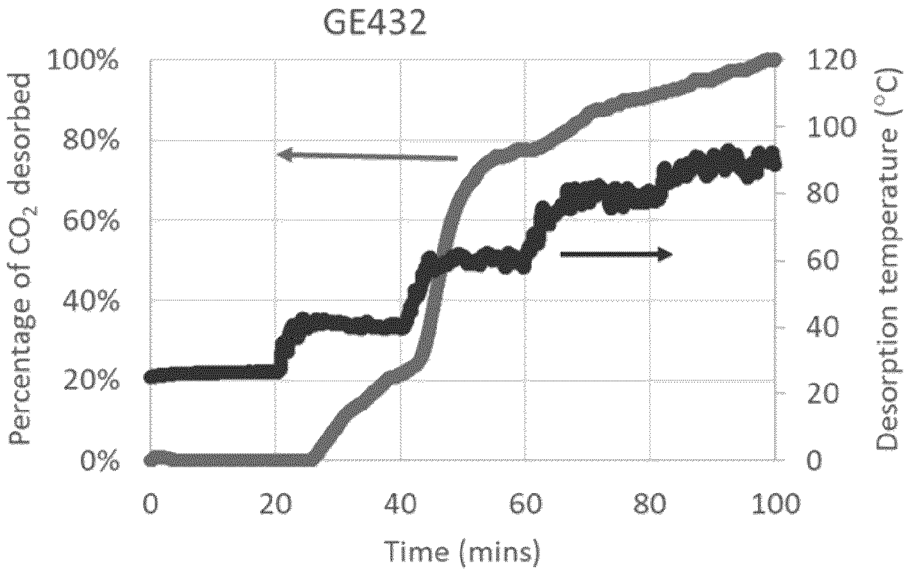
GE432
100%
80%
60%
40%
20%
0%
Percentage of $CO_2$ desorbed
120
100
80
60
40
20
0
Desorption temperature (°C)
0
20
40
60
80
100
Time (mins)

FIG. 23

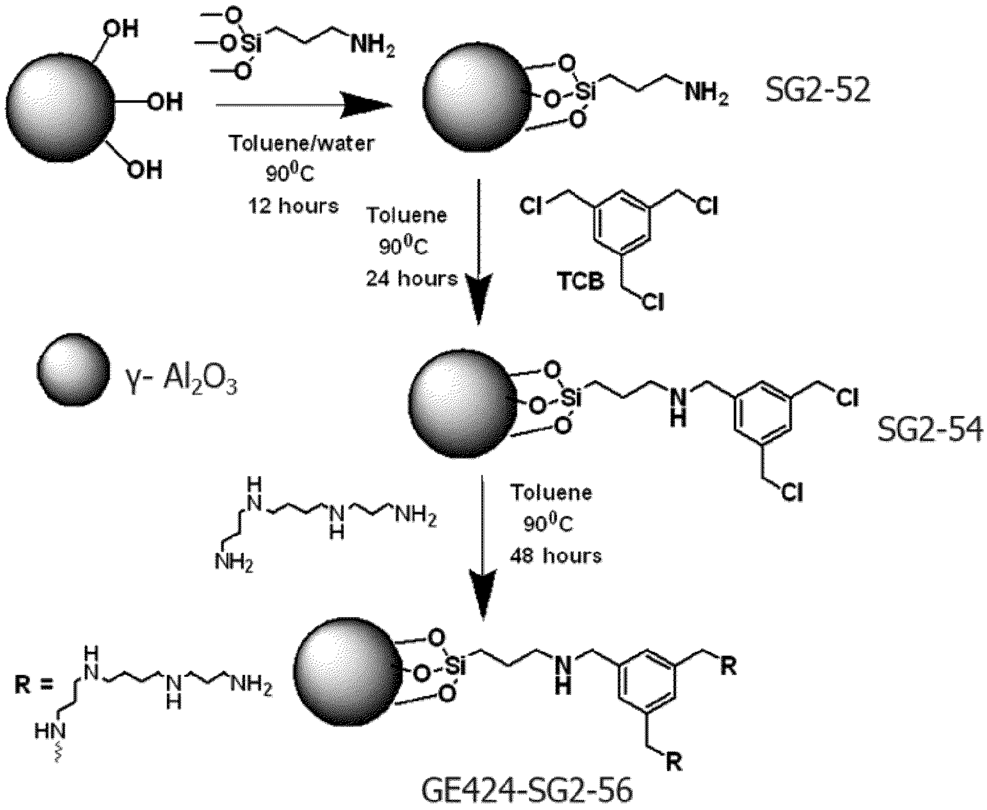
Toluene/water
90⁰C
12 hours
SG2-52
Toluene
90⁰C
24 hours
TCB
γ- $Al_2O_3$
SG2-54
Toluene
90⁰C
48 hours
R =
GE424-SG2-56

FIG. 24

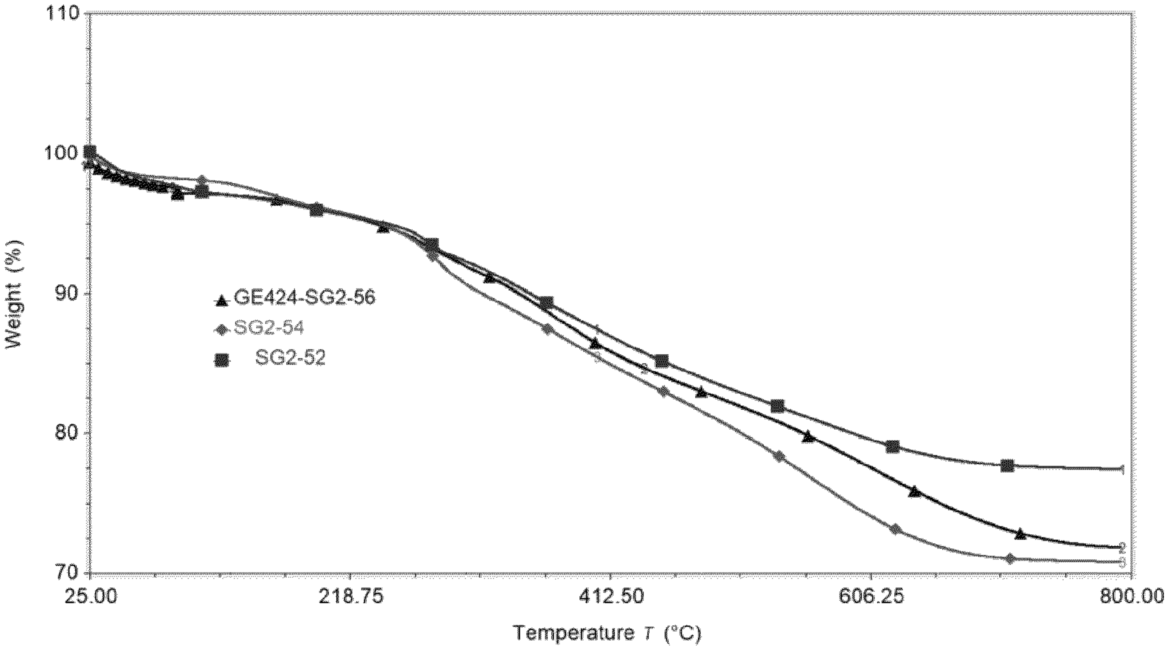
110
100
90
80
70
Weight (%)
GE424-SG2-56
SG2-54
SG2-52
25.00
218.75
412.50
606.25
800.00
Temperature T (°C)

FIG. 25

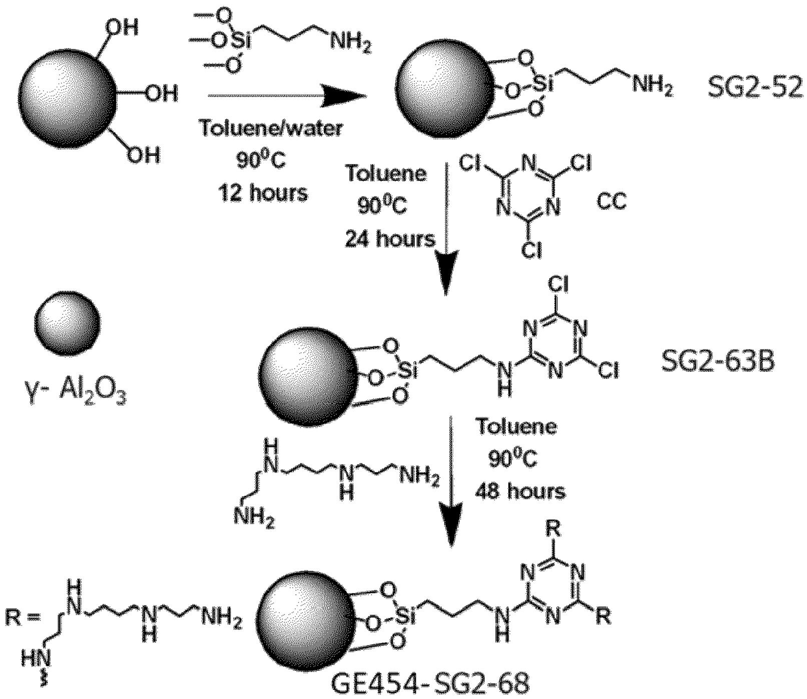
Toluene/water
90⁰C
12 hours
SG2-52
Toluene
90⁰C
24 hours
CC
γ- Al2O3
SG2-63B
Toluene
90⁰C
48 hours
R =
GE454-SG2-68

FIG. 26

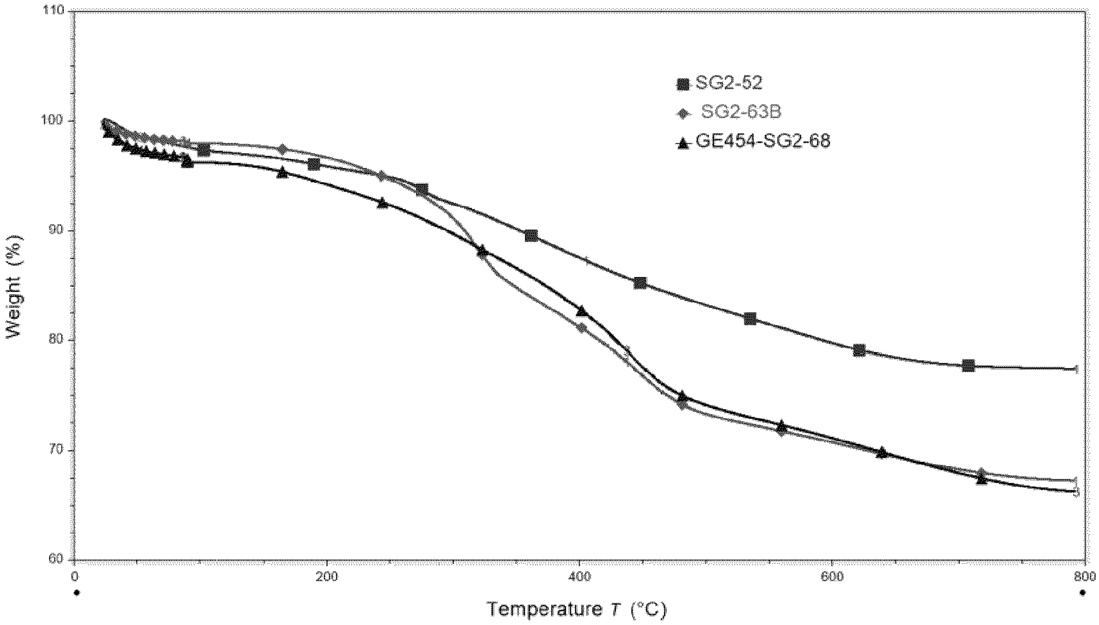
110
100
90
80
70
60
Weight (%)
0
200
400
600
800
Temperature T (°C)
SG2-52
SG2-63B
GE454-SG2-68

FIG. 27

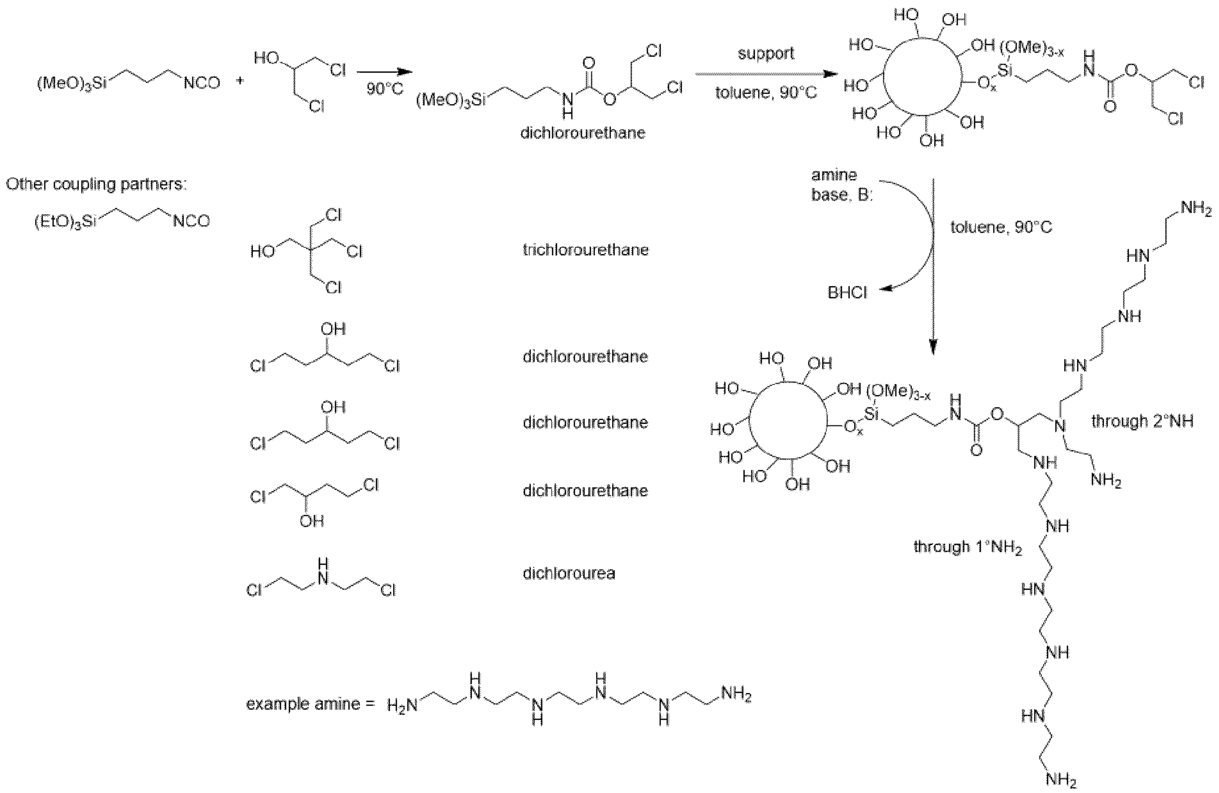
90°C
dichlorourethane
support
toluene, 90°C
Other coupling partners:
trichlorourethane
dichlorourethane
dichlorourethane
dichlorourethane
dichlorourea
amine
base, B:
toluene, 90°C
BHCl
through 2°NH
through 1°NH2
example amine =

FIG. 28

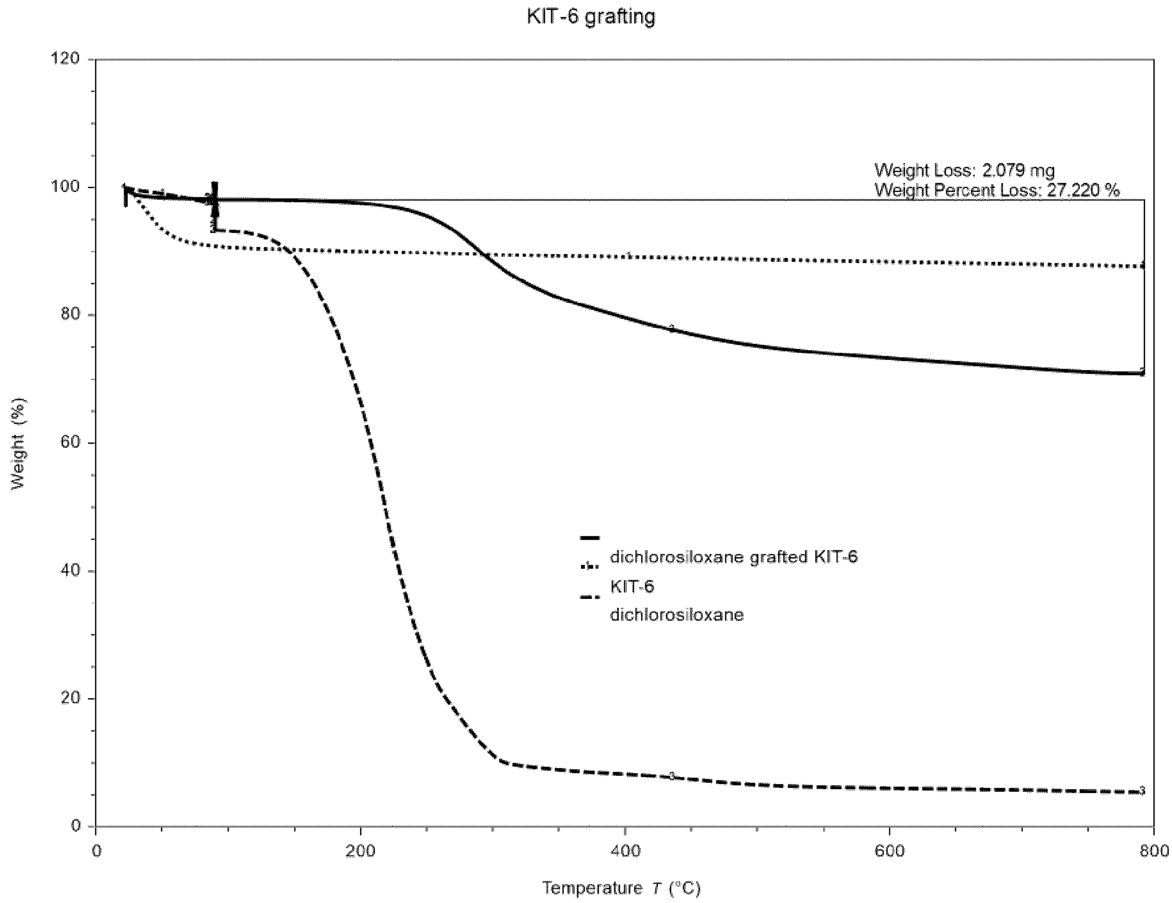
KIT-6 grafting
120
100
80
60
40
20
0
Weight (%)
0
200
400
600
800
Temperature T (°C)
Weight Loss: 2.079 mg
Weight Percent Loss: 27.220 %
dichlorosiloxane grafted KIT-6
KIT-6
dichlorosiloxane

FIG. 29

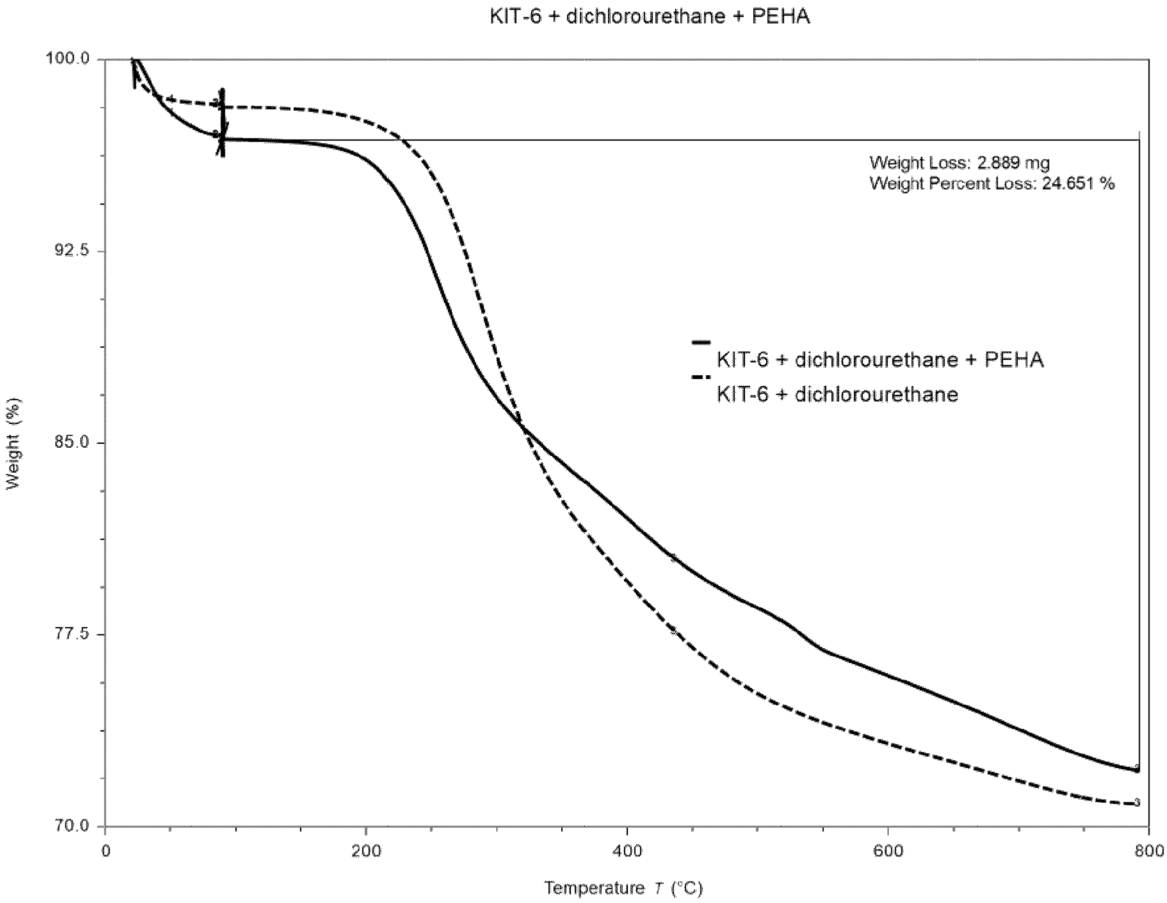
KIT-6 + dichlorourethane + PEHA
100.0
92.5
85.0
77.5
70.0
Weight (%)
0
200
400
600
800
Temperature T (°C)
Weight Loss: 2.889 mg
Weight Percent Loss: 24.651 %
KIT-6 + dichlorourethane + PEHA
KIT-6 + dichlorourethane

FIG. 30

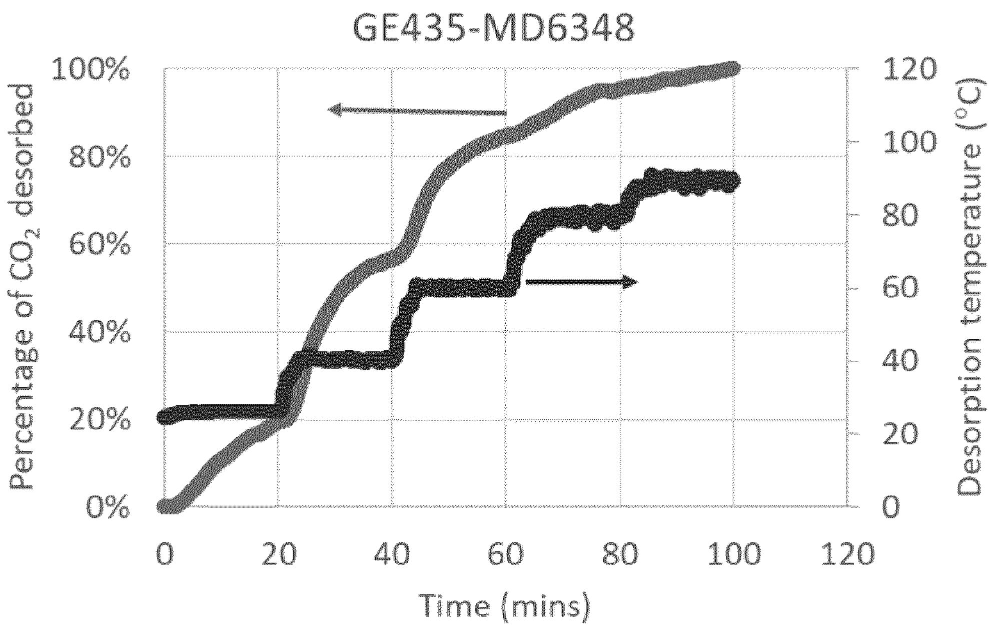
GE435-MD6348
Percentage of $CO_2$ desorbed
Desorption temperature (°C)
Time (mins)
0%
20%
40%
60%
80%
100%
0
20
40
60
80
100
120

FIG. 31

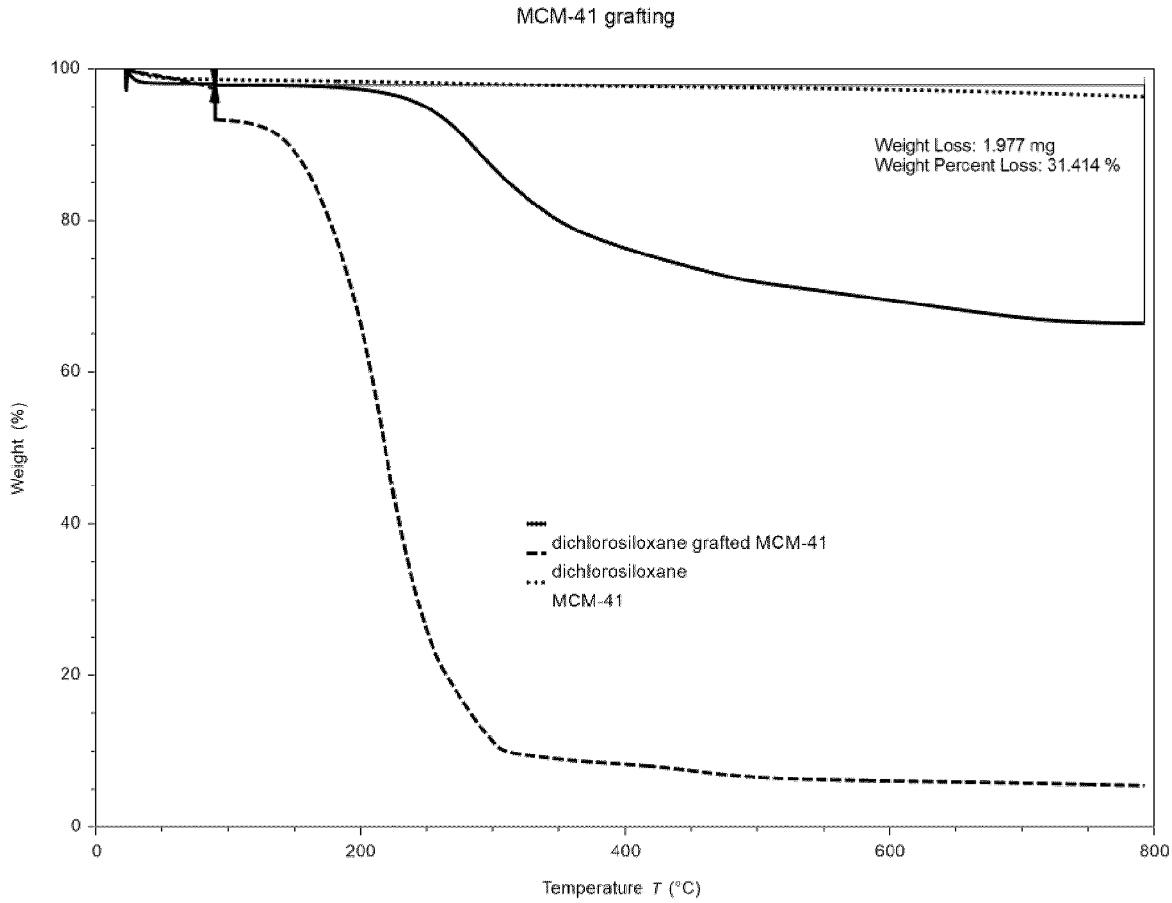
MCM-41 grafting
Weight Loss: 1.977 mg
Weight Percent Loss: 31.414 %
dichlorosiloxane grafted MCM-41
dichlorosiloxane
MCM-41
Weight (%)
Temperature T (°C)
0
20
40
60
80
100
0
200
400
600
800

FIG. 32

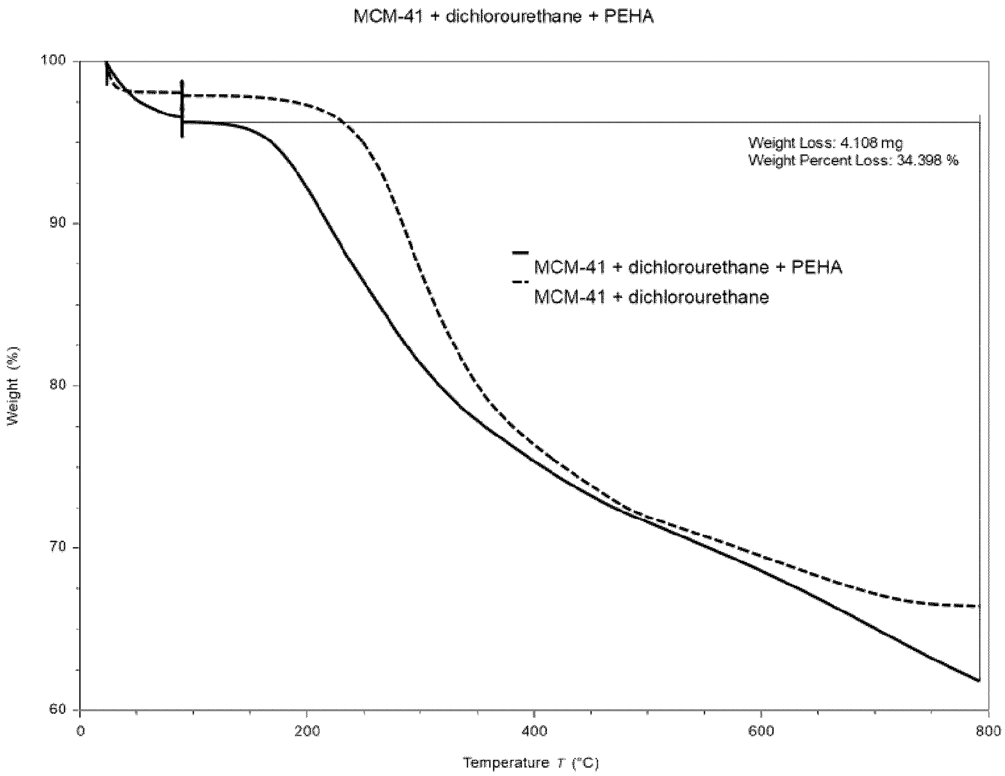
MCM-41 + dichlorourethane + PEHA
100
90
80
70
60
Weight (%)
0
200
400
600
800
Temperature T (°C)
Weight Loss: 4.108 mg
Weight Percent Loss: 34.398 %
MCM-41 + dichlorourethane + PEHA
MCM-41 + dichlorourethane

FIG. 33

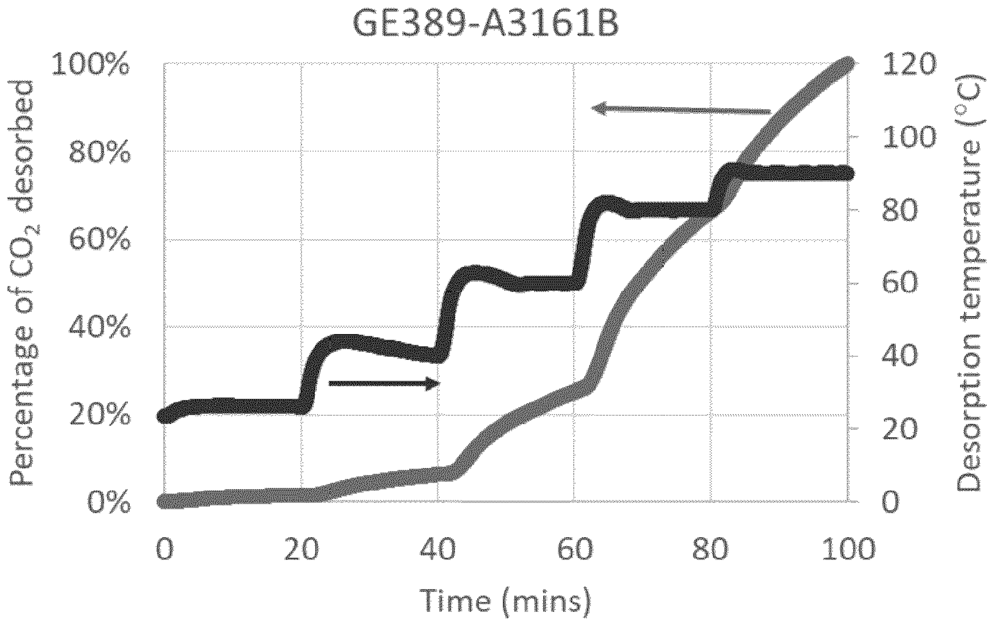
GE389-A3161B
100%
80%
60%
40%
20%
0%
Percentage of $CO_2$ desorbed
120
100
80
60
40
20
0
Desorption temperature (°C)
0
20
40
60
80
100
Time (mins)

FIG. 34

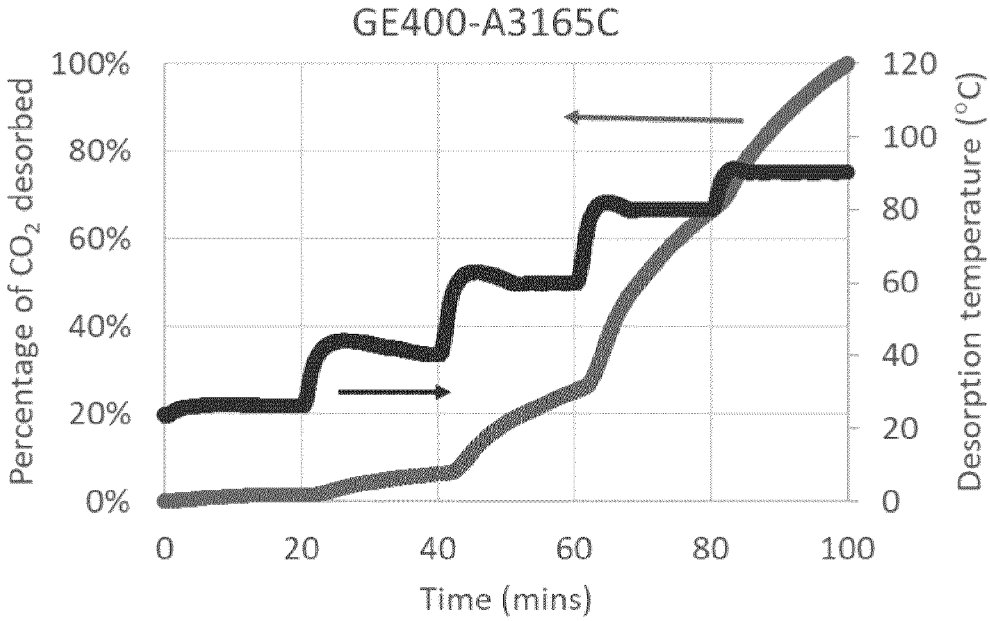
GE400-A3165C
100%
80%
60%
40%
20%
0%
Percentage of $CO_2$ desorbed
120
100
80
60
40
20
0
Desorption temperature (°C)
0
20
40
60
80
100
Time (mins)

FIG. 35

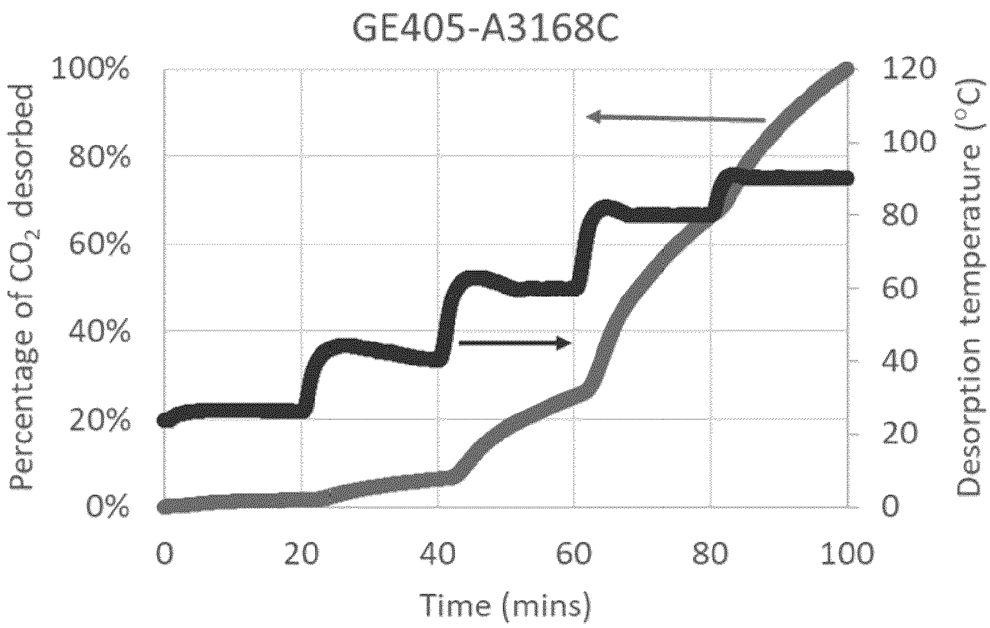
GE405-A3168C
100%
80%
60%
40%
20%
0%
Percentage of $CO_2$ desorbed
120
100
80
60
40
20
0
Desorption temperature (°C)
0
20
40
60
80
100
Time (mins)

FIG. 36

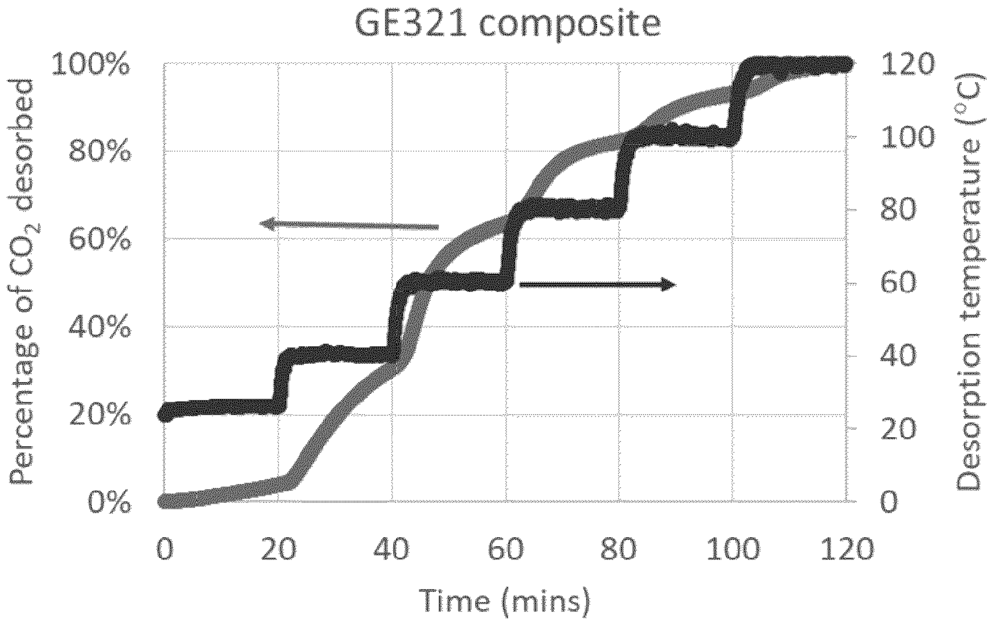
GE321 composite
Percentage of $CO_2$ desorbed
100%
80%
60%
40%
20%
0%
Desorption temperature (°C)
120
100
80
60
40
20
0
0
20
40
60
80
100
120
Time (mins)

FIG. 37

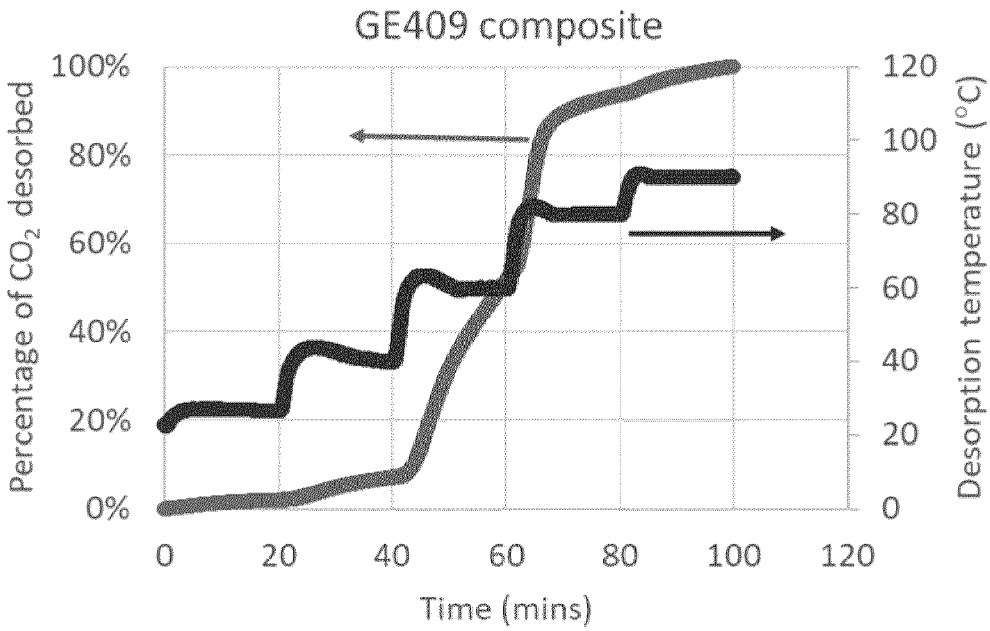
GE409 composite
Percentage of $CO_2$ desorbed
100%
80%
60%
40%
20%
0%
0
20
40
60
80
100
120
Time (mins)
Desorption temperature (°C)
120
100
80
60
40
20
0

FIG. 38

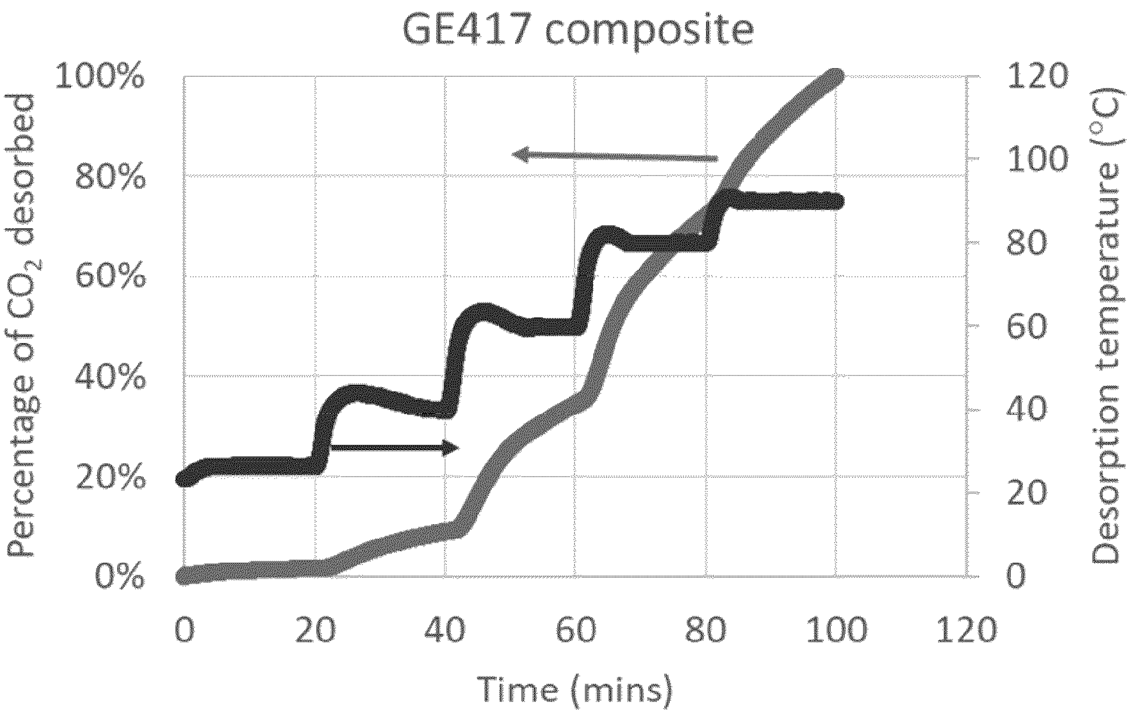
GE417 composite
Percentage of $CO_2$ desorbed
100%
80%
60%
40%
20%
0%
Desorption temperature (°C)
120
100
80
60
40
20
0
0
20
40
60
80
100
120
Time (mins)

FIG. 39

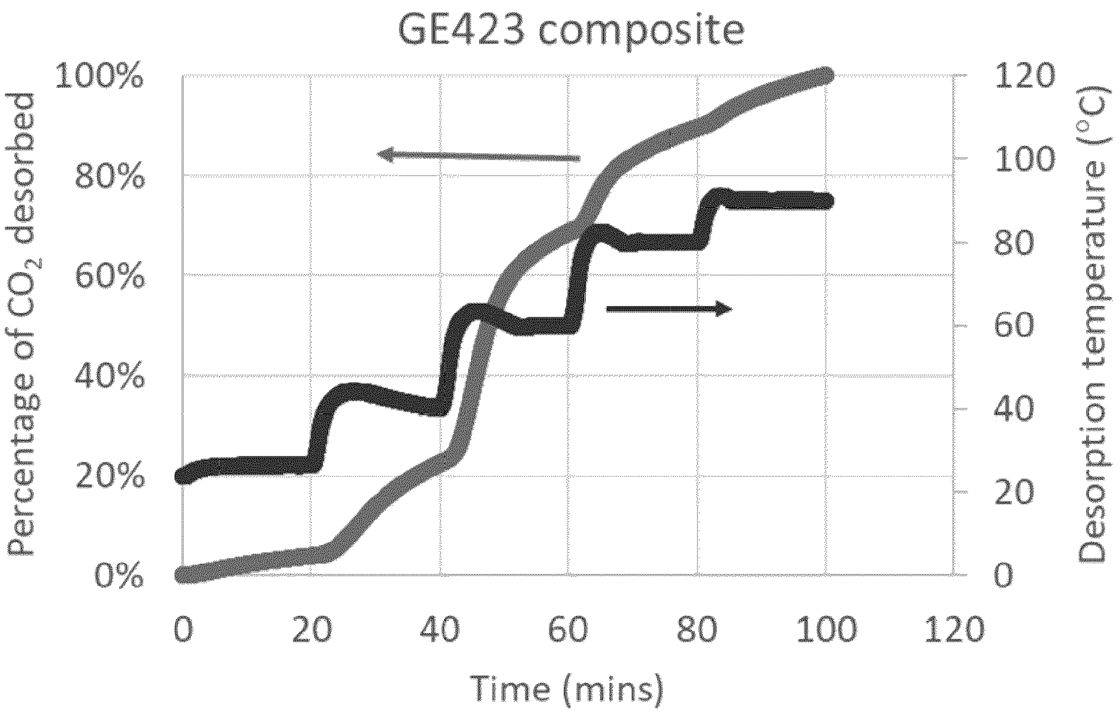
GE423 composite
100%
80%
60%
40%
20%
0%
Percentage of $CO_2$ desorbed
120
100
80
60
40
20
0
Desorption temperature (°C)
0
20
40
60
80
100
120
Time (mins)

FIG. 40

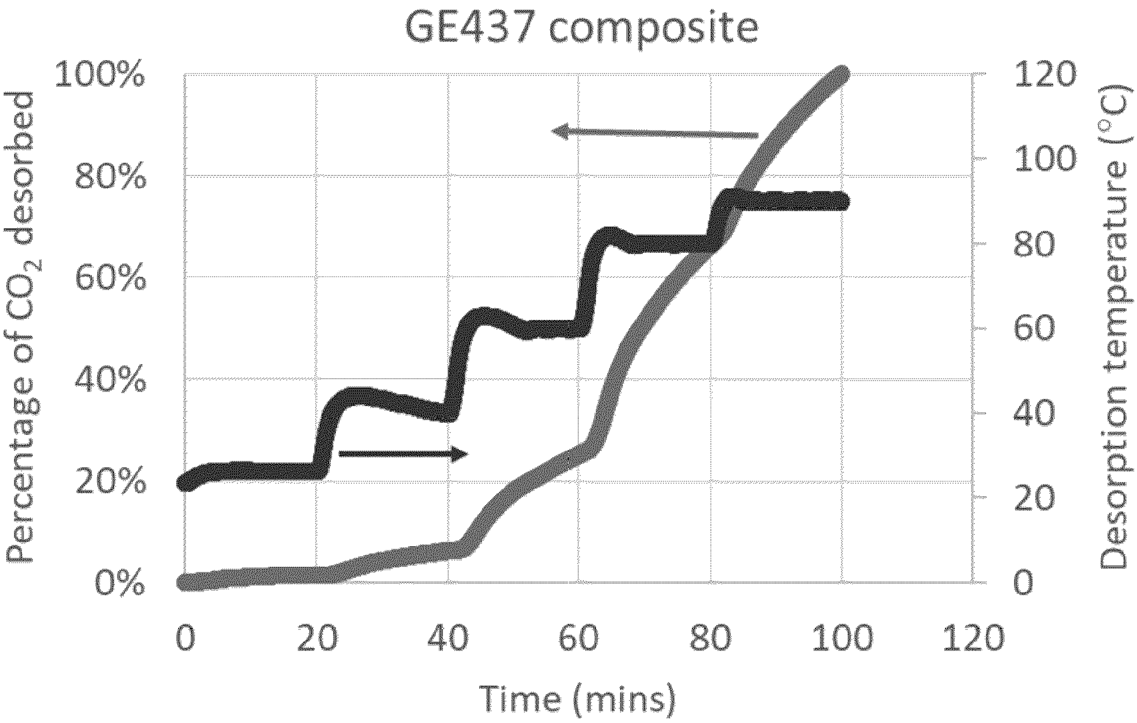
GE437 composite
Percentage of $CO_2$ desorbed
100%
80%
60%
40%
20%
0%
120
100
80
60
40
20
0
Desorption temperature (°C)
0
20
40
60
80
100
120
Time (mins)

FIG. 41

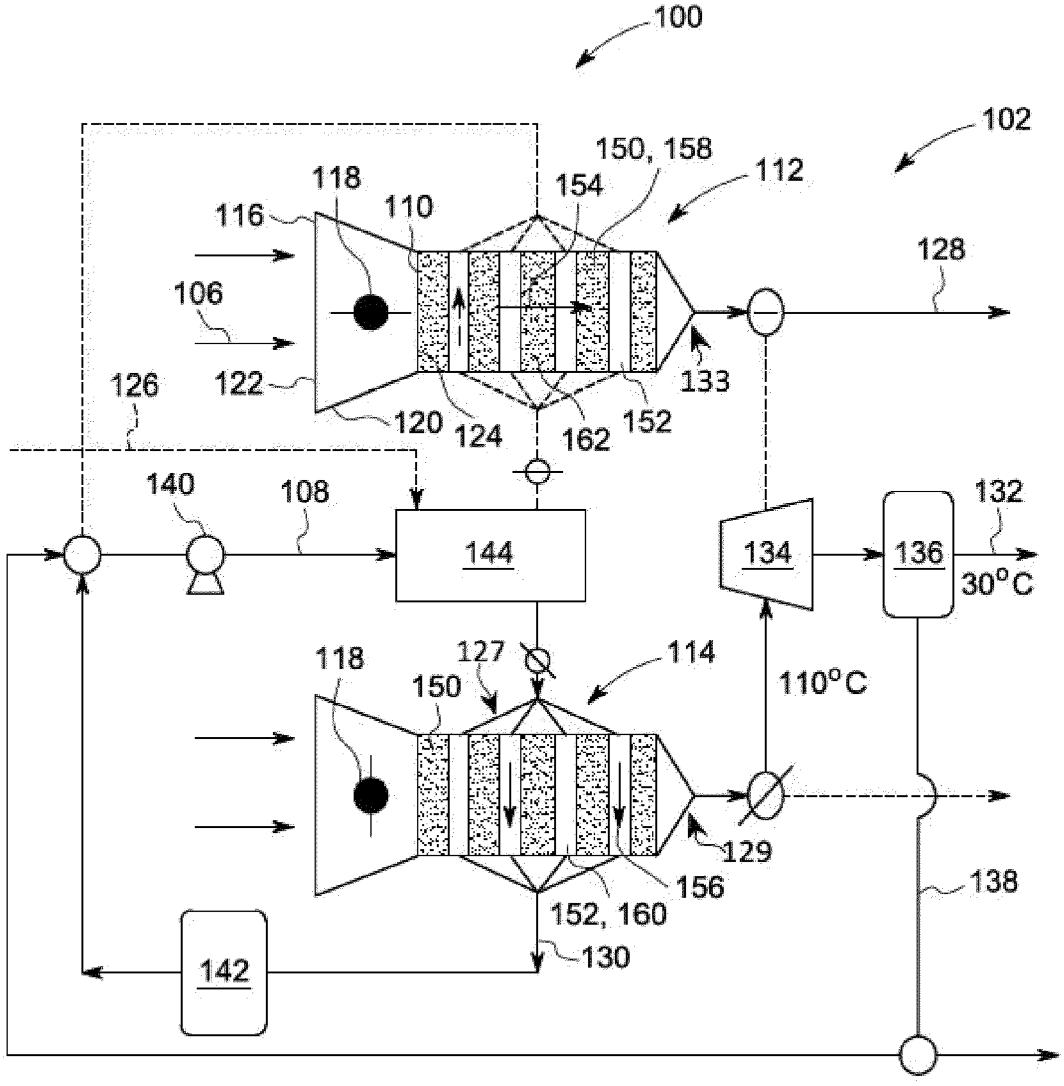
100
102
150, 158
112
154
118
110
116
106
128
133
126
122
120
124
162
152
140
108
144
134
136
132
30°C
118
127
114
150
110°C
129
156
152, 160
138
142
130

FIG. 42

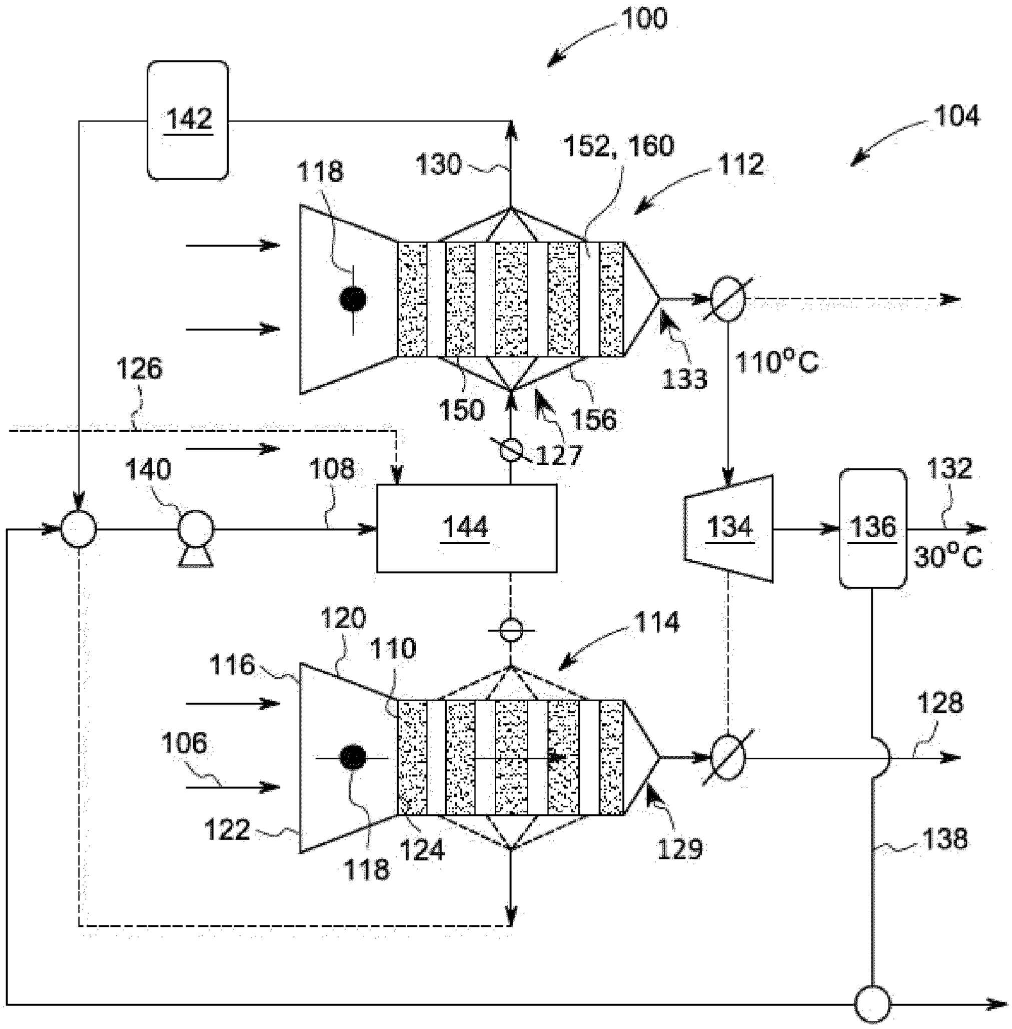
100
104
142
130
152, 160
112
118
133
110°C
126
150
156
127
140
108
144
134
136
132
30°C
120
110
114
116
106
122
118
124
129
128
138

FIG. 43

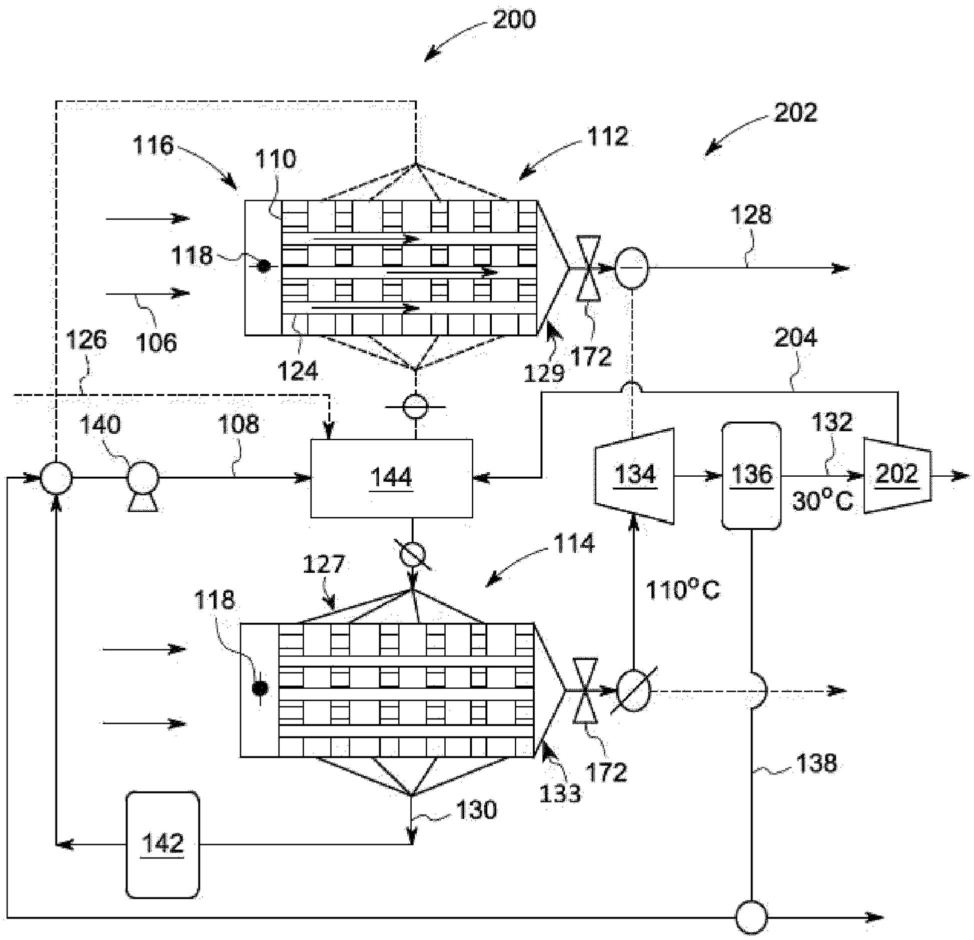
200
202
116
110
112
128
118
126
106
124
129
172
204
140
108
144
134
136
132
202
30°C
114
127
110°C
118
172
133
138
130
142

FIG. 44

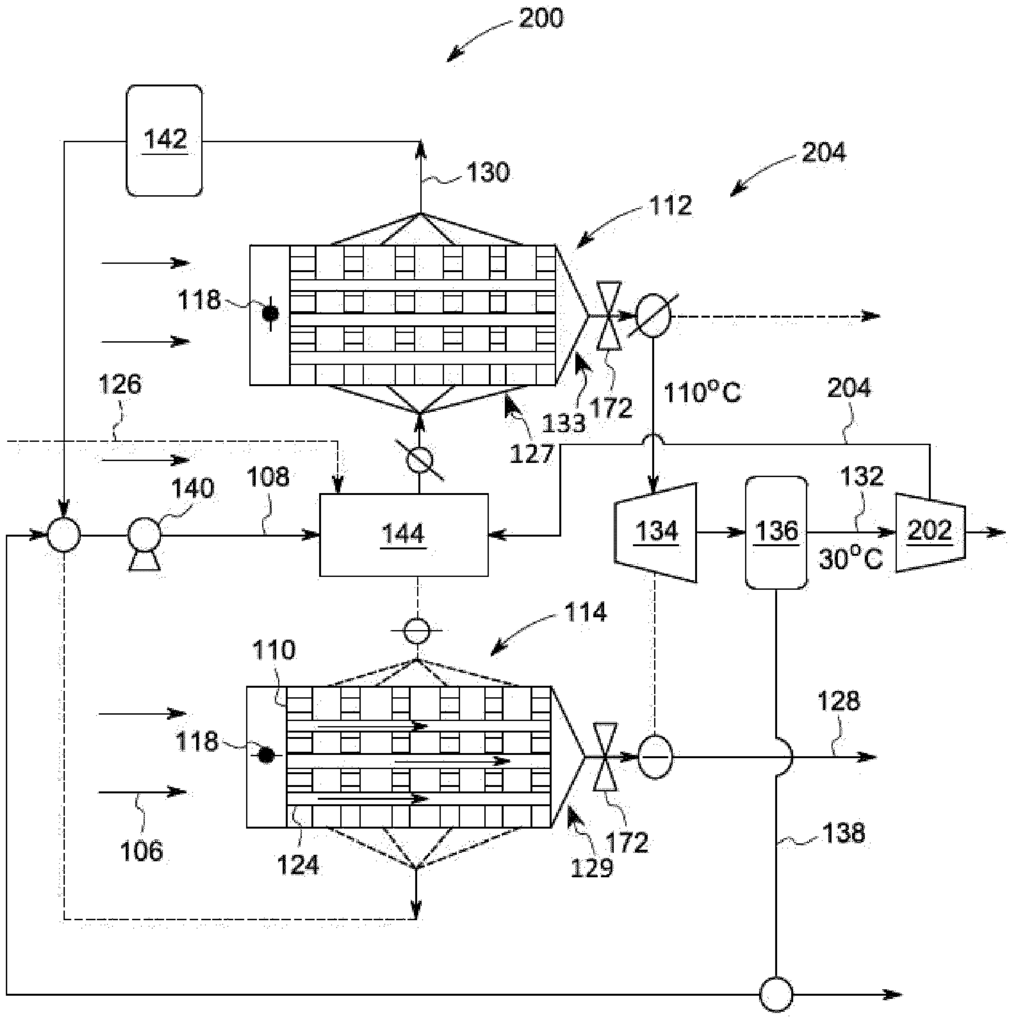
200
204
142
130
112
118
126
133
172
110°C
204
127
140
108
144
132
134
136
202
30°C
114
110
128
118
106
124
172
129
138

FIG. 45

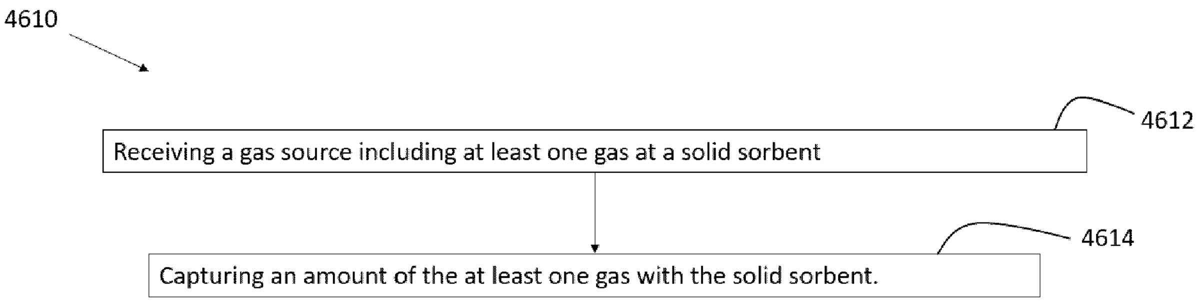
4610
4612
Receiving a gas source including at least one gas at a solid sorbent
4614
Capturing an amount of the at least one gas with the solid sorbent.

FIG. 46

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63656909
- US 63656912
- US 63656913
- US 63656914
- US 63656916
- GE 320184 A
- GE 321184 B
- US 2023082729 W
- US 606176
- WO 2024123909 A